# EUROPÄISCHE PATENTSCHRIFT

(11) **EP 3 559 817 B1**
(45) Veröffentlichungstag und Bekanntmachung des Hinweises auf die Patenterteilung: **27.04.2022**
(21) Anmeldenummer: 17837876.6
(22) Anmeldetag: 19.12.2017
(51) Int. Cl.: G06F 13/42, F21S 4/24

(54) **VERKETTETER ZWEIDRAHTDATENBUS BESTEHEND AUS ZWEI EINDRAHTDATENBUSSEN MIT JEWEILS MEHREREN DIFFERENTIELLEN PEGELN ZUR ÜBERTRAGUNG VON BELEUCHTUNGSDATEN AUF BASIS DES JTAG-PROTOKOLLS**
CONCATENATED TWO-WIRE DATA BUS CONSISTING OF TWO SINGLE-WIRE DATA BUSES, EACH WITH A PLURALITY OF DIFFERENTIAL LEVELS FOR TRANSMITTING ILLUMINATION DATA ON THE BASIS OF THE JTAG PROTOCOL
BUS DE DONNÉES BIFILAIRE COMPOSÉ CONSTITUÉ DE DEUX BUS DE DONNÉES MONOFILAIRE POURVUS CHACUN DE PLUSIEURS NIVEAUX DIFFÉRENTIELS POUR TRANSMETTRE DES DONNÉES D'ÉCLAIRAGE SUR LA BASE DU PROTOCOLE JTAG

(30) Priorität: 21.12.2016 DE 102016125290; 16.01.2017 DE 102017100718
(43) Veröffentlichungstag der Anmeldung: 30.10.2019
(60) Teilanmeldung: 20161883.2
(73) Patentinhaber: Elmos Semiconductor SE, 44227 Dortmund (DE)
(72) Erfinder: SCHMITZ, Christian, 44575 Castrop-Rauxel (DE)
(74) Vertreter: dompatent von Kreisler Selting Werner - Partnerschaft von Patent- und Rechtsanwälten mbB
(86) Internationale Anmeldenummer: PCT/EP2017/083523
(87) Internationale Veröffentlichungsnummer: WO 2018/114937

(56) Entgegenhaltungen:
- EP-A2- 2 323 463
- EP-A2- 2 400 608
- EP-A2- 2 571 200
- WO-A1-2013/095133
- DE-B3-102015 004 434
- DE-U1-202008 012 029
- DE-U1-202013 103 146
- US-A1- 2003 009 715
- US-A1- 2009 021 955
- US-A1- 2009 235 136
- US-A1- 2011 309 746
- US-A1- 2012 188 738
- US-A1- 2014 101 351
- US-A1- 2016 047 860
- US-A1- 2016 138 768

## Beschreibung

Die Erfindung betrifft eine modifizierte JTAG-Schnittstelle eines Busknotens in einem differentiellen Zweidrahtdatenbus sowie ein Zweidrahtdatenbussystem für eine Beleuchtungsvorrichtung mit einem differentiellen Zweidrahtdatenbus und mit mit modifizierten JTAG-Schnittstellen versehenen Busknoten zur Steuerung jeweils mindestens einer Ansteuervorrichtung mindestens eines Leuchtmittels durch den Busknoten. Ferner betrifft die Erfindung ein Verfahren zur Ansteuerung eines Leuchtmittels mittels einer elektrischen Vorrichtung eines von mehreren Busknoten eines differentiellen Zweidrahtdatenbussystems mit einem differentiellen Zweidrahtdatenbus. Die Erfindung betrifft ein Verfahren zur Initialisierung eines differentiellen Zweidrahtdatenbusses. Außerdem betrifft die Erfindung eine Vorrichtung zur Übermittelung von Daten nach Initialisierung eines differentiellen Zweidrahtdatenbusses. Schließlich betrifft die Erfindung auch ein Zweidrahtdatenbussystem mit einem differentiellen Zweidrahtdatenbus sowie ein Verfahren zur Datenübertragung in einem derartigen Zweidrahtdatenbussystem mit einem differentiellen Zweidrahtdatenbus sowie eine Vorrichtung zum Anschließen als Busknoten an einen differentiellen Zweidrahtdatenbus.

### Einleitung

In der Automobilindustrie sollen in Zukunft Leuchtbänder aus Leuchtdioden (LEDs) mit vorzugsweise mehreren Farben eingesetzt werden können. Diese LEDs sollen mittels den bekannten Puls-Modulations-Verfahren wie z.B. Puls-Weiten-Modulation (PWM), Puls-Code-Modulation (PCM), Puls-Count-Modulation (PCM), Phasen-Offset-Modulation (POM), Puls-Dichte-Modulation (PDM), Puls-Frequenz-Modulation (PFM) etc. angesteuert und mit Energie versorgt werden. Die entsprechenden Modulationsarten kann der Fachmann der einschlägigen Literatur entnehmen. Wenn im Folgenden von PWM die Rede ist, sind damit im Rahmen der Erfindung sämtliche Pulsmodulationsarten gemeint, die derzeit im Stand der Technik bekannt sind. Je nach dem mittleren Spannungs- oder Strompegel, der an die jeweilige LED gelegt wird, kann die LED in der Helligkeit und gegebenenfalls in gewissem Umfang auch in der Farbtemperatur eingestellt werden. Somit bestimmen beispielsweise im Falle einer PWM-Modulation Duty-Cycle und Pegel Helligkeitserscheinung und wahrgenommene Farbtemperatur.

Die LEDs des Leuchtbandes sind üblicherweise über die Länge des Leuchtbandes gleichmäßig verteilt.

Im Stand der Technik ist es üblich, mehrere integrierte Schaltungen, die sich als Busknoten mehr oder weniger ebenfalls gleichverteilt auf dem Leuchtband befinden, zur Ansteuerung der LEDs zu benutzen. Typischerweise sind jedem Busknoten dabei mehrere Leuchtmittel, vorzugsweise LEDs, zugeordnet, die von einem Busknoten dann jeweils gesteuert werden.

Diese Ansteuerung erfolgt für die einzelne integrierte Schaltung für eine einzelne LED oder für mehrere auf dem Leuchtband typischerweise hintereinander angeordnete LEDs, also für einen Leuchtbandabschnitt, der dieser integrierten Schaltung zugeordnet ist.

Im Stand der Technik ist es nun üblich, diese integrierten Schaltungen jeweils mit einem Schieberegister mit einem Eingang und einem Ausgang zu versehen. Der Eingang eines nachfolgenden Schieberegisters einer auf dem Leuchtband nachfolgenden integrierten Schaltung ist dabei mit dem Ausgang des Schieberegisters der in dem Leuchtband vorausgehenden integrierten Schaltung verbunden. Die erste integrierte Schaltung des Leuchtbandes ist statt mit einer vorausgehenden integrierten Schaltung mit einem Bus-Master (BM) verbunden, der die Daten und den Schiebetakt erzeugt. Typischerweise handelt es sich um einen Micro-Controller.

Der Bus-Master (BM) versorgt über eine Taktleitung (TCK) alle Schieberegistersegmente aller integrierten Schaltungen entlang einer derartig zusammengesetzten Schieberegisterkette mit dem notwendigen Schiebetakt und einem Übernahmesignal, das über eine Testdatenleitung (TDI) im Zeitmultiplex oder eine Test-Mode-Signalleitung (TMS) im Raummultiplex übermittelt wird, mit dem die aktuellen Werte in den Segmenten der Schieberegisterkette in Schatten-Register der integrierten Schaltungen geladen werden.

Um die benötigten Informationen zu übertragen, erzeugt der Bus-Master (BM) also einen seriellen Datenstrom, der die Informationen über Helligkeit und/oder Farbtemperatur enthält, schiebt diese in der bit-richtigen Reihenfolge in die Schieberegisterkette und signalisiert im korrekten Takt den integrierten Schaltkreisen die Übernahme, woraufhin diese ihre Schattenregister entsprechend laden und die PWM-Modulation der LED-Treiber bezüglich Amplitude und Duty-Cycle bzw. Füllfaktor entsprechend den somit geladenen Helligkeits- und Farbtemperaturwerten einstellen.

Hierbei treten bei der Verwendung im Automobil mehrere Probleme auf, die zu lösen sind.

Zum Ersten erfordert die aus dem Stand der Technik bekannte Vorgehensweise und die aus dem Stand der Technik bekannte Anordnung zur Steuerung eines derartigen Leuchtbandes eine Versorgungsspannungsleitung, eine Masseleitung, eine Taktleitung, eine Signalisierungsleitung und eine Datenleitung, also insgesamt fünf Leitungen. Als Masseleitung kann gegebenenfalls die Karosserie des Autos genutzt werden, wenn diese nicht aus nicht leitendem Kunststoff oder einem anderen Isolator ist. Es verbleibt dann immer noch die Notwendigkeit von vier Leitungen. Dies führt zu Kosten und einer Gewichtszunahme.

Zum Zweiten ist kein Rückkanal vorgesehen, um beispielsweise Fehlerfälle erkennen zu können und/oder die Temperatur am Ort der LED messen zu können und/oder einen Selbsttest durchführen zu können etc.

Zum Dritten reicht die erzielbare Geschwindigkeit für viele Anwendungen nicht aus. Bei einer weiteren Erhöhung der Datenrate kann es zu Abstrahlungen kommen.

Es ist also eine Lösung erforderlich, die die Programmierung und das Auslesen der integrierten Schaltungen über eine einzige Datenleitung ermöglicht.

Aus dem Stand der Technik ist das JTAG-Protokoll bekannt. Das JTAG-Protokoll hat sich zu einer der führenden Hilfsmittel bei der Programmierung, dem Test, dem Debugging und der Emulation von integrierten Schaltkreisen entwickelt. In einem Verfahren, das als Boundary-Scan-Verfahren bezeichnet wird, kann ein Host-Prozessor den Zustand einer integrierten Schaltung kontrollieren. Insbesondere ist der Host-Prozessor als Bus-Master über eine spezielle Schnittstelle, die JTAG-Schnittstelle nach IEEE 1149 Standard, in der Lage, die integrierte Schaltung als Busknoten geeignet zu programmieren und gegebenenfalls zu initialisieren. Des Weiteren ist der Host-Prozessor als Bus-Master in der Lage, den Zustand der integrierten Schaltung nach einer vorbestimmten Anzahl von Systemtaktperioden der JTAG-Schnittstelle nach IEEE 1149 Standard oder bei Erkennung eines vorbestimmten Ereignisses auszulesen oder während des Betriebs der integrierten Schaltung, also des Busknotens, abzuändern. Dies umfasst auch das Anhalten einer Programmausführung durch die integrierte Schaltung und das Anhalten des zeitlichen Ablaufs eines endlichen Automaten der integrierten Schaltung oder den zwangsweisen Wechsel in andere Zustände oder das Ändern von Speicherinhalten. Das JTAG-Protokoll ist aber eine Punkt-zu-Punkt-Verbindung und damit für die Steuerung automobiler Leuchtbänder ungeeignet. Aus EP-B-0 503 117 ist zwar eine Verkettung von JTAG-Testschnittstellen seit langem bekannt. Die EP-B-0 503 117 offenbart aber die Verkettung von Vierdraht-JTAG-Schnittstellen. Damit erfüllt die Technik der EP-B-0 503 117 die Anforderung an einen Zweidrahtdatenbus für die Steuerung automobile LED basierender Lichtbänder nicht.

Der im weiteren Verlauf beschriebene erfindungsgemäße Vorschlag betrifft somit ein Verfahren und eine Vorrichtung zur verketteten Steuerung und/oder zur Programmierung mehrerer integrierter Schaltungen, wie z.B. Mikrosysteme wie mikroelektromechanische Systeme (MEMS) und integrierte mikroelektrooptische Systeme (MEOS) mittels eines Zweidrahtdatenbusses, wobei die zu steuernden integrierten Schaltungen, Mikrosysteme inkl. mikroelektromechanischen Systemen (MEMS) und integrierten mikroelektrooptischen Systeme (MEOS) jeweils die Rolle eines Busknotens einnehmen. Bei solchen Systemen ist es bereits heute üblich, diese für den Fertigungstest über einen JTAG-Test-Bus nach IEEE 1149 Standard in reiner Punkt-zu-Punkt-Konfiguration anzusteuern. Diese standardgemäße JTAG-Schnittstelle verfügt über einen Testdaten-Port mit typischerweise vier Testanschlüssen, nämlich über
1. mindestens einen seriellen Dateneingang (Testdateneingang) TDI,
2. mindestens einen seriellen Datenausgang (Testausgang) TDo,
3. mindestens einen Mode-Eingang (Testmode-Eingang) TMS,
4. mindestens einen Takteingang (Testtakteingang) TCK,
5. einen optionalen Rücksetzeingang (Testrücksetzeingang) TRST.

Da das Verfahren seit mehreren Jahrzehnten bekannt ist, wird an dieser Stelle auf die entsprechende Fachliteratur und auf andere Publikationen verwiesen (z.B. den IEEE 1149 Standard).

Hier sei nur so viel kurz beschrieben: Das JTAG-Protokoll nach dem IEEE 1149-Standard umfasst im Basisstandard fünf Signalgruppen, die zwischen der Emulationseinheit, die den Host-Prozessor enthält und damit als Bus-Master fungiert, und der integrierten Schaltung als Slave, im Folgenden jeweils mit Busknoten bezeichnet, ausgetauscht werden. Das TCK-Signal stellt den Systemtakt dar und synchronisiert zeitlich die interne Zustandsmaschine des Test-Controllers (TAPC) der JTAG-Testschnittstelle nach IEEE 1149-Standard der integrierten Schaltung. Das TMS-Signal steuert den Zustand dieses Test-Controllers (TAPC) der JTAG-Schnittstelle des Busknotens. Je nach Zustand des Test-Controllers (TAPC) führt die JTAG-Testschnittstelle des Busknotens unterschiedliche Operationen durch. Der TDI-Eingang stellt einen seriellen Dateneingang dar. Der TDo-Ausgang stellt einen seriellen Datenausgang dar. Die beiden Eingänge TMS und TDI werden typischerweise, aber nicht notwendigerweise, mit der steigenden TCK-Flanke abgetastet. Der Datenausgang (TDo) wechselt sein Datum typischerweise mit der fallenden Flanke des TCK-Signals. Die TCK-, TMS- und TDI-Einzelsignale bilden im Stand der Technik die Testdateneingangssignale. Im Zusammenhang mit der Erfindung bilden sie die Dateneingangssignale. Das TDo-Signal stellt das Ausgangssignal dar. Mit der steigenden Systemtaktflanke (TCK-Flanke) und bei geeigneter Einstellung eines Test-Controller (TAPC) internen Instruktionsregisters (IR) eines Test-Controllers (TAPC) werden die Daten seriell über den seriellen Dateneingang TDI in verschiedene Schieberegisterketten, sogenannte Scan-Pfade, in die integrierte Schaltung als Busknoten hinein verschoben. Gleichzeitig wird der ursprüngliche Inhalt der betreffenden Scan-Kette am seriellen Datenausgang (TDo) ausgegeben. Hierbei können Zustandsvektoren endlicher Automaten innerhalb des Busknotens Teil der Scan-Kette sein. Somit ist eine Änderung der Inhalte und Zustände bzw. die Kontrolle dieser Inhalte und Zustände der Speicherzellen der Scan-Ketten über diese Schnittstelle im Stand der Technik leicht möglich. Hier sei nochmals auf die Fachliteratur verwiesen.

### Fig. 1 (Stand der Technik)

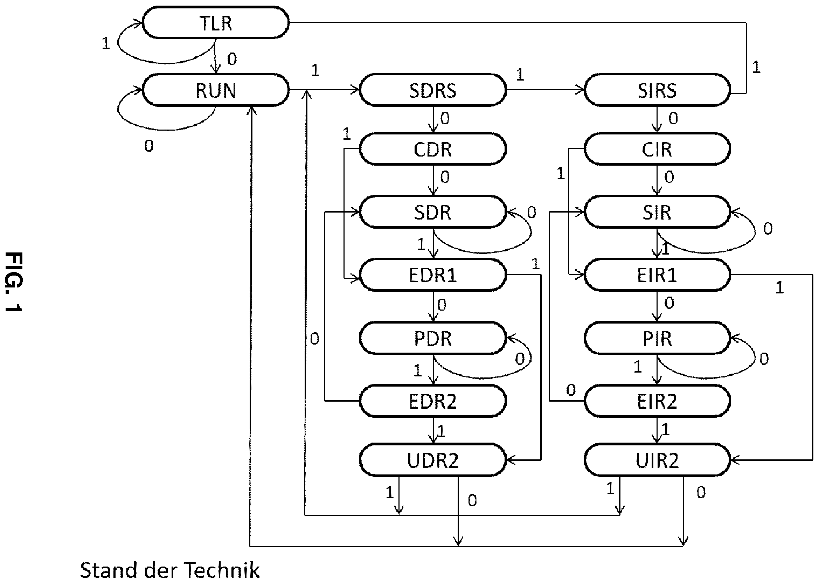

Fig. 1 zeigt das standardisierte Zustandsdiagramm für einen JTAG-Test-Controller (TAPC) entsprechend dem Stand der Technik und der relevanten Normen. Nach dem Zurücksetzen des Systems befindet sich der Test-Controller (TAPC) in dem Zustand "Test-Logik zurücksetzen" (TLR). In diesem verbleibt er, solange das Test-Mode-Signal (TMS) 1 ist. Wird das Test-Mode-Signal (TMS) 0, so wechselt der Test-Controller (TAPC) synchron zum Systemtakt (TCK) in den "Wartezustand" (RUN). In diesem verbleibt der Test-Controller (TAPC), bis am Test-Mode-Signal (TMS) eine 1 anliegt. Dann wechselt der Test-Controller (TAPC) in den Zustand "Start des Datenregisterschiebens" (SDRS). Sofern das Test-Mode-Signal (TMS) auch beim nächsten Mal wieder eine 1 zeigt, wechselt der Test-Controller (TAPC) dann in den Zustand "Start Instruktionsregisterschieben" (SIRS). Sofern auch dann mit dem nächsten Takt wieder eine 1 auf dem Test-Mode-Signal (TMS) anliegt, wechselt der Test-Controller (TAPC) wieder in den Zustand "Testlogik zurücksetzen" (TLR) und setzt die Datenschnittstellenlogik zurück.

Liegt jedoch im Zustand "Start des Instruktionsregisterschiebens" (SIRS) eine 0 auf dem Test-Mode-Signal (TMS) vor, so wechselt der Test-Controller (TAPC) in den Zustand "Instruktionsregisterdaten laden" (CIR) in dem die Daten, die in einem Instruktionsschattenregister verfügbar sind, in das Instruktionsregister (IR) geladen werden. Insofern ist das Instruktionsregister (IR) ein zweistufiges Register, bei dem der Vordergrund durch ein Schieberegister gebildet wird und die eigentlichen Daten sich in einem Schattenregister befinden, das nur in diesem Zustand gelesen wird. Das Schieberegister des Instruktionsregisters (IR) dient der Zu- und Abführung der Daten, während das Schattenregister des Instruktionsregisters (IR) die eigentlichen, gültigen Daten enthält. Diese Zweistufigkeit gilt für alle Register, insbesondere auch für die Datenregister (DR) der JTAG-Schnittstelle und auch für die im Folgenden beschriebenen erfindungsgemäßen Register der erfindungsgemäßen Schnittstelle. Gegebenenfalls kann das Schattenregister des Instruktionsregisters (IR) noch ganz oder teilweise in eines für Lese- und eines für Schreibvorgänge unterteilt sein. Weitere Sichtbarkeits- und Zugriffsmöglichkeitenänderungen in Abhängigkeit von inneren Zuständen sind möglich. Liegt im Zustand "Instruktionsregisterdaten laden" (CIR) beim nächsten Takt des Test-Mode-Signals (TMS) eine 1 an, so wechselt der Test-Controller (TAPC) direkt in den später beschriebenen Zustand "Instruktionsregister Exit 1" (EIR1). Liegt jedoch eine 0 an, so wechselt der Test-Controller (TAPC) in den Zustand "Schieben Instruktionsregister" (SIR) in dem er verbleibt, solange eine 0 am Test-Mode-Signal (TMS) anliegt. Nur in diesem Zustand wird das Schieberegister des Instruktionsregisters (IR) in der Funktion eines Schieberegisters betrieben und sein Dateninhalt mit jedem Takt des Systemtakts (TCK) um ein Bit in Richtung auf den seriellen Datenausgang (TDo) verschoben, mit dem die letzte Speicherzelle des Schieberegisters des Instruktionsregisters (IR) verbunden ist. Das Schattenregister des Instruktionsregisters (IR) wird diesem Schiebevorgang nicht unterworfen. Die am Dateneingang (TDI) anliegende Dateninformation wird mit jedem Takt des Systemtakts (TCK) in die erste Zelle des Schieberegisters des Instruktionsregisters (IR) geladen und von dort während des Schiebens mit jedem weiteren Takt weiterbefördert. Sofern aber bei einem Takt eine 1 an dem Test-Mode-Signal anliegt, verlässt der Test-Controller (TAPC) den Zustand "Instruktionsregister schieben" (SIR) und wechselt in den schon zuvor erwähnten Zustand "Instruktionsregister Exit 1" (EIR1). Sofern beim nächsten Takt des Systemtakts (TCK) wieder eine 1 anliegt, wechselt der Test-Controller (TAPC) in den Zustand "Instruktionsregister schreiben" (UIR2), in dem der Wert des Schieberegisterteils des Instruktionsregisters (IR) in das Schattenregister des Instruktionsregisters (IR) geschrieben wird. Liegt jedoch im Zustand "Instruktionsregister Exit 1" (EIR1) eine 0 am Test-Mode-Signal (TMS) an, so wechselt der Test-Controller (TAPC) in den Zustand "Pause Instruktionsregister" (PIR), wo er verbleibt, solange als Test-Mode-Signal (TMS) eine 0 anliegt. Liegt im Zustand "Pause Instruktionsregister" (PIR) eine 1 auf dem Test-Mode-Signal (TMS) an, so wechselt der Test-Controller (TAPC) in den Zustand "Instruktionsregister Exit 2" (EIR2). Sofern mit dem nächsten Systemtakt (TCK) eine 0 auf dem Test-Mode-Signal (TMS) anliegt, wechselt der Test-Controller (TAPC) wieder zum bereits beschriebenen Zustand "Instruktionsregister schieben" (SIR) zurück. Sofern jedoch im Zustand "Instruktionsregister Exit 2" (EIR2) mit dem nächsten Systemtakt (TCK) eine 1 auf dem Test-Mode-Signal (TMS) anliegt, wechselt der Test-Controller (TAPC) in den Zustand "Instruktionsregister schreiben" (UIR2). Im darauf folgenden Takt wechselt der Test-Controller (TAPC) in den Zustand "Start des Datenregisterschiebens" (SDRS), wenn bei diesem Takt als Test-Mode-Signal (TMS) eine 1 anliegt, und in den Zustand "Warten" (RUN), wenn eine 0 anliegt.

Liegt im Zustand "Start des Datenregisterschiebens" (SDRS) als Test-Mode-Signal (TMS) eine 0 vor, so wechselt der Test-Controller (TAPC) in den Zustand "Datenregisterdaten laden" (CDR) in dem die Daten, die in einem Datenschattenregister verfügbar sind, in das jeweilige Datenregister (DR) geladen werden. Welches Datenregister (DR) von mehreren Datenregistern ausgewählt wird, bestimmen dabei standardgemäß zumindest ein Teil der gültigen Bits des Schattenregisters des Datenregisters (DR). Auch hier ist typischerweise das Datenregister (DR) ein zweistufiges Register, bei dem der Vordergrund durch ein Schieberegister gebildet wird und die eigentlichen Daten sich in einem Schattenregister befinden, das nur in diesem Zustand gelesen wird. Das Schieberegister des Datenregisters (DR) dient auch hier der Zu- und Abführung der Daten, während das Schattenregister des Datenregisters (DR) die eigentlichen Daten enthält. Diese Zweistufigkeit gilt, wie gesagt, für alle Register der JTAG-Schnittstelle, auch die im Folgenden beschriebenen erfindungsgemäßen Register der erfindungsgemäßen Schnittstelle, die standardgemäß als Datenregister (DR) ausgeführt werden. Gegebenenfalls kann das Schattenregister des Datenregisters (DR) wieder ganz oder teilweise in eines für Lese- und eines für Schreibvorgänge unterteilt sein. Weitere Sichtbarkeits- und Zugriffsmöglichkeitenänderungen in Abhängigkeit von inneren Zuständen sind auch hier möglich. Liegt im Zustand "Datenregisterdaten laden" (CDR) beim nächsten Takt des Test-Mode-Signals (TMS) eine 1 an, so wechselt der Test-Controller (TAPC) direkt in den später beschriebenen Zustand "Datenregister Exit 1" (EDR1). Liegt jedoch eine 0 an, so wechselt der Test-Controller (TAPC) in den Zustand "Schieben Datenregister" (SDR) in dem er verbleibt, solange eine 0 am Test-Mode-Signal (TMS) anliegt. Nur in diesem Zustand und sonst nicht, wird das Schieberegister des Datenregisters (DR) in der Funktion eines Schieberegisters betrieben und sein Dateninhalt mit jedem Takt des Systemtakts (TCK) um ein Bit in Richtung auf den seriellen Datenausgang (TDo) verschoben, mit dem die letzte Speicherzelle des Schieberegisters des Datenregisters (DR) verbunden ist. Das Schattenregister des Datenregisters (DR) wird diesem Schiebevorgang nicht unterworfen. Die am Dateneingang (TDI) anliegende Dateninformation wird mit jedem Takt des Systemtakts (TCK) in die erste Zelle des Schieberegisters des Datenregisters (DR) geladen und von dort während des Schiebens mit jedem weiteren Takt weiterbefördert. Sofern aber bei einem Takt als Test-Mode-Signal (TMS) eine 1 anliegt, verlässt der Test-Controller (TAPC) den Zustand "Datenregister schieben" (SDR) und wechselt in den schon zuvor erwähnten Zustand "Datenregister Exit 1" (EDR1). Sofern beim nächsten Takt des Systemtakts (TCK) wieder eine 1 anliegt, wechselt der Test-Controller (TAPC) in den Zustand "Datenregister schreiben" (UDR2), bei dem der Wert des Schieberegisterteils des Datenregisters (DR) in das Schattenregister des Datenregisters (DR) geschrieben wird. Liegt jedoch im Zustand "Datenregister Exit 1" (EDR1) als Test-Mode-Signal (TMS) eine 0 an, so wechselt der Test-Controller (TAPC) in den Zustand "Pause Datenregister" (PDR), in dem er verbleibt, solange als Test-Mode-Signal (TMS) eine 0 anliegt. Liegt im Zustand "Pause Datenregister" (PDR) als Test-Mode-Signal (TMS) eine 1 an, so wechselt der Test-Controller (TAPC) in den Zustand "Datenregister Exit 2" (EDR2). Sofern mit dem nächsten Systemtakt (TCK) als Test-Mode-Signal (TMS) eine 0 anliegt, wechselt der Test-Controller (TAPC) wieder zum bereits beschriebenen Zustand "Datenregister schieben" (SDR) zurück. Sofern jedoch im Zustand "Datenregister Exit 2" (EDR2) mit dem nächsten Systemtakt (TCK) eine 1 auf dem Test-Mode-Signal (TMS) anliegt, wechselt der Test-Controller (TAPC) in den Zustand "Datenregister schreiben" (UDR2). Im darauf folgenden Takt wechselt der Test-Controller (TAPC) in den Zustand "Start des Datenregisterschiebens" (SDRS), wenn bei diesem Takt Test-Mode-Signal (TMS) eine 1 anliegt, und in den Zustand "Warten" (RUN), wenn eine 0 anliegt.

Es ist besonders sinnvoll, dieses Zustandsschema des IEEE 1149 JTAG-Standards zu verwenden, um kompatibel zu dem bereits großflächig im Einsatz befindlichen Standard auf Software-Ebene zu bleiben. Selbstverständlich sind Abweichungen von diesem JTAG-Standard denkbar. Die Beschreibung der Erfindung erfolgt anhand des Beispiels, dass dieser JTAG-Standard für das Zustandsdiagramm des Test-Controllers (TAPC) eingehalten wird.

Die Halbleiterindustrie hat in den vergangenen Jahren mehrfach versucht, die Anzahl der zu verwendenden Anschlüsse für solche JTAG-Schnittstellen zu reduzieren, um die Größe der benötigten Gehäuse und damit die Herstellkosten zu beschränken. In US-A-2007/0033465 ist eine Technik beschrieben, die keine konsistente Wandlung der Daten des IEEE 1149.1 4-Wire-JTAG-Protokolls in die Daten des dort beschriebenen Verfahrens und umgekehrt erlaubt. Die dort beschriebene Vorrichtungsanordnung und das dort beschriebene Verfahren erfordern synchronisierte Zeitschlitze zwischen dem Bus-Master, also dem Host-Prozessor und dem Busknoten als Slave, also der integrierten Schaltung, die getestet, programmiert oder debugged werden soll. Im Falle einer fehlenden zeitlichen Synchronisation des Zugriffs von Bus-Master und Busknoten auf den Testdatenbus kann der TDo-Ausgangstreiber des Busknotens und der Bus-Master-Ausgangstreiber (typischerweise eine Push-Pull-Stufe) bei gleichzeitigem sendenden Zugriff auf die Testdatenleitung einen Kurzschluss erzeugen. Außerdem offenbart sie nur eine Punkt-zu-Punkt-Verbindung.

Aus der US-A-2007/0033465 und der US-A-2011/0150065 sind Mehrpegel-Eindraht-Punkt-zu-Punkt-Anordnungen bekannt, die bereits nur mit einer Datenleitung auskommen, aber nicht für eine Ansteuerung mehrerer Busknoten geeignet sind. Die Erweiterung durch die in der EP-B-0 503 117 offengelegten Verkettungsmethoden ist nicht möglich, da diese keine geeignete Methode zur bidirektionalen Weiterschaltung der Zwischenpegel offenbart.

Verschiedene Ausgestaltungen von Datenübertragungsbussystemen sind beschrieben in DE-A-102 56 631, DE-B-102 61 174, DE-A-10 2010 042 311, DE-B-10 2015 004 434, US-A-6 105 077, US-A-2004/0208200, US-A-2011/0150065, US-A-2012/0144078, US-A-2013/0073761 und US-A-2014/0281076.

Aus US-B-8 492 983 ist eine Verkettung mittels einer Eindraht-Punkt-zu-Punkt Datenleitung (Bezugszeichen 11 in US-B-8 492 983) bekannt. Diese benötigt jedoch eine Rückleitung (Fig. 4 der US-B-8 492 983). Somit wird der Vorteil der einzigen Datenleitung durch die Notwendigkeit einer Rückleitung wieder aufgegeben.

Es sind ferner verschiedene Druckschriften bekannt, die sich ebenfalls mit der Datenübertragung befassen. Zu nennen sind hier die DE-C-196 43 013, die DE-A-102 15 720, die DE-A-2006 022 985, die DE-B-10 2007 060 441, die US-A-2009/0252210 und die US-A-2008/0255791. Eindraht-Datenbussysteme sowie Zweidrahtdatenbussysteme, die gegebenenfalls differentiell betrieben werden, sind für die Ansteuerung von LEDs grundsätzlich beispielsweise aus DE-U-20 2008 012 029, , US-A-5 859 657, US-B-6 297 724, US-A-2010/0109530 und US-A-2014/0333207 bekannt. Bei all diesen Systemen jedoch wird in den Busknoten keine JTAG-Schnittstelle verwendet, wie sie herkömmlicherweise für beispielsweise den Boundary-Scan-Test eingesetzt wird. Keine der hier genannten Schriften legt offen, wie der Bus-Master (BM) im Falle einer Verkettung von Busknoten diese mittels einer JTAG-Schnittstellen steuern kann.

Dies trifft auch auf die US-A-2014/0281076 zu, die eine Stern-Topologie offenbart. Eine solche Stern-Topologie eines Netzwerks lässt eine Korrelation zwischen physikalischer Position und logischer Adresse nicht zu und ist daher für die Anwendung eines Verfahrens zur Vergabe von Busadressen (Autoadressierung) nicht geeignet. Die Anwendbarkeit eines solchen Verfahrens ist aber Voraussetzung für die Verwendung in der Automobilindustrie.

Aus der US-A-2014/0333207 sind eine Vorrichtung und ein Verfahren zum Betrieb eines Beleuchtungssystems bekannt, wobei Botschaften von "intelligenten" Knoten empfangen und weitergeleitet werden. Der Betrieb des bekannten Beleuchtungssystems führt innerhalb der Knoten zu einem Zeitverzug bei der Umsetzung der Daten zwischen den Datenbusabschnitten, was für die schnelle Einstellung von Lichtszenen ungeeignet ist.

Aus der US-A-2012/0144078 ist ein Verfahren zum unidirektionalen Übertragen von Takt und Daten von einem Slave zu einem Master bekannt. Der Takt wird dabei mit einer ersten Flanke des kombinierten Takt-/ Datenstroms vom Master zum Slave übertragen, während die Daten vom Slave zum Master mit einer zweiten Flanke des kombinierten Takt-/ Datenstroms übertragen werden. Das Verfahren ist nicht bidirektional.

US-A-2009/0021955 offenbart die Steuerung einer LED-Innenbeleuchtung über einen hierarchischen Zweidrahtdatenbus, der als Serienanordnung ausgeführt sein kann (Abschnitt [0033] der US-A-2009/0021955). Die technische Lehre der US-A-2009/0021955 betrifft aber auch sternförmige Topologien. Der Busmaster und die Slaves wechseln sich im Zeitschlitzverfahren ab. Die Übertragung des Systemtakts und der Daten sowie die Steuerung der Busknoten und die Adressvergabe werden nicht erläutert. Insbesondere ist der Bus-Master nicht in der Lage, die in dem jeweiligen Bus-Slave verbauten Testresourcen gezielt auf physikalischer Ebene anzusprechen.

Aus DE-U-20 2013 103 146 ist ein Busknoten in einem differentiellen Zweidrahtdatenbussystem zur Steuerung mindestens einer Ansteuerungsvorrichtung mindestens eines Leuchtmittels einer Leuchtkette durch einen Busknoten bekannt.

US-A-2013/0009715 beschreibt einen Busknoten, der mit einer JTAG-Schnittstelle ausgerüstet ist.

Aus EP-A-2 571 200 ist ein Verfahren zur Initialisierung eines Datenbusses zwischen einer ersten Teilvorrichtung, dem Bus-Master, und mindestens zwei weiteren Teilvorrichtungen, den Busknoten bekannt.

Aus US-A-2014/101351 ist ein Zweidrahtdatenbussystem mit einem differenziellen Zweidrahtdatenbus zur Übertragung von Daten zwischen einem Bus-Master und zwischen mindestens zwei Busknoten bekannt.

Aus US-A-2012/188738 ist eine Vorrichtung mit einem Gehäuse und einem Leuchtmittel bekannt, das in einer Aussparung des Gehäuses angeordnet ist. Das Gehäuse weist mehrere Reihen von Anschlüssen auf.

Aus EP-A-2 400 608 ist eine Vorrichtung zum Anschließen als Busknoten an einen differenziellen Zweidrahtdatenbus eines Datenbussystems zur Übertragung von Beleuchtungsdaten für Leuchtmittel bekannt.

### Aufgabe der Erfindung

Es ist die Aufgabe der Erfindung, eine bidirektionale, frei konfigurierbare Übertragung von Beleuchtungsdaten mit zwei Datenleitungen für mehr als einen Busknoten (BS1, BS2, BS3) als Slave eines Bus-Masters (BM) zu ermöglichen.

Diese Aufgabe wird erfindungsgemäß durch ein Verfahren mit den Merkmalen gemäß Anspruch 1 gelöst. Einzelne Ausgestaltungen des erfindungsgemäßen Verfahrens sind Gegenstand der Unteransprüche.

Die Erfindung betrifft ein Verfahren zur Initialisierung eines differentiellen Zweidrahtdatenbusses zwischen einer ersten Teilvorrichtung, dem Bus-Master (BM), und mindestens zwei weiteren Teilvorrichtungen, den Busknoten (BS1, BS2, BS3), wobei der Zweidrahtdatenbus (b1b2b3b4) einen ersten Eindrahtdatenbus (bla, b2a, b3a) einen zweiten Eindrahtdatenbus (b1b, b2b, b3b) umfasst, der durch die mindestens zwei Busknoten in mindestens zwei Zweidrahtdatenbusabschnitte (b1, b2, b3) mit zugehörigen ersten Eindrahtdatenbusabschnitten (bla, b2a, b3a) und zweiten Eindrahtdatenbusabschnitten (b1b, b2b, b3b) unterteilt wird und durch mindestens einen Busknoten (BS3) der Busknoten (BS1, BS2, BS3), den abschließenden Busknoten (BS3), abgeschlossen wird, aufweist. Dieses Verfahren umfasst die folgenden Schritte:
- Ermitteln einer neuen Busknotenadresse durch den Bus-Master;
- Ablegen dieser Busknotenadresse in einem Busknotenadressregister (BKADR) eines Busknotens (BS1, BS2, BS3), des betrachteten Busknotens, durch den Bus-Master (BM), wobei Bus-Master (BM) und der betrachtete Busknoten durch einen oder mehrere Zweidrahtdatenbusabschnitte (b1, b2, b3) miteinander verbunden sind und es sich bei dem Busknotenadressregister (BKADR) um ein Datenregister (DR) einer modifizierten JTAG-Schnittstelle oder einen Teil eines Datenregisters (DR) einer modifizierten JTAG-Schnittstelle des betrachteten Busknotens oder einen Teil eines Instruktionsregisters (IR) einer modifizierten JTAG-Schnittstelle des betrachteten Busknotens handelt, die insoweit modifiziert ist, als sie einen Test-Controller mit einem Zustandsdiagram entsprechend dem IEEE 1149-Standard oder eines seiner Unterstandards aufweist und statt eines Absolut-Spannungssignals, also eines Spannungssignals, welches sich bezogen auf einen Referenzpegel wie z.B. Massepotential verändert, mit einem differentiellen Signal betrieben wird, wie es über den differentiellen Zweidrahtdatenbus übertragen wird; und
- Verbinden eines oder mehrerer Zweidrahtdatenbusabschnitte (b1, b2, b3) mit einem oder mehreren weiteren Zweidrahtdatenbusabschnitten (b1, b2, b3) durch Schließen eines Transfer-Gates (TG) des betrachteten Busknotens, wobei eine Ablage einer Busknotenadresse in einem Busknotenadressregister (BKADR) des betrachteten Busknotens (BS1, BS2, BS3) durch den Bus-Master (BM) solange durch den Busknoten verhindert wird, wie das Transfer-Gate (TG) geschlossen ist.

Die JTAG-Schnittstelle ist erfindungsgemäß also insoweit modifiziert, als sie nunmehr statt eines Absolut-Spannungssignals, also eines Spannungssignals, das sich bezogen auf einen Referenzpegel (beispielsweise Ground) verändert, mit einem differentiellen Signal betrieben wird, wie es über den Datenbus, der erfindungsgemäß als differentieller Zweidrahtdatenbus ausgebildet ist, übertragen wird.

Eine vorteilhafte Weiterbildung des Verfahrens umfasst den Schritt des Ablegens eines Befehls zum Öffnen eines Transfer-Gates (TG) in dem Instruktionsregister (IR) oder einem Transfer-Gate-Control-Register (TGCR) der modifizierten JTAG-Schnittstelle des betrachteten Busknotens.

Zweckmäßigerweise umfasst eine weitere Variante des Verfahrens den Schritt des Überprüfens der korrekten Adressierung zumindest eines Busknotens durch zyklisches Schreiben und Lesen, insbesondere eines Bypass-Registers.

Schließlich kann das erfindungsgemäße Verfahren auch umfassen die Schritte des Ermittelns der Anzahl korrekt adressierbarer Busknoten durch den Bus-Master (BM) und des Vergleichens der Anzahl korrekt adressierbarer Busknoten mit einer Sollanzahl und Auslösung mindestens eines Signals oder einer Maßnahme in Abhängigkeit von der Anzahl durch den Bus-Master oder ein angeschlossenes System.

Nach der Erfindung wird ferner vorgeschlagen ein Verfahren zur Übermittlung von Daten nach Initialisierung eines differenziellen Zweidrahtdatenbusses, umfassend die folgenden Schritte:
Gleichzeitiges Übermitteln einer Sendeadresse an alle erreichbaren Busknoten durch beschreiben von Senderegistern (SR) aller Busknoten durch den Bus-Master (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der modifizierte JTAG-Schnittstelle dieses Busknotens ist, und wobei das Busknotenadressregister (BKADR) kein Teil des betreffenden Registers ist;
- Vergleich der Sendeadresse im Senderegister (SR) mit der Busknotenadresse im Busknotenadressregister (BKADR) durch jeden Busknoten mittels eines vorbestimmten Vergleichsalgorithmus;
- Aktivierung der Sendefähigkeit für den jeweiligen Busknoten zu den dafür vorgesehenen Zeitpunkten, wenn der Vergleichsalgorithmus des zuvor durch diesen jeweiligen Busknoten ausgeführten Vergleiches eine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt;
- Deaktivierung der Sendefähigkeit für den jeweiligen Busknoten, wenn der Vergleichsalgorithmus des zuvor durch diesen jeweiligen Busknoten ausgeführten Vergleiches keine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt.

Ferner wird nach der Erfindung ein Verfahren zur Übermittlung von Daten nach Initialisierung eines differenziellen Zweidrahtdatenbusses vorgeschlagen, umfassend die folgenden Schritte:
- Gleichzeitiges Übermitteln einer Sendeadresse an alle erreichbaren Busknoten durch beschreiben von Senderegistern (SR) aller Busknoten durch den Bus-Master (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der modifizierten JTAG-Schnittstelle dieses Busknotens ist, und wobei das Busknotenadressregister (BKADR) kein Teil des betreffenden Registers ist;
- Vergleich der Sendeadresse im Senderegister (SR) mit der Busknotenadresse im Busknotenadressregister (BKADR) durch jeden Busknoten mittels eines vorbestimmten Vergleichsalgorithmus;
- Aktivierung der Empfangsfähigkeit des jeweiligen Busknotens für den Inhalt vorbestimmter Datenregister des jeweiligen Busknotens, wenn der Vergleichsalgorithmus des zuvor durch diesen jeweiligen Busknoten ausgeführten Vergleiches eine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt;
- Deaktivierung der Empfangsfähigkeit des jeweiligen Busknotens für den Inhalt vorbestimmter Datenregister des jeweiligen Busknotens der Sendefähigkeit für den jeweiligen Busknoten, wenn der Vergleichsalgorithmus des zuvor durch diesen jeweiligen Busknoten ausgeführten Vergleiches keine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt.

Nach der Erfindung wird ferner vorgeschlagen ein Verfahren zur Übermittlung von Daten nach Initialisierung eines differenziellen Zweidrahtdatenbusses, umfassend die folgenden Schritte:
- Gleichzeitiges Übermitteln einer Sendeadresse an alle erreichbaren Busknoten durch beschreiben von Senderegistern (SR) aller Busknoten durch den Bus-Master (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der modifizierten JTAG-Schnittstelle dieses Busknotens ist, und wobei das Busknotenadressregister (BKADR) kein Teil des betreffenden Registers ist;
- Vergleich der Sendeadresse im Senderegister (SR) mit der Busknotenadresse im Busknotenadressregister (BKADR) durch jeden Busknoten mittels eines vorbestimmten Vergleichsalgorithmus;
- Aktivierung der Empfangsfähigkeit des jeweiligen Busknotens für den Inhalt vorbestimmter Inhalte des Instruktionsregisters (IR) des jeweiligen Busknotens zur Zulassung vorbestimmter Befehle für einen Instruktionsdecoder (IRDC) der modifizierten JTAG-Schnittstelle des jeweiligen Busknotens, wenn der Vergleichsalgorithmus des zuvor durch diesen jeweiligen Busknoten ausgeführten Vergleichs eine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt;
- Deaktivierung der Empfangsfähigkeit des jeweiligen Busknotens für den Inhalt vorbestimmter Inhalte des Instruktionsregisters (IR) des jeweiligen Busknotens zur Unterdrückung vorbestimmter Befehle für einen Instruktionsdecoder (IRDC) der modifizierten JTAG-Schnittstelle des jeweiligen Busknotens, wenn der Vergleichsalgorithmus des zuvor durch diesen jeweiligen Busknoten ausgeführten Vergleiches keine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt.

### Beschreibung der Erfindung

Erfindungsgemäß wurde erkannt, dass sich ein Zweidrahtdatenbus bestehend aus zwei Eindraht-Test-Bussen, wie sie einschließlich des zugehörigen Betriebsverfahrens beispielsweise in den Schriften DE-B-10 2015 004 433, DE-B-10 2015 004 434, DE-B-10 2015 004 435 und DE-B-10 2015 004 436 beschrieben ist, deren Inhalte hiermit durch Bezugnahme zum Gegenstand der vorliegenden Anmeldung gehören, ganz besonders für die Übertragung solcher Daten, insbesondere für die Steuerung der Leuchtmittel von Leuchtbändern, eignet, wenn jeder Busknoten eine geeignete Teilvorrichtung zur bidirektionalen Weiterschaltung aufweist. Die Nutzung eines differentiellen Mehr-Pegel-JTAG-Busses für die Steuerung der Energieversorgung wird bereits in den Schriften DE-B-10 2016 100 837, DE-B-10 2016 100 838, DE-B-10 2016 100 839, DE-B-10 2016 100 840, DE-B-10 2016 100 841, DE-B-10 2016 100 842, DE-B-10 2016 100 843, DE-B-10 2016 100 845, DE-B-10 2016 100 847 und DE-B-10 2016 101 181 aufgegriffen, deren Inhalte hiermit durch Bezugnahme zum Gegenstand der vorliegenden Patentanmeldung gehören.

Im Gegensatz zum Gegenstand der DE-B-10 2015 004 433, DE-B-10 2015 004 434, DE-B-10 2015 004 435 und DE-B-10 2015 004 436 werden nun jedoch keine Testdaten, sondern Nutzdaten, insbesondere zur Beleuchtungssteuerung, differentiell übertragen. Letzteres erlaubt eine wesentlich höhere Datenübertragungsrate bei geringerer EMV-Abstrahlung. Im Gegensatz zum bekannten CAN-Protokoll wird der Datentakt mit übertragen, was eine aufwendige Rekonstruktion des Datentakts in den Busknoten überflüssig macht und so die Kosten für die Transceiver in den Busknoten (BS₁ bis BSₙ) merklich senkt. Des Weiteren ist auch der in DE-B-10 2015 004 433, DE-B-10 2015 004 434, DE-B-10 2015 004 435 und DE-B-10 2015 004 436 offenbarte Test-Bus nur für eine Punkt-zu-Punkt-Verbindung ausgelegt. Es ist also einerseits notwendig, diesen Test-Bus so zu modifizieren, dass mehrere Bus-Slaves als Busknoten angesteuert und betrieben werden können und andererseits den Test-Bus so zu modifizieren, dass er mit einer erhöhten Datenrate betrieben werden kann. Letzteres wird durch die Verwendung eines Zweidrahtdatenbusses aus zwei Eindrahtdatenbussen erreicht. Die Steuerdaten werden dabei erfindungsgemäß in ein spezielles Datenregister (DR) einer JTAG-Schnittstelle über den Zweidrahtdatenbus geschrieben bzw. von einem solchen gelesen.

Im Gegensatz zu den Schriften DE-B-10 2016 100 837, DE-B-10 2016 100 838, DE-B-10 2016 100 839, DE-B-10 2016 100 840, DE-B-10 2016 100 841, DE-B-10 2016 100 842, DE-B-10 2016 100 843, DE-B-10 2016 100 845, DE-B-10 2016 100 847 und DE-B-10 2016 101 181 kann somit entsprechend der beanspruchten technischen Lehre dieser Erfindung eine höhere Geschwindigkeit bei der Übertragung der Beleuchtungsdaten an die Busknoten erreicht werden.

Kernidee der Erfindung ist die komplementäre Modulation der beiden Eindrahtdatenbusse. Hierdurch wird die EMV-Abstrahlung reduziert und es kann eine höhere Datenübertragungsgeschwindigkeit erreicht werden.

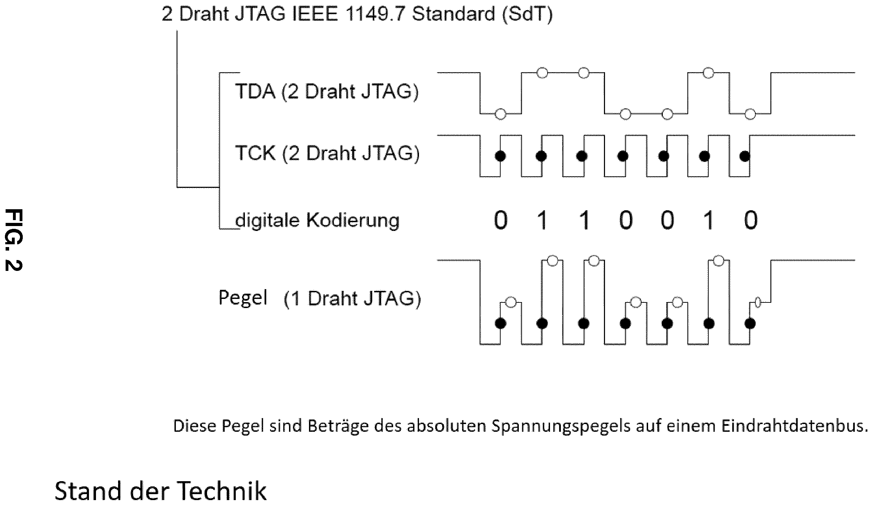

Die vorstehende Aufgabe sowie andere Aufgaben werden gemäß der vorliegenden Erfindung durch die Bereitstellung einer Schnittstelleneinheit mit einer JTAG-Schnittstelle gelöst, die in zeitlicher Abfolge zeitlich gemultiplexter Signale mittels der Schnittstelleneinheit mit der integrierten Schaltung austauschen kann und über einen Zweidrahtdatenbus angesteuert werden kann. Die Signale werden so formatiert, dass alle Informationen, die durch die JTAG-Schnittstelle für die Steuerung des Datenflusses und die Einstellung der Beleuchtungsparameter der angeschlossenen Leuchtmittel benötigt werden, über diese Schnittstelle seriell und mit differentiellen Signalen übertragen werden. Hierbei werden alle Datenwerte des JTAG-Boundary-Protokolls in dafür vorgesehenen Zeitschlitzen als differentielles Signal übertragen. Neben dem zeitlichen Multiplexen der JTAG-Steuersignale, verwendet die erfindungsgemäße Schnittstelleneinheit drei verschiedene differentielle Spannungsbetragsbereiche (V_{B1}, V_{B2}, V_{B3}) für das differentielle Spannungssignal und den differentiellen Signalpegel (TOW), auf dem differentiellen Zweidrahtdatenbus (siehe Fig. 2) um
1. mindestens die Daten des seriellen Testdateneingangs TDI und
2. mindestens die Daten des einen seriellen Testausgangs TDo und
3. mindestens die Steuerdaten des Testmode-Eingangs TMS zur Steuerung des Test-Controllers der integrierten Schaltung und
4. mindestens den Testtakt zur Versorgung des Test-Controllers mit seinem TestSystem-Takt TCK und
5. ein optionalen Testrücksetzsignal TRST
zu übertragen.

Die Fig. 2 zeigt dabei im Gegensatz zu dem oben bereits erwähnten Patentschrifttum nun die differentiellen und nicht die absoluten Pegel.

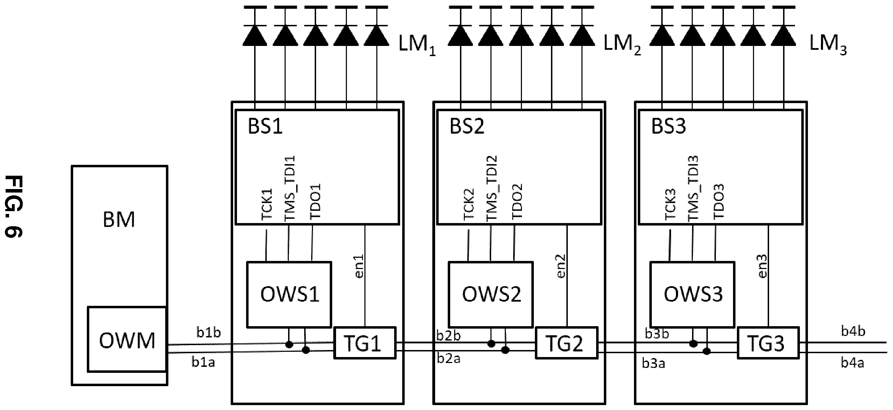

Die Erfindung betrifft somit in erster Linie einen bidirektionalen differentiellen Datenbus mit einem Zweidrahtdatenbus (b1b2b3b4) bestehend aus zwei Eindrahtdatenbussen (bla, b2a, b3a, b4a; b1b, b2b, b3b, b4b) zwischen einer ersten Teilvorrichtung, dem Bus-Master (BM), und mindestens zwei weiteren Teilvorrichtungen, den Busknoten (BS1, BS2, BS3) (siehe Fig. 6). Dabei ist der Busknoten identisch mit der zuvor erwähnten integrierten Schaltung zur Steuerung von Leuchtmitteln mittels PWM im weitesten Sinne, deren Zustände kontrolliert bzw. geändert werden sollen. Natürlich ist der in dieser Erfindung beschriebene bidirektionale differentielle Datenbus auch für die Steuerung anderer Verbraucher elektrischer Energie geeignet. Dieser bidirektionale differentielle Datenbus weist vorzugsweise nur eine Masseleitung (GND) und eine erste einzelne Datenleitung in Form eines ersten Eindrahtdatenbusses (bla, b2a, b3a, b4a) des Zweidrahtdatenbusses (bla, b2a, b3a, b4a; b1b, b2b, b3b, b4b) und eine zweite einzelne Datenleitung in Form eines zweiten Eindrahtdatenbusses (b1b, b2b, b3b, b4b) des Zweidrahtdatenbusses (bla, b2a, b3a, b4a; b1b, b2b, b3b, b4b) auf. Der Zweidrahtdatenbus (bla, b2a, b3a, b4a; b1b, b2b, b3b, b4b) und damit der erste Eindrahtdatenbus (bla, b2a, b3a, b4a) und der zweite Eindrahtdatenbus (b1b, b2b, b3b, b4b) werden durch die Busknoten (BS1, BS2, BS3) in verschiedene Zweidrahtdatenbusabschnitte (b1, b2, b3) unterteilt, wobei der erste Eindrahtdatenbus des Zweidrahtdatenbusses in entsprechende Eindrahtdatenbusabschnitte (bla, b2a, b3a, b4a) unterteilt wird und wobei der zweite Eindrahtdatenbus des Zweidrahtdatenbusses ebenfalls in entsprechende Eindrahtdatenbusabschnitte (b1b, b2b, b3b, b4b) unterteilt wird. Der erste und der zweite Eindrahtdatenbusabschnitt eines Zweidrahtdatenbusabschnitts ist dabei mit Vorteil jeweils wie der Eindrahtdatenbusabschnitt gemäß DE-B-10 2016 100 837, DE-B-10 2016 100 838, DE-B-10 2016 100 839, DE-B-10 2016 100 840, DE-B-10 2016 100 841, DE-B-10 2016 100 842, DE-B-10 2016 100 843, DE-B-10 2016 100 845, DE-B-10 2016 100 847 und DE-B-10 2016 101 181 ausgeführt. Hierdurch benötigen die Busknoten (BS1, BS2, BS3) jeweils nur zwei Paare an zusätzlichen elektrischen Anschlüssen. Um nun sowohl Daten in einen der Busknoten (BS1,BS2, BS3), im Folgenden betrachteter Busknoten genannt, vom Busmaster (BM) aus hinein senden zu können, als auch Daten aus dem betreffenden Busknoten zum Busmaster (BM) auslesen zu können, können die Daten über den Zweidrahtdatenbus (b1b2b3) bidirektional übertragen werden. Die Daten werden dabei auf dem ersten Eindrahtdatenbus und dem zweiten Eindrahtdatenbus des Zweidrahtdatenbusses (b1b2b3) komplementär übertragen. Das bedeutet, dass im Gegensatz zu den zuvor genannten Gruppen von Schriften nicht das Potenzial einer einzelnen, also der ersten oder zweiten Eindrahtdatenbusleitung gegenüber einem Bezugspotenzial ausgewertet wird, sondern die Potentialdifferenz zwischen der ersten Eindrahtdatenbusleitung (bla, b2a, b3a, b4a) und der zweiten Eindrahtbusdatenleitung (b1b, b2b, b3b, b4b) des Zweidrahtdatenbusses (b1b2b3b4). Diese Potenzialdifferenz wird im Folgenden auch als differentieller Pegel (TOW) bezeichnet. Ansonsten entsprechen das verwendete Verfahren und die verwendeten Vorrichtungen für den ersten und den zweiten Eindrahtdatenbus vorzugsweise denen der zuvor genannten Schriften.

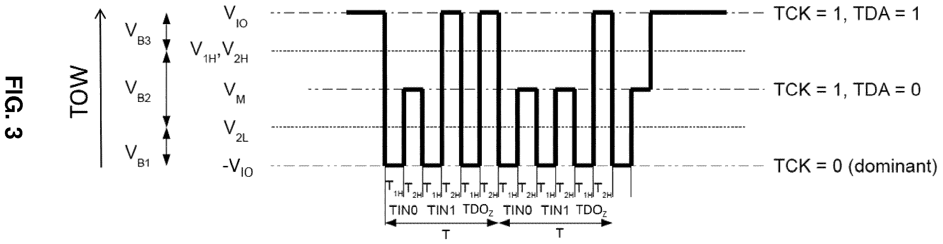

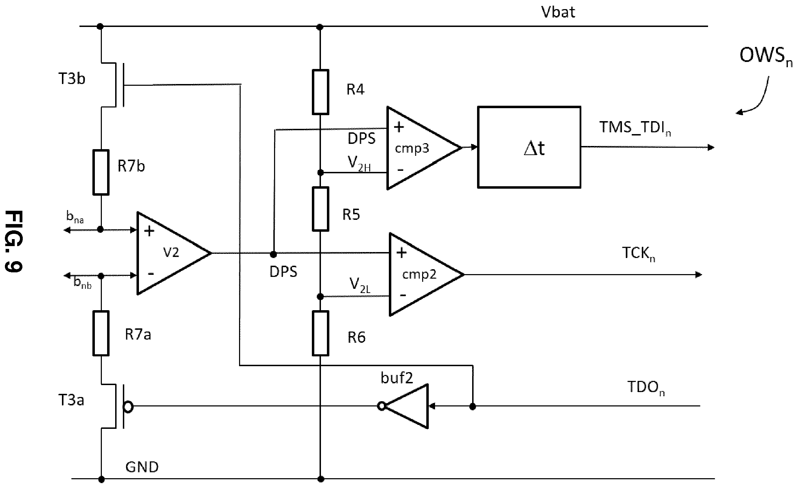

Es entsteht nun das Problem, dass neben der Datenübertragung auch ein Synchronisationssignal differentiell übertragen werden muss. Hierfür wird über den Zweidrahtdatenbus (b1b2b3) der Systemtakt durch ein Taktsignal, das TCK-Signal, insbesondere vom Bus-Master (BM) zu den Busknoten (BS1, BS2, BS3) zusätzlich übertragen. Um diese Kommunikation zu ermöglichen, verfügen die Busknoten (BS1, BS2, BS3) über eine erste Einrichtung, die den differentiellen Signalpegel (TOW) auf dem ersten Eindrahtdatenbus (bla, b2a, b3a) und dem zweiten Eindrahtdatenbus (b1b, b2b, b3b) des Zweidrahtdatenbusses (b1b2b3) oder auf einem angeschlossenen Zweidrahtdatenbusabschnitt (b1, b2, b3) des Zweidrahtdatenbusses (b1b2b3) mit einem dritten Schwellwert (V_{2H}) vergleicht (siehe auch Fig. 9). Hierzu wird der differentielle Signalpegel (TOW) bevorzugt durch einen zweiten differentiellen Eingangsverstärker (V2) der jeweiligen Zweidrahtdatenbusschnittstelle (OWSn) des betrachteten relevanten Busknotens (BSn) erfasst und zu einem differentiellen Pegelsignal (DPS) umgewandelt. Ein dritter Komparator (cmp3) der jeweiligen Zweidrahtdatenbusschnittstelle (OWSn) des betrachteten relevanten Busknotens (BSn) vergleicht den differentiellen Signalpegel (TOW) auf dem Zweidrahtdatenbus des dem betrachteten Busknoten (BSn) vorausgehenden Zweidrahtdatenbusabschnitts (bn) in Form des Werts des differentiellen Pegelsignals (DPSn) des betrachteten Busknotens (BSn) mit dem Wert eines dritten Schwellwertsignals, dem dritten Schwellwert (V_{2H}). Außerdem verfügt der betrachtete Busknoten (BSn) des Weiteren über eine zweite Einrichtung, die den differentiellen Signalpegel (TOW) auf dem Zweidrahtdatenbus des dem betrachteten Busknoten (BSn) vorausgehenden Zweidrahtdatenbusabschnitts (bn) in Form des Werts des differentiellen Pegelsignals (DPS) mit einem zweiten Schwellwert (V_{2L}) vergleicht. Ein zweiter Komparator (cmp2) der jeweiligen Zweidrahtdatenbusschnittstelle (OWSn) des betrachteten relevanten Busknotens (BSn) vergleicht den differentiellen Signalpegel (TOW) auf dem Zweidrahtdatenbus (b1b2b3) des dem betrachteten Busknoten (BSn) vorausgehenden Zweidrahtdatenbusabschnitts (bn) in Form des Werts des differentiellen Pegelsignals (DPS) mit dem Wert eines zweiten Schwellwertsignals (V_{2L}). Ist der dritte Schwellwert (V_{2H}) vom zweiten Schwellwert (V_{2L}) verschieden und liegen die Schwellwerte (V_{2L}, V_{2H}) wertemäßig innerhalb des Versorgungsspannungsbereiches, so werden durch diese zwei Schwellwerte (V_{2H}, V_{2L}) drei Spannungsbetragsbereiche (V_{B1}, V_{B2}, V_{B3}) für den Wert des Pegelsignals (DPS) des betreffenden Busknotens, der die differentielle Spannung auf dem Zweidrahtdatenbus feststellt, definiert und festgelegt. Dabei messen der zweite und der dritte Komparator (cmp2, cmp3) auf Busknoten-Seite, in welchem Spannungsbetragsbereich (V_{B1}, V_{B2}, V_{B3}) sich der Betrag des differentiellen Signalpegels (TOW) des Zweidrahtdatenbusses (b1b2b3) oder der jeweils an den betreffenden Busknoten (BSn) angeschlossene Zweidrahtdatenbusabschnitt (b1, b2, b3) des Zweidrahtdatenbusses (b1b2b3) gerade befindet. Der zweite und dritte Schwellwert (V_{2L}, V_{2H}) definieren somit die drei besagten Signalspannungsbetragsbereiche (V_{B1}, V_{B2}, V_{B3}) für das Pegelsignal (DPS) und damit drei Spannungsbereiche für den differentiellen Signalpegel (TOW) auf dem Zweidrahtdatenbus (b1b2b3). Der zweite Verstärker (V2) und der später erläuterte erste Verstärker (V1) werden vorzugsweise so ausgelegt, dass sie den maximal zu erwartenden differentiellen Hub auf dem vorausgehenden Zweidrahtdatenbusabschnitt (bn) auf einen Wert kleiner als den einfachen Betrag der Versorgungsspannung (V_{bat}) gegen das zweite Bezugspotenzial (GND) reduzieren. Hier sei darauf hingewiesen, dass aufgrund der differentiellen Natur des Busses, der Betrag des maximalen Pegelhubs des differentiellen Signalpegels (TOW) das Doppelte des Betrags der Betriebsspannung (V_{bat}) des Busknotens betragen kann. Zur besseren Klarheit sei der mittlere Spannungsbetragsbereich als zweiter Spannungsbetragsbereich (V_{B2}) benannt. Dieser wird von einem ersten Spannungsbetragsbereich (V_{B1}) nach unten hin begrenzt. Es ist hierbei bewusst offengelassen, ob es sich beim ersten Spannungsbereich (V_{B1}) um einen Spannungsbereich mit positiveren oder negativeren Spannungen als die Spannungen des mittleren, zweiten Spannungsbereichs (V_{B2}) handelt, da das System auch mit umgekehrten Spannungspolaritäten funktioniert. Gleichzeitig wird korrespondierend der zweite Spannungsbetragsbereich (V_{B2}) zur anderen Spannungsseite hin, also nach oben hin, also andersherum als beim ersten Spannungsbetragsbereich (V_{B1}), durch einen dritten Spannungsbetragsbereich (V_{B3}) begrenzt. (Siehe Fig. 3.)

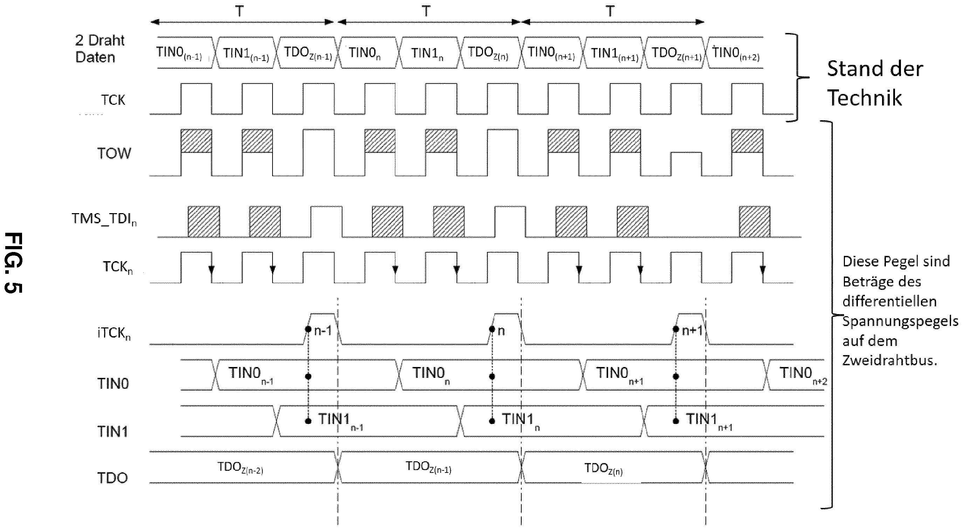

Um nun die Daten vom Bus-Master (BM), also dem Host-Prozessor, zu einem Busknoten (BS1, BS2, BS3) zu übertragen, werden nun in mindestens drei aufeinander folgenden Zeitschlitzen (TINO, TIN1, TDO_{Z}) durch den Bus-Master (BM) oder den betreffenden Busknoten (BS1, BS2, BS3) Daten über den Zweidrahtdatenbus (b1b2b3) oder den an den Busknoten (BS1, BS2, BS3) angeschlossenen Zweidrahtdatenbusabschnitt (b1, b2, b3) des Zweidrahtdatenbusses (b1b2b3) übertragen, siehe Fig. 5 und Fig. 6. Wer dabei eine Sendeberechtigung hat, wird durch die zeitliche Position des jeweiligen Zeitschlitzes (TINO, TIN1, TDO_{Z}), sowie durch den Inhalt der jeweiligen Busknotenadressregister (BKADR) der jeweiligen Busknoten (BS1, BS2, BS3) und die durch den Busmaster (BM) zuvor an den jeweiligen Busknoten (BS1, BS2, BS3) übermittelte Sendeadresse des jeweiligen Busknotens (BS1, BS2, BS3) festgelegt. Hierbei werden dem Bus-Master (BM) typischerweise zwei Zeitschlitze (TINO, TIN1) und dem betreffenden Busknoten (BS1, BS2, BS3) typischerweise ein Zeitschlitz (TDO_{Z}) in dem Paket der drei aufeinanderfolgenden Zeitschlitze (TINO, TIN1, TDO_{Z}) für Sendezwecke zugewiesen. Welche Busknoten (BS1, BS2, BS3) unter den Busknoten (BS1, BS2, BS3) in dem entsprechenden Busknotensendezeitschlitz (TDO_{Z}) senden dürfen, wird erfindungsgemäß durch ein Datum, die Sendeadresse des betreffenden Busknotens (BS1,BS2, BS3), festgelegt, das der Bus-Master (BM) in alle Senderegistern (SR) aller erreichbaren Busknoten (BS1, BS2, BS3) gleichzeitig übermittelt und ablegt, deren vorausgehende Zweidrahtdatenbusabschnitte gerade eine Verbindung zum Bus-Master (BM) ermöglichen. Alle Busknoten (BS1, BS2, BS3) vergleichen diese Sendeadresse in ihren jeweiligen Senderegistern (SR) mit einer ihnen in ihren Busknotenadressregistern (BKADR) während der Businitialisierung eingespeicherten eigenen Busknotenadresse und senden nur dann im Busknotensendezeitschlitz (TDO_{Z}), wenn die übermittelte Sendeadresse in ihrem Senderegister (SR) mit der eigenen eingespeicherten Busknotenadresse in ihrem Busknotenadressregister (BKADR) übereinstimmt und dann auch nur zu den vorbestimmten Zeiten. Die relative Zeitschlitzposition innerhalb des Paketes aus mindestens drei Zeitschlitzen (TINO, TIN1, TDO_{Z}) ist dabei vorzugsweise, aber nicht notwendigerweise für möglichst alle Busknoten (BS1, BS2, BS2) immer gleich. Besonders bevorzugt enthalten der erste Zeitschlitz (TINO) und der zweite Zeitschlitz (TIN1) ein Kontrolldatum und/oder ein erstes Datum, das vom Bus-Master (BM) zu den Busknoten (BS1, BS2, BS3) übertragen wird, wobei das Kontrolldatum und das erste Datum insbesondere und vorzugsweise mit den Daten des IEEE 1149.1 4 Draht Testdatenbusses kompatibel sein sollten, und wobei die Busknoten (BS1, BS2, BS3) das Kontrolldatum und das erste Datum empfangen. Hierdurch können beispielsweise Busknotenadressen, Sendeadressen und Beleuchtungswerte etc. übertragen werden.

Im Gegensatz zum Stand der Technik wird nun jedoch im dritten Zeitschlitz, dem Busknotensendezeitschlitz (TDO_{Z}), das Datum vom betreffenden Busknoten (BSₙ) zum Bus-Master (BM) nur im zweiten und dritten Spannungsbetragsbereich(V_{B2} und V_{B3}) und eben nicht im ersten Spannungsbetragsbereich (V_{B1}) übertragen, wenn die übermittelte und im Senderegister (SR) der JTAG-Schnittstelle des Busknotens abgelegte Sendeadresse mit der im Busknotenadressregister (BKADR) des betreffenden Busknotens (BSₙ) während der Businitialisierung abgelegten eingespeicherten Busknotenadresse des betrachteten Busknotens (BSₙ) übereinstimmt. Der betrachtete Busknoten (BSn) umfasst das besagte Adressregister (BKADRn) als Datenregister (DRn) seiner JTAG-Schnittstelle. Somit enthält der dritte Zeitschlitz, der Busknotensendezeitschlitz (TDO_{Z}), erfindungsgemäß ein zweites Datum, das vom betreffenden Busknoten (BSₙ) zum Bus-Master (BM) übertragen wird und wobei der Bus-Master (BM) dieses zweite Datum vom betreffenden Busknoten (BSₙ) empfängt und wobei das zweite Datum nur im zweiten Spannungsbetragsbereich (V_{B2}) und im dritten Spannungsbetragsbereich (V_{B3}) durch den betreffenden Busknoten (BSₙ) übertragen wird. Gleichzeitig wird der Takt durch den Bus-Master (BM) in jedem Zeitschlitz (TINO, TIN1, TDO_{Z}) übertragen, siehe Fig. 5. Das Taktsignal (TCK) wird dabei durch ein Taktsignal signalisiert, das zwischen dem ersten Spannungsbetragsbereich (V_{B1}) in einer ersten Halbtaktperiode der mindestens zwei Halbtaktperioden (T_{1H}, T_{2H}) eines Zeitschlitzes einer Systembasistaktperiode (T) einerseits und dem zweiten Spannungsbetragsbereich (V_{B2}) oder dritten Spannungsbetragsbereich (V_{B3}) in der zweiten Halbtaktperiode der mindestens zwei Halbtaktperioden (T_{1H}, T_{2H}) des Zeitschlitzes einer Systembasistaktperiode (T) andererseits schwankt. Das Taktsignal kann dadurch detektiert werden, dass der Betrag der differentiellen Spannung auf dem Zweidrahtdatenbus (b1b2b3) oder auf einem angeschlossenen Zweidrahtdatenbusabschnitt (b1, b2, b3) des Zweidrahtdatenbusses (b1b2b3) aus dem zweiten Spannungsbetragsbereich (V_{B2}) oder dritten Spannungsbetragsbereich (V_{B3}) in den ersten Spannungsbetragsbereich (V_{B1}) und umgekehrt wechselt. Das Kreuzen der entsprechenden Schwellspannung des zweiten Schwellwerts (V_{2L}) kann durch den zugehörigen zweiten Komparator (cmp2, siehe Fig. 9), eine analoge Einrichtung, erkannt werden. Somit wird es möglich, den Systemtakt (TCK) auf der Seite des betreffenden Busknotens (BSₙ), also auf der Seite der integrierten Schaltung, sicher zu extrahieren. Hierbei ist die Konstruktion der Takteinprägung im Vergleich zur Konstruktion der Einprägung der anderen Signale erfindungsgemäß so gewählt, dass der Takt-Sender auf Seiten des Bus-Masters (BM) alle anderen Pegelquellen, die an der Zweidrahtdatenleitung parallel aktiv sein können, überschreiben kann. In der Realität kann es daher erforderlich sein, externe größere Transistoren für die Einprägung des Taktes auf dem Zweidrahtdatenbus (b1b2b3) oder auf einem angeschlossenen Zweidrahtdatenbusabschnitt (b1, b2, b3) des Zweidrahtdatenbusses (b1b2b3) vorzusehen, um möglichst viele Busknoten (BS1, BS2, BS3) mit einem Takt versorgen zu können. Diese externen Transistoren sollten so gewählt werden, dass sie alle Busknotenstromquellen bei gleichzeitiger Aktivität derselben überschreiben können.

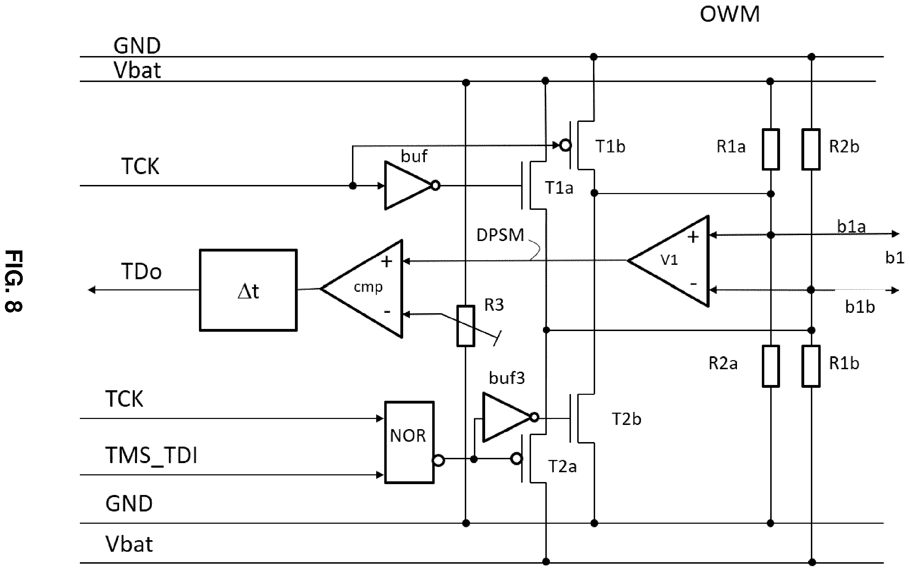

In einer besonderen Ausprägung zeichnet sich ein solches Datenbussystem dadurch aus, dass drei logische Zustände beim bidirektionalen Senden der Daten auf dem Zweidrahtdatenbus (b1b2b3) oder auf einem angeschlossenen Zweidrahtdatenbusabschnitt (b1, b2, b3) des Zweidrahtdatenbusses (b1b2b3) durch den Bus-Master (BM) und die Busknoten (BS1, BS2, BS3) verwendet werden, wobei diese logischen Zustände eine Hierarchie haben. Ein Taktzustand, hier der, in dem der Betrag des differentiellen Signalpegels (TOW) des Zweidrahtdatenbusses (b1b2b3) oder eines angeschlossenen Zweidrahtdatenbusabschnittes (b1, b2, b3) des Zweidrahtdatenbusses (b1b2b3) sich im ersten Spannungsbetragsbereich (V_{B1}) befindet, hat die höchste Priorität und kann nicht durch andere Sendeeinrichtungen, beispielsweise die der Busknoten (BS1, BS2, BS3) überschrieben werden. Hierdurch ist sichergestellt, dass der Bus-Master (BM) und die Busknoten (BS1, BS2, BS3) zumindest hinsichtlich des Basistaktes stets synchron arbeiten können. Dies ist ein wesentlicher Vorteil, beispielsweise gegenüber einem CAN-Bus, bei dem in den Busknoten eine aufwendige Taktrückgewinnung erforderlich ist. Um diesen ersten logischen Zustand, bei dem der Betrag des differentiellen Signalpegels (TOW) auf dem Zweidrahtdatenbus (b1b2b3) oder einem angeschlossenen Zweidrahtdatenbusabschnitt (b1, b2, b3) des Zweidrahtdatenbusses (b1b2b3) in den ersten Spannungsbetragsbereich (V_{B1}) gezwungen wird, herstellen zu können, weist die Master-Zweidrahtdatenbusschnittstelle (OWM) des Bus-Masters (BM) vorzugsweise einen ersten dominanten Schalter in Form eines ersten Transistors (T1a), siehe Fig. 8, für die Ansteuerung des ersten Eindrahtdatenbusses (bla, b2a, b3a, b4a) auf, der den ersten Eindrahtdatenbus (bla, b2a, b3a, b4a) des Zweidrahtdatenbusses (b1b2b3) beispielsweise gegen ein erstes Bezugspotenzial, die Versorgungsspannung (V_{bat}), in den zugehörigen Halbtaktperioden der mindestens zwei Halbtaktperioden (T_{1H}, T_{2H}) des jeweiligen Zeitschlitzes der jeweiligen Systembasistaktperiode (T) relativ niederohmig kurzschließt, siehe Fig. 8. Des Weiteren weist die Master-Zweidrahtdatenbusschnittstelle (OWM) des Bus-Masters (BM) vorzugsweise einen zweiten dominanten Schalter in Form eines ersten Transistors (T1b), siehe Fig. 8, für die Ansteuerung des zweiten Eindrahtdatenbusses (b1b, b2b, b3b, b4b) auf, der den zweiten Eindrahtdatenbus (b1b, b2b, b3b, b4b) des Zweidrahtdatenbusses (b1b2b3) beispielsweise gegen ein zweites Bezugspotenzial (GND), das vorzugsweise dem ersten Bezugspotential spannungspegelmäßig entgegengesetzt ist, in den zugehörigen Halbtaktperioden der mindestens zwei Halbtaktperioden (T_{1H}, T_{2H}) des jeweiligen Zeitschlitzes der jeweiligen Systembasistaktperiode (T) relativ niederohmig kurzschließt, siehe Fig. 8. Dieser periodische Kurzschluss des jeweiligen Eindrahtdatenbusses gegen eines der Bezugspotenziale (Leitungen V_{bat}, GND) kann dann durch andere Sender, insbesondere die der Busknoten (BS1, BS2, BS3), nicht mehr überschrieben werden, wenn deren Innenwiderstand höher ist, als der der beiden dominanten ersten Transistoren (T1a, T1b) in der Master-Zweidrahtdatenbusschnittstelle (OWM). Ein erster Spannungsteiler wird aus einem ersten Spannungsteilerwiderstand (R₁ₐ) gegen eine Spannung, beispielsweise die positive Versorgungsspannung (V_{bat}), und einen zweiten Spannungsteilerwiderstand (R₂ₐ) gegen eine andere Spannung, beispielsweise das zweite Bezugspotenzial (GND), gebildet. Ein zweiter Spannungsteiler wird aus einem weiteren ersten Spannungsteilerwiderstand (R_{1b}) gegen die besagte Spannung, beispielsweise die positive Versorgungsspannung (V_{bat}), und einen weiteren zweiten Spannungsteilerwiderstand (R_{2b}) gegen eine andere Spannung, beispielsweise das zweite Bezugspotenzial (GND), gebildet. Der erste Spannungsteiler und der zweite Spannungsteiler halten zusammen den Betrag des differentiellen Signalpegels (TOW) des Zweidrahtdatenbusses (b1b2b3) oder eines angeschlossenen Zweidrahtdatenbusabschnitts (b1, b2, b3) des Zweidrahtdatenbusses (b1b2b3) im zweiten Spannungsbetragsbereich (V_{B2}) bzw. führen diesen Betrag in diesen zweiten Spannungsbetragsbereich (V_{B2}) zurück, wenn keiner der anderen Sender (T1a, T2a, T3a, T1b, T2b, T3b) des Bus-Masters (BM) oder der Busknoten (BS1, BS2, BS3) sendet.

Um nun Daten zu übertragen wird der Betrag des differentiellen Signalpegels (TOW) dieses Zweidrahtdatenbusses (b1b2b3) oder eines angeschlossenen Zweidrahtdatenbusabschnitts (b1, b2, b3) des Zweidrahtdatenbusses (b1b2b3) aus diesem zweiten Spannungsbetragsbereich (V_{B2}) durch die Sender (T1a, T2a, T3a, T1b, T2b, T3b) des Bus-Masters (BM) und/oder der Busknoten (BS1, BS2, BS3) in den dritten Spannungsbetragsbereich (V_{B3}) gebracht, wenn ein dem logischen Datenwert des zweiten Spannungsbetragsbereichs (V_{B2}) entgegengesetzter logischer Wert übertragen werden soll. Hierzu speist die jeweilige sendende Einheit, also der Bus-Master (BM) oder der betreffende Busknoten (BS1, BS2, BS3), jeweils einen Strom in den jeweiligen Eindrahtdatenbus des Zweidrahtdatenbusses (b1b2b3) oder des betreffenden, angeschlossenen Eindrahtdatenbusabschnitts des Zweidrahtdatenbusabschnitts (b1, b2, b3) des Zweidrahtdatenbusses (b1b2b3) ein. Diese beiden eingespeisten Ströme führen zu einem geänderten Spannungsabfall über die Spannungsteilerwiderstände (R₁ₐ, R₂ₐ; R_{1b+}, R_{2b}). Bei einer geeigneten Polarität des eingespeisten Stroms wird der Betrag des differentiellen Signalpegels (TOW) auf dem Zweidrahtdatenbus (b1b2b3) oder auf einem angeschlossenen Zweidrahtdatenbusabschnitt (b1, b2, b3) des Zweidrahtdatenbusses (b1b2b3) vom zweiten Spannungsbetragsbereich(V_{B2}) in den dritten Spannungsbetragsbereich (V_{B3}) verschoben. Sollte es zu einem gleichzeitigen Senden mittels eines solchen Datenstromes, und dem gleichzeitigen Schließen der dominanten Schalter (T1a, T1b) kommen, so werden die dominanten Schalter (T1a, T1b), sofern sie erfindungsgemäß niederohmig genug ausgelegt sind, den Sendestrom des jeweiligen Senders abführen und somit den Betrag dieses differentiellen Signalpegels (TOW) und gegebenenfalls auch den durch die Spannungsteiler (R₁ₐ, R_{1b}, R₂ₐ, R_{2b}) erzeugten differentiellen Signalpegel (TOW) überschreiben. Es kommt jedoch nicht, wie im Stand der Technik, möglicherweise zu einem Kurzschluss. Insbesondere kommt es nicht zu dem aus der US-A-2007/0033465 bekannten Kurzschluss zwischen der Busknoten-Seite und dem Bus-Master-Sender. Es ist somit ein besonderes Merkmal der Vorrichtung, dass ein zweiter der drei logischen Zustände auf dem Zweidrahtdatenbus durch zwei erste schaltbare Stromquellen, die vorzugsweise durch einen zweiten Transistor (T2a) und einen weiteren zweiten Transistor (T2b) realisiert werden (siehe Fig. 8), in dem Bus-Master (BM) und/oder durch zwei zweite schaltbare Stromquellen, die vorzugsweise durch einen dritten Transistor (T3a) und einen weiteren dritten Transistor (T3b) realisiert werden (siehe Fig. 9), und nicht durch zwei Spannungsquellen erzeugt werden. Gleichzeitig wird in einer Ausprägung der Erfindung ein dritter der drei logischen Zustände auf dem Datenbus durch den bereits beschriebenen differentiellen Pull-Schaltkreis (R₁ₐ₊, R₂ₐ; R_{1b}, R_{2b}) in Form eines ersten und eines zweiten Spannungsteilers erzeugt. Natürlich sind auch andere Möglichkeiten für einen solchen differentiellen Pull-Schaltkreis denkbar. Im Prinzip handelt es sich bei dem differentiellen Pull-Schaltkreis in Form zweier Spannungsteiler (R₁ₐ₊, R₂ₐ; R_{1b}, R_{2b}) um eine differentielle Spannungsquelle aus zwei Spannungsquellen, die die beiden Eindrahtdatenleitungen der Zweidrahtdatenleitung auf eine zweite differentielle Spannung legt, die betragsmäßig innerhalb des zweiten Spannungsbetragsbereichs (V_{B2}) liegt. Dabei weist diese differentielle Spannungsquelle in jeder ihrer Spannungsquellen einen jeweiligen Innenwiderstand auf, der so groß ist, dass der mögliche jeweilige Ausgangsstrom der jeweiligen Spannungsquelle so begrenzt ist, dass die geschalteten Stromquellen (T2a, T2b) und (T3a, T3b) jeweils einen größeren Strom liefern, als diese differentiellen Pull-Schaltkreise (R₁ₐ, R₂ₐ,R_{1b}, R_{2b}) abführen können. Somit ergibt sich eine klare Hierarchie:
- Es dominiert als Erstes der Schaltzustand der dominierenden Schalter (T1a, T1b) des Bus-Masters (BM), dann folgen
- als Zweites in der Hierarchie der spannungsbestimmenden Elemente für die differentielle Spannung auf dem Zweidrahtdatenbus (b1b2b3) oder dem betreffenden, angeschlossenen Zweidrahtdatenbusabschnitt (b1, b2, b3) des Zweidrahtdatenbusses (b1b2b3) die geschalteten Stromquellen des Bus-Masters (T2a, T2b) und des betreffenden Busknotens (T3a, T3b), die typischerweise untereinander gleichberechtigt sind, und
- als Drittes und Letztes mit niedrigster Priorität der differentielle Pull-Schaltkreis, hier in Form der Spannungsteiler (R₁ₐ, R₂ₐ; R_{1b}, R_{2b}), die typischerweise nur einmal pro Zweidrahtdatenbusabschnitt vorgesehen werden.

Bevorzugt korrespondiert der erste logische Zustand mit einem ersten differentiellen Spannungsbetragspegel (-V_{IO}) im ersten Spannungsbetragsbereich (V_{B1}) auf dem Zweidrahtdatenbus (b1b2b3) oder einem angeschlossenen Zweidrahtdatenbusabschnitt (b1, b2, b3) des Zweidrahtdatenbusses (b1b2b3), der zweite logische Zustand mit einem mittleren zweiten differentiellen Spannungsbetragspegel (V_{M}) im zweiten Spannungsbetragsbereich (V_{B2}) auf dem Zweidrahtdatenbus (b1b2b3) oder einem angeschlossenen Zweidrahtdatenbusabschnitt (b1, b2, b3) des Zweidrahtdatenbusses (b1b2b3) und der dritte logische Zustand mit einem dritten differentiellen Spannungsbetragspegel (V_{IO}) im dritten Spannungsbetragsbereich (V_{B3}) auf dem Zweidrahtdatenbus (b1b2b3) oder einem angeschlossenen Zweidrahtdatenbusabschnitt (b1, b2, b3) des Zweidrahtdatenbusses (b1b2b3), siehe Fig. 3 unten.

Vorteilhafterweise wird der zweite logische Zustand zur Übertragung eines ersten logischen Zustands, beispielsweise "low", eines Datensignals benutzt und der dritte logisehe Zustand auf dem Zweidrahtdatenbus (b1b2b3) oder einem angeschlossenen Zweidrahtdatenbusabschnitt (b1, b2, b3) des Zweidrahtdatenbusses (b1b2b3) für die Übertragung eines zweiten logischen Zustands, beispielsweise "high", des Datensignals benutzt. Befindet sich die Zweidrahtdatenbusleitung im ersten logischen Zustand, so wird dieser für die Datenübertragung ignoriert.

Erfindungsgemäß wird der erste logische Zustand auf dem Zweidrahtdatenbus (b1b2b3) oder einem angeschlossenen Zweidrahtdatenbusabschnitt (b1, b2, b3) des Zweidrahtdatenbusses (b1b2b3) zur Übertragung eines ersten logischen Zustands, beispielsweise "low" eines Systemtaktsignals benutzt und der dritte oder zweite logische Zustand auf dem Zweidrahtdatenbus (b1b2b3) oder einem angeschlossenen Zweidrahtdatenbusabschnitt (b1, b2, b3) des Zweidrahtdatenbusses (b1b2b3) für die Übertragung eines zweiten logischen Zustands, beispielsweise "high" des Systemtaktsignals benutzt. Wechselt der logische Zustand auf dem Zweidrahtdatenbus (b1b2b3) oder einem angeschlossenen Zweidrahtdatenbusabschnitt (b1, b2, b3) des Zweidrahtdatenbusses (b1b2b3) zwischen dem zweiten oder dritten logischen Zustand auf dem Zweidrahtdatenbus (b1b2b3) oder einem angeschlossenen Zweidrahtdatenbusabschnitt (b1, b2, b3) des Zweidrahtdatenbusses (b1b2b3), so wird dieser Wechsel für die Übertragung des Systemtaktes ignoriert und typischerweise weiterhin als zweiter logischer Zustand, beispielsweise "high" interpretiert.

Es handelt es sich bei der offenbarten Technologie also in einer Ausprägung der Erfindung um ein differentielles Datenbussystem mit einem ersten Eindrahtdatenbus (bla, b2a, b3a, b4a) und mit einem zweiten Eindrahtdatenbus (b1b, b2b, b3b, b4b) eines Zweidrahtdatenbusses (b1b2b3) zur Übertragung von Daten zwischen einen Bus-Master (BM) und mindestens zwei Busknoten (BS1, BS2, BS3), insbesondere zu Leuchtmittel-Busknoten. Dabei sind der erste Eindrahtdatenbus (bla, b2a, b3a, b4a) und der zweite Eindrahtdatenbus (b1b, b2b, b3b, b4b) des Zweidrahtdatenbusses (b1b2b3) durch die Busknoten (BS1, BS2, BS3) in jeweils mindestens zwei Zweidrahtdatenbusabschnitte (b1, b2, b3) mit jeweils zwei Eindrahtdatenbusabschnitten der zugehörigen beiden Eindrahtdatenbusse unterteilt. Der Zweidrahtdatenbus wird durch einen Busknoten, den abschließenden Busknoten (BS3) abgeschlossen. Jeder der Busknoten (BS2, BS3) ist bis auf den ersten Busknoten (BS1) durch einen vorausgehenden Zweidrahtdatenbusabschnitt (b2, b3) der Zweidrahtdatenbusabschnitte (b1, b2, b3) aus je zwei Eindrahtdatenbusabschnitten mit einem vorausgehenden Busknoten (BS1, BS2) der Busknoten (BS1, BS2, BS3) verbunden. Der erste Busknoten (BS1) ist durch einen vorausgehenden ersten Zweidrahtdatenbusabschnitt (b1) der Zweidrahtdatenbusabschnitte (b1, b2, b3) mit dem Bus-Master (BM) verbunden. Jeder Busknoten (BS1, BS2) ist bis auf einen abschließenden Busknoten (BS3) durch einen nachfolgenden Zweidrahtdatenbusabschnitt (b2, b3) der Zweidrahtdatenbusabschnitte (b1, b2, b3) mit einem nachfolgenden Busknoten (BS2, BS3) der Busknoten (BS1, BS2, BS3) verbunden. Dies gilt nicht für den abschließenden Busknoten (BS3). Der Bus-Master (BM) ist mit einer Master-Zweidrahtdatenbusschnittstelle (OWM) versehen, wobei die Master-Zweidrahtdatenbusschnittstelle (OWM) dazu vorgesehen ist, mittels eines Datenbusprotokolls mit spannungsbetragsmäßig mehr als zwei physikalischen differentiellen Spannungs- und/oder Strompegeln bidirektional Daten über den Zweidrahtdatenbus (b1b2b3) oder zumindest einen Zweidrahtdatenbusabschnitt (b1, b2, b3) der Zweidrahtdatenbusabschnitte (b1, b2, b3), im Folgenden als betrachteter Zweidrahtdatenbusabschnitt (b1, b2, b3) bezeichnet, zu senden und von diesem zu empfangen. Der betrachtete Zweidrahtdatenbusabschnitt (b1, b2, b3) umfasst dabei jeweils nur zwei Signalleitungen, die beiden betrachteten Eindrahtdatenbusabschnitte (bna, bnb). An den betrachteten Zweidrahtdatenbusabschnitt (bn) sind eine Zweidrahtdatenbusschnittstelle (OWSn) des betrachteten Busknotens (BSn) der Busknoten (BS1, BS2, BS3), im Folgenden als betrachteter Busknoten (BSn) bezeichnet, und ein differentielles Transfer-Gate (TGn) des betrachteten Busknotens (BSn) elektrisch angeschlossen. Die Zweidrahtdatenbusschnittstelle (OWSn) des betrachteten Busknotens ist dazu vorgesehen, mittels eines Datenbusprotokolls mit mehr als zwei physikalischen differentiellen betragsmäßigen Spannungs- und/oder Strompegeln bidirektional Daten über den betrachteten Zweidrahtdatenbusabschnitt (b1, b2, b3) zu senden und von diesem zu empfangen. Das differentielle Transfer-Gate (TGn) des betrachteten Busknotens (BSn) ist dazu vorgesehen, den betrachteten Zweidrahtdatenbusabschnitt (bₙ) von einem optionalen nachfolgenden Zweidrahtdatenbusabschnitt (b₍ₙ₊₁₎) zu trennen und/oder mit diesem elektrisch zu verbinden. Der betrachtete Busknoten (BSn) verfügt jeweils über ein erstes Transfer-Gate-Control-Register (TGCRn), das dazu ausgelegt ist, das differentielle Transfer-Gate (TGn) des betrachteten Busknotens (BSn) zu steuern. Der Bus-Master (BM) kann über die Master-Zweidrahtdatenbusschnittstelle (OWM) und den Zweidrahtdatenbus (b1b2b3) oder den betrachteten Zweidrahtdatenbusabschnitt (bn) und die Zweidrahtdatenbusschnittstelle (OWSn) des betrachteten Busknotens (BSn) das differentielle Transfer-Gate-Control-Register (TGCRn) des betrachteten Busknotens (BSn) beschreiben. Somit ist der Bus-Master (BM) in der Lage, den Zustand des differentiellen Transfer-Gates (TGn) des betrachteten Busknotens (BSn) zu steuern. Ein differentielles Transfer-Gate (TGn) besteht dabei jeweils aus zwei einzelnen Transfer-Gates zur Verbindung je eines vorausgehenden Eindrahtdatenbusabschnitts (bna, bnb) des vorausgehenden Zweidrahtdatenbusabschnitts (bn) und je eines nachfolgenden Eindrahtdatenbusabschnitts (b(n+1)a, b(n+1)b) des nachfolgenden Zweidrahtdatenbusabschnitts (b(n+1)).

In einer weiteren Ausprägung weist der betrachtete Busknoten (BSn) intern mindestens eine IEEE 1149 konforme Schnittstelle, auch als JTAG- Schnittstelle bekannt, auf, die über die Zweidrahtdatenbusschnittstelle (OWSn) des betrachteten Busknotens (BSn) mit dem Zweidrahtdatenbus (b1b2b3) oder zumindest dem vorausgehenden, betrachten Zweidrahtdatenbusabschnitt (bn) verbunden ist, so dass der Bus-Master (BM) über den Zweidrahtdatenbus (b1b2b3) oder zumindest den vorausgehenden betrachteten Zweidrahtdatenbusabschnitt (bn) diese JTAG- Schnittstelle bedienen kann. Dabei ist eine JTAG-Schnittstelle im Sinne dieser Erfindung dadurch gekennzeichnet, dass sie einen Test-Controller (TAPCn) des betrachteten Busknotens (BSn) in Form eines endlichen Automaten - auch Finite-State-Machine genannt -aufweist, der ein IEEE 1149 konformes Zustandsdiagramm entsprechend Fig. 1 und der obigen zugehörigen Beschreibung besitzt.

In einer weiteren vorteilhaften Ausprägung ist ein Datenbus entsprechend dieser Erfindung dadurch gekennzeichnet, dass das jeweilige Transfer-Gate-Control-Register (TGCRn) des betrachteten Busknotens (BSn) mittels der mindestens einen JTAG-TestSchnittstelle des betrachteten Busknotens (BSn) über den Zweidrahtdatenbus (b1b2b3) oder zumindest den betrachten Zweidrahtdatenbusabschnitt (bn) durch den Bus-Master (BM) beschrieben werden kann.

In einer weiteren vorteilhaften Ausprägung ist ein Datenbussystem entsprechend dieser Erfindung dadurch gekennzeichnet, dass zumindest der betrachtete Busknoten (BSn), ein Leuchtmittel-Busknoten, dazu vorgesehen ist, ihm zugeordnete Leuchtmittel, im Folgenden als betrachtete Leuchtmittel bezeichnet, in Abhängigkeit von Daten, die über den Zweidrahtdatenbus (b1b2b3) oder den betrachteten Zweidrahtdatenbusabschnitt (bn) von dem Bus-Master (BM) zum betrachteten Busknoten (BSn) übertragen werden, anzusteuern.

In einer weiteren vorteilhaften Ausprägung ist ein erfindungsgemäßes Datenbussystem dadurch gekennzeichnet, dass die JTAG-Schnittstelle des betrachteten Busknotens (BSn) mindestens ein Beleuchtungsregister (ILR) als Datenregister (DR) der JTAG-Schnittstelle des betrachteten Busknotens (BSn) umfasst, von dessen zumindest zeitweiligem Inhalt zumindest zeitweilig die Ansteuerung der betrachteten Leuchtmittel, insbesondere in Helligkeit und/oder Farbtemperatur, durch den betrachteten Busknotens (BSn) mittels PWM-Einheiten (PWM1, PWM2, PWM3) des betrachteten Busknotens (BSn) abhängt.

In einer weiteren Ausprägung ist ein Datenbussystem entsprechend dieser Erfindung dadurch gekennzeichnet, dass die JTAG-Schnittstelle des betrachteten Busknotens (BSn) mindestens ein Beleuchtungsinstruktionsregister (ILIRn) als Datenregister (DRn) der JTAG-Schnittstelle des betrachteten Busknotens (BSn) und ein Beleuchtungsregister (ILRn) als weiteres Datenregister (DRn) der JTAG-Schnittstelle des betrachteten Busknotens (BSn) umfasst. Zumindest von Teilen des Inhalts des Beleuchtungsinstruktionsregisters (ILIRn) des betrachteten Busknotens (BSn) hängt ab, ob das Beleuchtungsregister (ILRn) des betrachteten Busknotens (BSn) über die JTAG-Schnittstelle mittels des kombinierten TMS-TDI-Signals (TMS_TDIₙ) der JTAG-Schnittstelle des betrachteten Busknotens (BSn) oder einen separaten Dateneingang (SIL-DIn) des betrachteten Busknotens (BSn) die seriellen Beleuchtungsdaten zur Steuerung der Ansteuerung der betrachteten Leuchtmittel von dem Bus-Master (BM) oder einem anderen Busknoten (BS1, BS2, BS3) erhält. Von dem zumindest zeitweiligen Inhalt des Beleuchtungsregisters (ILRn) des betrachteten Busknotens (BSn) hängt in diesem Fall zumindest zeitweilig die Ansteuerung der betrachteten Leuchtmittel durch den betrachteten Busknoten (BSn) ab.

Das differentielle Datenbussystem entsprechend dieser Erfindung ist mit einem Zweidrahtdatenbus (b1b2b3) bestehend aus einem ersten Eindrahtdatenbus (bla, b2a, b3a, b4a) und einem zweiten Eindrahtdatenbus (b1b, b2b, b3b) zur Übertragung von Daten zwischen einem Bus-Master (BM) und mindestens zwei Busknoten (BS1, BS2, BS3), insbesondere Leuchtmittel-Busknoten, versehen. Dabei wird der Zweidrahtdatenbus (b1b2b3) durch die Busknoten (BS1, BS2, BS3) in mindestens zwei Zweidrahtdatenbusabschnitte (b1, b2, b3) unterteilt. Er wird durch einen Busknoten, den abschließenden Busknoten (BS3) abgeschlossen. Jeder der Busknoten (BS2, BS3) wird bis auf einen ersten Busknoten (BS1) durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) verbunden. Der eine erste Busknoten (BS1) wird durch einen vorausgehenden ersten Zweidrahtdatenbusabschnitt (b1) der Zweidrahtdatenbusabschnitte (b1, b2, b3) mit dem Bus-Master (BM) verbunden. Jeder Busknoten (BS1, BS2) bis auf den abschließenden Busknoten (BS3) ist durch einen nachfolgenden Zweidrahtdatenbusabschnitt (b2, b3) der Zweidrahtdatenbusabschnitte (b1, b2, b3) mit einem nachfolgenden Busknoten (BS2, BS3) der Busknoten (BS1, BS2, BS3) verbunden. Das Datenbussystem verfügt über den Bus-Master (BM) mit einer Master-Zweidrahtdatenbusschnittstelle (OWM). Die Master-Zweidrahtdatenbusschnittstelle (OWM) ist dabei wie beschrieben dazu vorgesehen, mittels eines Datenbusprotokolls mit mehr als zwei physikalischen betragsmäßigen Spannungs- und/oder Strompegeln bidirektional Daten über den Zweidrahtdatenbus (b1b2b3) oder zumindest einen Zweidrahtdatenbusabschnitt (b1, b2, b3) der Zweidrahtdatenbusabschnitte (b1, b2, b3), im Folgenden als betrachteter Zweidrahtdatenbusabschnitt (bn) bezeichnet, zu senden und von diesem zu empfangen. Der betrachtete Zweidrahtdatenbusabschnitt (bn) umfasst nur zwei Signalleitungen. An den betrachteten Zweidrahtdatenbusabschnitt (bn) ist eine Zweidrahtdatenbusschnittstelle (OWSn) eines Busknotens der Busknoten (BS1, BS2, BS3), im Folgenden als betrachteter Busknoten (BSn) bezeichnet, elektrisch angeschlossen. Die Zweidrahtdatenbusschnittstelle (OWSn) des betrachteten Busknotens (BSn) ist dazu vorgesehen, mittels eines Datenbusprotokolls mit mehr als zwei physikalischen differentiellen betragsmäßigen Spannungs- und/oder Strompegeln Daten von dem betrachteten Zweidrahtdatenbusabschnitt (b1, b2, b3) zu empfangen. Der betrachtete Busknoten (BSn) umfasst ein Adressregister (BKADRn) als Datenregister (DRn) einer JTAG-Schnittstelle, das durch den Bus-Master (BM) vorzugsweise nur bei geöffnetem differentiellen Transfer-Gate (TGn) des betrachteten Busknotens (BSn) beschrieben werden kann und von dessen Inhalt und vom Inhalt des Senderegisters (SR) der JTAG-Schnittstelle des betrachteten Busknotens (BSn) abhängt, ob die Zweidrahtdatenbusschnittstelle (OWSn) des betrachteten Busknotens (BSn) Daten zu dafür vorgesehenen Zeitpunkten und/oder nach Übersendung spezifischer Daten, beispielsweise einer Sendeadresse für die Senderegister (SR) der Busknoten, durch den Bus-Master (BM) oder einen anderen Busknoten der Busknoten (BS1, BS2, BS3) auf den Zweidrahtdatenbus (b1b2b3) und/oder den betrachteten Zweidrahtdatenbusabschnitt (b1, b2, b3) Daten ausgeben darf. Die Zweidrahtdatenbusschnittstelle (OWSn) des betrachteten Busknotens (BSn) ist dazu vorgesehen, mittels eines Datenbusprotokolls mit mindestens zwei physikalischen differentiellen betragsmäßigen Spannungs- und/oder Strompegeln Daten über den betrachteten Zweidrahtdatenbusabschnitt (bn) zu senden.

In einer weiteren zweckmäßigen Ausprägung ist ein Datenbussystem entsprechend dieser Erfindung dadurch gekennzeichnet, dass der betrachtete Busknoten (BSn) intern mindestens eine IEEE 1149 konforme Schnittstelle, auch als JTAG- Schnittstelle bekannt, aufweist, die über die Zweidrahtdatenbusschnittstelle (OWSn) des betrachteten Busknotens (BSn) mit dem Zweidrahtdatenbus (b1b2b3) oder zumindest dem betrachten Zweidrahtdatenbusabschnitt (bn) verbunden ist, sodass der Bus-Master (BM) über den Zweidrahtdatenbus (b1b2b3) oder zumindest den betrachtetenn Zweidrahtdatenbusabschnitt (bn) diese JTAG- Schnittstelle bedienen kann. Dabei ist eine JTAG-Schnittstelle des betrachteten Busknotens (BSn) im Sinne dieser Erfindung dadurch gekennzeichnet, dass sie einen Test-Controller (TAPCn) in Form eines endlichen Automaten - auch Finite-State-Machine genannt -aufweist, der ein IEEE1149 konformes Zustandsdiagramm entsprechend Fig. 1 besitzt.

In einer weiteren vorteilhaften Ausprägung ist ein Datenbussystem entsprechend dieser Erfindung dadurch gekennzeichnet, dass an den betrachteten Zweidrahtdatenbusabschnitt (bn) ein differentielles Transfer-Gate (TGn) des betrachteten Busknotens (BSn) elektrisch angeschlossen ist. Das differentielle Transfer-Gate (TGn) des betrachteten Busknotens (BSn) ist dazu vorgesehen, den betrachteten Zweidrahtdatenbusabschnitt (bn) von dem optionalen nachfolgenden Zweidrahtdatenbusabschnitt (b(n+l)) zu trennen und/oder mit diesem elektrisch zu verbinden. Dabei wird jeweils der betrachtete erste Eindrahtdatenbusabschnitt (bna) des betrachteten Zweidrahtdatenbusses (bn) mit dem entsprechenden nachfolgenden ersten Eindrahtdatenbusabschnitt (b(n+1)a) des nachfolgenden Zweidrahtdatenbusses (b(n+l)) verbunden oder von diesem getrennt. Des Weiteren wird dabei jeweils der betrachtete zweite Eindrahtdatenbusabschnitt (bnb) des betrachteten Zweidrahtdatenbusses (bn) mit dem entsprechenden nachfolgenden zweiten Eindrahtdatenbusabschnitt (b(n+1)b) des nachfolgenden Zweidrahtdatenbusses (b(n+l)) verbunden oder von diesem getrennt. Der betrachtete Busknoten (BSn) verfügt über ein Transfer-Gate-Control-Register (TGCRn) als Datenregister (DRn) der JTAG-Schnittstelle des betrachteten Busknotens (BSn), das dazu ausgelegt ist, das differentielle Transfer-Gate (TGn) des betrachteten Busknotens (BSn) zu steuern. Das jeweilige Transfer-Gate-Control-Register (TGCRn) des betrachteten Busknotens (BSn) kann mittels der mindestens einen JTAG-Test-Schnittstelle des betrachteten Busknotens (BSn) über den Zweidrahtdatenbus (b1b2b3) oder zumindest den betrachteten Zweidrahtdatenbusabschnitt (bn) zumindest durch den Bus-Master (BM) beschrieben werden.

In einer weiteren vorteilhaften Ausprägung ist ein Datenbussystem entsprechend dieser Erfindung dadurch gekennzeichnet, dass zumindest der betrachtete Busknoten (BSn), ein Leuchtmittel-Busknoten, dazu vorgesehen ist, ihm zugeordnete Leuchtmittel (LMn), im Folgenden als betrachtete Leuchtmittel (LMn) bezeichnet, in Abhängigkeit von Daten, die über den Zweidrahtdatenbus (b1b2b3) oder den betrachteten Zweidrahtdatenbusabschnitt (bn) von dem Bus-Master (BM) zum betrachteten Busknoten (BSn) übertragen werden, anzusteuern.

In einer weiteren zweckmäßigen Ausprägung ist ein Datenbussystem entsprechend dieser Erfindung dadurch gekennzeichnet, dass die JTAG-Schnittstelle des betrachteten Busknotens (BSn) mindestens ein Beleuchtungsregister (ILRn) als Datenregister (DRn) der JTAG-Schnittstelle des betrachteten Busknotens (BSn) umfasst, von dessen zumindest zeitweiligem Inhalt zumindest zeitweilig die Ansteuerung der betrachteten Leuchtmittel (LMn) durch den betrachteten Busknoten (BSn) abhängt. Dies kann z.B. den Duty-Cycle, die Amplitude, die Frequenz und andere Parameter der PWM-Ansteuerung betreffen.

In einer weiteren zweckmäßigen Ausprägung ist ein Datenbussystem entsprechend dieser Erfindung dadurch gekennzeichnet, dass die JTAG-Schnittstelle des betrachteten Busknotens (BSn) mindestens ein Beleuchtungsinstruktionsregister (ILIRn) als Datenregister (DRn) der JTAG-Schnittstelle des betrachteten Busknotens (BSn) und ein Beleuchtungsregister (ILRn) als Datenregister der JTAG-Schnittstelle des betrachteten Busknotens (BSn) umfasst. Zumindest von Teilen des Inhalts des Beleuchtungsinstruktionsregisters (ILIRn) des betrachteten Busknotens (BSn) hängt ab, ob das Beleuchtungsregister (ILRn) des betrachteten Busknotens (BSn) über die Testdatenschnittstelle (TMS_TDIₙ) der JTAG-Schnittstelle des betrachteten Busknotens (BSn) oder einen separaten differentiellen Dateneingang (SILDI) des betrachteten Busknotens (BSn) die vorzugsweise seriellen Beleuchtungsdaten zur Steuerung der Ansteuerung der betrachteten Leuchtmittel von dem Bus-Master (BM) oder einem anderen Busknoten (BS1, BS2, BS3) erhält. Von dem zumindest zeitweiligem Inhalt des Beleuchtungsregisters (ILR) hängt dabei zumindest zeitweilig die Ansteuerung der betrachteten Leuchtmittel (LMn) durch den betrachteten Busknoten (BSn) ab.

Eine JTAG-Schnittstelle eines Busknotens (BS1, BS2, BS3) zur Steuerung der Ansteuerung von Leuchtmitteln (LM) durch einen Busknoten (BS1, BS2, BS3) einer Leuchtkette ist entsprechend dieser Erfindung dadurch gekennzeichnet, dass sie mindestens ein Beleuchtungsregister (ILR) als Datenregister (DR) dieser JTAG-Schnittstelle umfasst, von dessen zumindest zeitweiligem Inhalt zumindest zeitweilig die Ansteuerung der Leuchtmittel (LM) durch den jeweiligen Busknoten (BS1, BS2, BS3) abhängt. Wie zuvor ist eine JTAG-Schnittstelle dadurch gekennzeichnet, dass ihr Test-Controller (TAPC) ein Zustandsdiagramm entsprechend dem IEEE 1149 Standard (siehe auch Fig. 1) und insbesondere einem oder mehreren dessen Unterstandards IEEE 1149.1 bis IEEE 1149.8 und deren Weiterentwicklungen umfasst. Diese Definition des Kennzeichens einer JTAG-Schnittstelle gilt für das ganze Dokument dieser Erfindung.

Ein Verfahren entsprechend dieser Erfindung zur Ansteuerung eines Leuchtmittels (LMn) mittels einer elektrischen Regelvorrichtung innerhalb eines betreffenden Busknotens (BSn) von mehreren Busknoten (BS1, BS2, BS3) umfasst danach folgende Schritte:
Übertragung von Steuerdaten für die Einstellung von Leuchtwerten für mindestens ein Leuchtmittel durch Ansteuerung eines JTAG-Controllers (TAPCn) einer JTAG-Schnittstelle innerhalb des betrachteten Busknotens (BSₙ), der mindestens ein Leuchtmittel (LMn) mit steuerbarer elektrischer Energie in Abhängigkeit von diesen Steuerdaten versorgt. Dabei ist die JTAG-Schnittstelle des betrachteten Busknotens (BSn) wieder - wie in der gesamten Anmeldung - dadurch gekennzeichnet, dass der Test-Controller (TAPCn) des betrachteten Busknotens (BSn) ein Zustandsdiagramm entsprechend dem IEEE 1149-Standard und/oder insbesondere einem oder mehreren der Unterstandards IEEE 1149.1 bis IEEE 1149.8 und deren Weiterentwicklungen umfasst.

Eine JTAG-Schnittstelle entsprechend dieser Erfindung zur Steuerung der Ansteuervorrichtung für Leuchtmittel durch einen Busknoten (BSn) einer Leuchtkette kann auch dadurch gekennzeichnet sein, dass sie mindestens ein Beleuchtungskontrollregister (ILCR) als Datenregister der JTAG-Schnittstelle und ein Beleuchtungsregister (ILRn) als Datenregister der JTAG-Schnittstelle umfasst. Zumindest von Teilen des Inhalts des Beleuchtungskontrollregisters (ILCR) hängt dann erfindungsgemäß ab, ob das Beleuchtungsregister (ILRn) über die Testdatenschnittstelle (TMS_TDIₙ) der JTAG-Schnittstelle oder über einen separaten Dateneingang (SILDI) Daten erhält. Diese Register können auch Teilregister des Instruktionsregisters (IRn) des betrachteten Busknotens (BSn) oder eines anderen Datenregisters (DRn) der JTAG-Schnittstelle des betrachteten Busknotens (BSn) sein. Die separate Realisierung ist aber in der Regel vorzuziehen. Von dem zumindest zeitweiligen Inhalt des Beleuchtungsregisters (ILRn) des betrachteten Busknotens (BSn) hängt dann zumindest zeitweilig die Ansteuerung der Leuchtmittel (LMn) durch den betrachteten Busknoten (BSn) ab. Dabei ist wie zuvor wieder die JTAG-Schnittstelle des betrachteten Busknotens (BSn) dadurch gekennzeichnet, dass sie einen Test-Controller (TAPCn) umfasst, der ein Zustandsdiagramm entsprechend dem IEEE 1149 Standard und insbesondere einem oder mehreren der Unterstandards IEEE 1149.1 bis IEEE 1149.8 und deren Weiterentwicklungen aufweist.

Ein differentieller Datenbus entsprechend dieser Erfindung zwischen einer ersten Teilvorrichtung, dem Bus-Master (BM), und mindestens zwei weiteren Teilvorrichtungen, den Busknoten (BS1, BS2, BS3), weist einen Zweidrahtdatenbus (b1b2b3) auf, der aus einem ersten Eindrahtdatenbus (bla, b2a, b3a) und einem zweiten Eindrahtdatenbus (b1b, b2b, b3b) besteht. Er dient der Datenübertragung und zur Systemtaktübertragung zwischen dem Bus-Master (BM) und den Busknoten (BS1, BS2, BS3). Der Zweidrahtdatenbus (b1b2b3) wird durch die Busknoten (BS1, BS2, BS3) in mindestens zwei Zweidrahtdatenbusabschnitte (b1, b2, b3) unterteilt. Jeder dieser Busknoten (BS2, BS3) ist bis auf einen ersten Busknoten (BS1) über einen vorausgehenden Zweidrahtdatenbusabschnitt (b2, b3) mit einem vorausgehenden Busknoten (BS1, BS2) der Busknoten (B1, B2, B3) verbunden. Der erste Busknoten (BS1) ist über einen vorausgehenden ersten Zweidrahtdatenbusabschnitt (b1) mit dem Bus-Master (BM) verbunden. Jeder dieser Busknoten (BS1, BS2) ist bis auf einen abschließenden Busknoten (BS3) über einen nachfolgenden Zweidrahtdatenbusabschnitt (b2, b3) mit einem nachfolgenden Busknoten (BS2, BS3) verbunden. Dies gilt, wenn der Busknoten nicht der letzte Busknoten (B3) der Kette der Busknoten (BS1, BS2, BS3) vom Bus-Master (BM) aus in der Folge der Busknoten (BS1, BS2, BS3) ist. Über den Zweidrahtdatenbus (b1b2b3) oder zumindest über einen Zweidrahtdatenbusabschnitt (b1, b2, b3) der Zweidrahtdatenbusabschnitte (b1, b2, b3), im Folgenden betrachteter Zweidrahtdatenbusabschnitt (bn) genannt, werden bidirektional Daten zwischen dem Bus-Master (BM) und einem Busknoten der Busknoten (BS1 BS2, BS3), im Folgenden betrachteter Busknoten (BSn) genannt, übertragen oder können übertragen werden. Über den Zweidrahtdatenbus (b1b2b3) oder zumindest über den betrachteten Zweidrahtdatenbusabschnitt (bn) wird ein Systemtakt mit einer Systemtaktperiode (T/3), die in mindestens eine erste Halbtaktperiode (T_{1H}) und eine zweite Halbtaktperiode (T_{2H}) unterteilt ist, die eine unterschiedliche zeitliche Dauer haben können, vom Bus-Master (BM) zu dem betrachteten Busknoten (BSn) zusätzlich übertragen. Mindestens der betrachtete Busknoten (BSn) verfügt über eine erste Einrichtung, insbesondere einen dritten Komparator (cmp3), der den Betrag des differentiellen Signalpegels (TOW) auf dem Zweidrahtdatenbus (b1b2b3) in Form des Betrags einer Signalspannungsdifferenz zwischen dem Potenzial des ersten Eindrahtdatenbusabschnitts (bna) des betrachteten Zweidrahtdatenbusabschnitts (bn) und dem Potenzial des zweiten Eindrahtdatenbusabschnitts (bnb) des betrachteten Zweidrahtdatenbusabschnitts (bn) mit dem Wert eines dritten Schwellwerts, insbesondere dem Potential eines dritten Schwellwertsignals, dem dritten Schwellwert (V_{2H}), vergleicht. Der betrachtete Busknoten (BSn) verfügt über eine zweite Einrichtung, insbesondere einen zweiten Komparator (cmp2), der den Betrag des besagten differentiellen Signalpegels (TOW) zugleich mit dem Wert eines zweiten Schwellwerts, insbesondere dem Spannungspegel eines zweiten Schwellwertsignals (V_{2L}), vergleicht. Der dritte Schwellwert (V_{2H}) ist dabei vom zweiten Schwellwert (V_{2L}) verschieden. Der zweite und dritte Schwellwert (V_{2L}, V_{2H}) definieren dabei drei Signalspannungsbetragsbereiche (V_{B1}, V_{B2}, V_{B3}) für den Spannungsbetrag des differentiellen Signalpegels (TOW) auf dem Zweidrahtdatenbus (b1b2b3). Dabei wird ein mittlerer Spannungsbetragsbereich als zweiter Spannungsbetragsbereich (V_{B2}) von einem ersten Spannungsbetragsbereich (V_{B1}) nach unten hin begrenzt. Der zweite Spannungsbetragsbereich (V_{B2}) wird nach oben hin aber andersherum als beim ersten Spannungsbetragsbereich(V_{B1}) durch einen dritten Spannungsbetragsbereich (V_{B3}) begrenzt. Dabei werden Daten auf dem betrachteten Zweidrahtdatenbusabschnitt (bn) in zeitlich beabstandeten oder aufeinander folgenden Zeitschlitzpaketen mit jeweils einer Dauer einer Systemtaktperiode (T/3) mit zumindest drei aufeinander folgenden Zeitschlitzen (TINO, TIN1, TDO_{Z}) übertragen. Ein erster Zeitschlitz (TINO) und ein zweiter Zeitschlitz (TIN1) enthalten zumindest ein Kontrolldatum und/oder ein erstes Datum, das jeweils vom Bus-Master (BM) zum betrachteten Busknoten (BS1, BS2, BS3) übertragen wird, wobei das Kontrolldatum und das erste Datum insbesondere mit den Daten des IEEE 1149.1 4 Draht-Testdatenbusses oder zu einem anderen Unterstandard des IEEE 1149 Standards kompatibel sein können, und wobei der betrachtete Busknoten (BSn) das Kontrolldatum und das erste Datum vom Bus-Master (BM) empfängt. Ein dritter Zeitschlitz (TDO_{Z}) enthält ein zweites Datum, das der betrachtete Busknoten (BSn) zum Bus-Master (BM) überträgt, wobei der Bus-Master (BM) dieses zweite Datum vom betrachteten Busknoten (BSn) empfängt und wobei das zweite Datum nur im zweiten Spannungsbetragsbereich (V_{B2}) und dritten Spannungsbetragsbereich (V_{B3}) übertragen wird. Die Übertragung der Daten erfolgt in einer Halbtaktperiode der mindestens zwei Halbtaktperioden (T_{1H}, T2_{H}) eines Zeitschlitzes einer Systembasistaktperiode (T). Der Systemtakt wird durch ein Taktsignal im ersten Spannungsbetragsbereich (V_{B1}) während der jeweils anderen Halbtaktperiode der mindestens zwei Halbtaktperioden (T_{1H}, T_{2H}) des Zeitschlitzes der Systembasistaktperiode (T) übertragen.

In einer anderen vorteilhaften Ausprägung der Erfindung zeichnet sich der zwischen einer ersten Teilvorrichtung, dem Bus-Master (BM), und mindestens zwei Teilvorrichtungen, den Busknoten (BS1, BS2, BS3), angeordnete erfindungsgemäße Zweidrahtdatenbus dadurch aus, dass mindestens drei logische Zustände beim bidirektionalen Senden der Daten auf dem Zweidrahtdatenbus (b1b2b3) oder zumindest dem betrachteten Zweidrahtdatenbusabschnitt (b1, b2, b3) durch den Bus-Master (BM) und die Busknoten (BS1, BS2, BS3) verwendet werden.

In einer weiteren zweckmäßigen Ausprägung der Erfindung zeichnet sich der Datenbus zwischen einer ersten Teilvorrichtung, dem Bus-Master (BM), und weiteren mindestens zwei Teilvorrichtungen, den Busknoten (BS1, BS2, BS3), dadurch aus, dass ein erster der mindestens drei logischen Zustände auf dem Zweidrahtdatenbus (b1b2b3) oder zumindest dem betrachteten Zweidrahtdatenbusabschnitt (b1, b2, b3) durch erste dominante Schalter (T1a, T1b) des Bus-Masters (BM) erzeugt wird, der den Betrag der Potenzialdifferenz zwischen dem ersten Eindrahtdatenbus (bla, b2a, b3a) und dem zweiten Eindrahtdatenbus (b1b, b2b, b3b) oder zumindest zwischen dem ersten betrachteten Eindrahtdatenbusabschnitt (bna) und dem zweiten betrachteten Eindrahtdatenbusabschnitt (bnb) in den ersten Spannungsbetragsbereich (V_{B1}) zwingt.

In einer zweckmäßigen Ausprägung zeichnet sich der Datenbus entsprechend dieser Erfindung zwischen einer ersten Teilvorrichtung, dem Bus-Master (BM) und weiteren mindestens zwei Teilvorrichtungen, den Busknoten (BS1, BS2, BS3) dadurch aus, dass ein zweiter der mindestens drei logischen Zustände auf dem Zweidrahtdatenbus (b1b2b3) oder zumindest dem betrachteten Zweidrahtdatenbusabschnitt (b1, b2, b3) durch Einschalten einer ersten schaltbaren Stromquelle (T2a, T2b) in dem Bus-Master (BM) und/oder durch Einschalten einer zweiten schaltbaren Stromquelle (T3a, T3b) in dem Busknoten (BS1, BS2, BS3) erzeugt wird, siehe Fign. 8 und 9.

In einer anderen vorteilhaften Ausprägung der Erfindung zeichnet sich der zwischen einer ersten Teilvorrichtung, dem Bus-Master (BM), und mindestens zwei Teilvorrichtungen, den Busknoten (BS1, BS2, BS3), angeordnete erfindungsgemäße Datenbus dadurch aus, dass das Einschalten der ersten schaltbaren Stromquelle (T2a, T2b) in dem Bus-Master (BM) und/oder das Einschalten der zweiten schaltbaren Stromquelle (T3a, T3b) in einem der Busknoten (BS1, BS2, BS3) den Betrag der Potenzialdifferenz - also den Betrag des differentiellen Signalpegels (TOW) - auf dem Zweidrahtdatenbus (b1b2b3) oder zumindest dem betrachteten Zweidrahtdatenbusabschnitt (bn) auf einen Betrag im dritten Spannungsbetragsbereich (V_{B3}) zwingt, sofern die ersten dominanten Schalter (T1a, T1b) des Bus-Masters (BM) nicht eingeschaltet sind, die den Betrag des differentiellen Signalpegels (TOW) auf dem Zweidrahtdatenbus oder zumindest auf dem betrachteten Zweidrahtdatenbusabschnitt (bn) bei Einschalten in den ersten Spannungsbetragsbereich zwingt und die schaltbaren Stromquellen (T2a, T2b, T3a, T3b) überschreibt.

In einer anderen vorteilhaften Ausprägung zeichnet sich der Datenbus entsprechend dieser Erfindung zwischen einer ersten Teilvorrichtung, dem Bus-Master (BM) und mindestens zwei weiteren Teilvorrichtungen, den Busknoten (BS1, BS2, BS3), angeordnete erfindungsgemäße Datenbus dadurch aus, dass ein dritter der mindestens drei logischen Zustände auf dem Zweidrahtdatenbus (b1, b3, b3) oder zumindest dem betrachteten Zweidrahtdatenbusabschnitt (bn) durch einen differentiellen Pull-Schaltkreis (R₁ₐ, R₂ₐ; R_{1b}, R_{2b}) erzeugt wird, wenn keiner der anderen logischen Zustände vorliegt, indem der differentielle Pull-Schaltkreis (R₁ₐ, R_{1b}, R₂ₐ, R_{2b}) den Betrag des differentiellen Signalpegels (TOW) des Zweidrahtdatenbusses oder zumindest des betrachteten Zweidrahtdatenbusabschnitts (bn) auf einen zweiten differentiellen Spannungsbetragspegel (V_{M}) im zweiten Spannungsbetragsbereich (V_{B2}) bringt.

In einer anderen vorteilhaften Ausprägung der Erfindung zeichnet sich der zwischen einer ersten Teilvorrichtung, dem Bus-Master (BM), und mindestens zwei weiteren Teilvorrichtungen, den Busknoten (BS1, BS2, BS3) angeordnete erfindungsgemäße Datenbus dadurch aus, dass ein oder mehrere Wechsel von einem zweiten oder einem dritten logischen Zustand auf dem Zweidrahtdatenbus (b1, b3, b3) oder zumindest auf dem betrachteten Zweidrahtdatenbusabschnitt (bn) einerseits zu einem ersten logischen Zustand auf dem Zweidrahtdatenbus (b1, b3, b3) oder zumindest dem betrachteten Zweidrahtdatenbusabschnitt (bn) andererseits und ein oder mehrere Wechsel in die umgekehrte Richtung zur Übertragung eines Taktsignals benutzt werden.

In einer anderen vorteilhaften Ausprägung der Erfindung zeichnet sich der zwischen einer ersten Teilvorrichtung, dem Bus-Master (BM), und mindestens zwei weiteren Teilvorrichtungen, den Busknoten (BS1, BS2, BS3) angeordnete erfindungsgemäße Datenbus dadurch aus, dass ein oder mehrere Wechsel von einem zweiten logischen Zustand auf dem Zweidrahtdatenbus (b1, b2, b3) oder zumindest dem betrachteten Zweidrahtdatenbusabschnitt (bn) einerseits zu einem dritten logischen Zustand auf dem Zweidrahtdatenbus (b1, b2, b3) oder zumindest dem betrachteten Zweidrahtdatenbusabschnitt (bn) andererseits über einen ersten logischen Zustand auf dem Zweidrahtdatenbus (b1, b2, b3) und ein oder mehrere Wechsel in die umgekehrte Richtung zur Übertragung eines Datensignals vom Bus-Master (BM) zum betrachteten Busknoten und/oder von dem betrachteten Busknoten zum Bus-Master (BM) benutzt werden.

In einer anderen zweckmäßigen Ausprägung der Erfindung zeichnet sich der zwischen einer ersten Teilvorrichtung, dem Bus-Master (BM) und mindestens zwei weiteren Teilvorrichtungen, den Busknoten (BS1, BS2, BS3) angeordnete erfindungsgemäße Datenbus dadurch aus, dass die Daten in einer Halbtaktperiode der mindestens zwei Halbtaktperioden (T_{1H}, T_{2H}) eines Zeitschlitzes übertragen werden und der Systemtakt in einer anderen Halbtaktperiode der mindestens zwei Halbtaktperioden (T_{1H}, T_{2H}) eines Zeitschlitzes übertragen wird, wobei ein Zeitschlitzpaket eine Länge einer Systembasistaktperiode (T) mit mindestens drei mal zwei Halbtaktperioden (T_{1H}, T_{2H}) aufweist.

Ein Datenbus entsprechend dieser Erfindung erstreckt sich zwischen einer ersten Teilvorrichtung, dem Bus-Master (BM), und mindestens zwei weiteren Teilvorrichtungen, den Busknoten (BS1, BS2, BS3), wobei der Datenbus einen Zweidrahtdatenbus (b1b2b3) mit zwei Datenleitungen aufweist, der durch die Busknoten (BS1, BS2, BS3) in mehrere paarweise Eindrahtdatenbusabschnitte (b1a, b1b; b2a, b2b; b3a, b3b) unterteilt wird und durch einen letzten Busknoten (BS3) der Busknoten (BS1, BS2, BS3), den abschließenden Busknoten (BS3), abgeschlossen wird. Der Datenbus kann dabei auch wie folgt gekennzeichnet werden: Der Bus-Master (BM) weist eine Master-Zweidrahtdatenbusschnittstelle (OWM) auf. Die Master-Zweidrahtdatenbusschnittstelle (OWM) weist weiter eine erste differentielle schaltbare Spannungsquelle (T1a, T1b) mit einem ersten Innenwiderstand auf, die den Zweidrahtdatenbus (b1b2b3) oder zumindest einen Zweidrahtdatenbusabschnitt (b1, b2, b3), im Folgenden betrachteter Zweidrahtdatenbusabschnitt (bn) genannt, mit einem Paar von Versorgungsleitungen (V_{bat}, GND) verbinden kann. Die Master-Zweidrahtdatenbusschnittstelle (OWM) weist eine zweite schaltbare differentielle Spannungsquelle (T2a, T2b) mit einem zweiten Innenwiderstand auf, die zumindest den betrachteten Zweidrahtdatenbusabschnitt (bn) des Zweidrahtdatenbusses (b1b2b3) oder den Zweidrahtdatenbus (b1b2b3) auf eine betragsmäßig zweite Potenzialdifferenz bringen kann, wobei die zweite schaltbare differentielle Spannungsquelle auch eine korrespondierende Stromquelle mit einem zweiten Innenwiderstand und dem korrespondierenden Stromwert sein kann. Zumindest einer der Busknoten (BS1, BS2, BS3), im Folgenden als betrachteter Busknoten (BSn) bezeichnet, weist eine Zweidrahtdatenbusschnittstelle (OWSn), im Folgenden mit betrachteter Zweidrahtdatenbusschnittstelle (OWSn) bezeichnet, auf. Zumindest diese betrachtete Zweidrahtdatenbusschnittstelle (OWSn) des betrachteten Busknotens (BSn) weist eine dritte schaltbare differentielle Spannungsquelle (T3a, T3b) mit einem dritten Innenwiderstand auf, die zumindest den betrachteten Zweidrahtdatenbusabschnitt (bn) des Zweidrahtdatenbusses (b1b2b3) oder den Zweidrahtdatenbus (b1b2b3) auf eine betragsmäßig dritte Potenzialdifferenz bringen kann, die vorzugsweise betragsmäßig gleich der zweiten Potenzialdifferenz ist und wobei die dritte schaltbare differentielle Spannungsquelle auch eine Stromquelle mit einem dritten korrespondierenden Innenwiderstand und dem zugehörigen Stromwert sein kann. Die Umrechnung der Werte realer Spannungsquellen in Werte realer Stromquellen ist dem Fachmann geläufig. Zumindest der betrachtete Zweidrahtdatenbusabschnitt (bn) des Zweidrahtdatenbusses (b1b2b3) oder der Zweidrahtdatenbus (b1b2b3) wird durch eine vierte differentielle Spannungsquelle, insbesondere einen differentiellen Pull-Schaltkreis (R₁ₐ, R₂ₐ; R_{1b}, R_{2b} ) auf einem betragsmäßigen differentiellen Signalpegel (TOW) zwischen einem dritten differentiellen Spannungsbetragspegel (V_{IO}), der vorzugsweise gleich dem vierten und fünften Spannungsbetrag (V_{IO1}, V_{IO2}) ist, und dem ersten differentiellen Spannungsbetragspegel (-V_{IO}), mit einem vierten Innenwiderstand - in einem mittleren zweiten differentiellen Spannungsbetragspegel (V_{M}) gehalten. Der Spannungsbetragswert in diesem mittleren zweiten differentiellen Spannungsbetragspegel (V_{M}) liegt dabei zwischen dem Wert des ersten differentiellen Spannungsbetragspegels (-V_{IO}) und dem Wert des vierten Spannungsbetrags (V_{IQ1}) und/oder zwischen dem Wert des ersten differentiellen Spannungsbetragspegels (-V_{IO}) und dem Wert des fünften Spannungsbetrags (V_{IO2}). Der erste Innenwiderstand ist dabei kleiner als die anderen Innenwiderstände. Der vierte Innenwiderstand ist größer als die anderen Innenwiderstände.

Entsprechend lässt sich ein erfindungsgemäßes Verfahren zum Betreiben eines Datenbusses zwischen einer ersten Teilvorrichtung, dem Bus-Master (BM), und mindestens zwei weiteren Teilvorrichtungen, den Busknoten (BS1, BS2, BS3) formulieren. Dabei weist der Datenbus einen Zweidrahtdatenbus (b1b2b3) auf, der durch die mindestens zwei Busknoten (BS1, BS2, BS3) in mindestens zwei Zweidrahtdatenbusabschnitte (b1, b2, b3) unterteilt wird und durch mindestens einen Busknoten (BS3) der Busknoten (BS1, BS2, BS3), den abschließenden Busknoten (BS3), abgeschlossen wird. Das Verfahren umfasst die Schritte: Als ersten Schritt eine bidirektionale Übertragung von Daten über den Zweidrahtdatenbus (b1b2b3) oder zumindest einen Zweidrahtdatenbusabschnitt (b1, b2, b3) der Zweidrahtdatenbusabschnitte (b1, b2, b3), im Folgenden betrachteter Zweidrahtdatenbusabschnitt genannt, zwischen dem Bus-Master (BM) und mindestens einem Busknoten (BS1, BS2, BS3), im Folgenden betrachteter Busknoten (BSn) genannt; Als zweiten Schritt die gleichzeitige Übertragung eines Taktsignals über den Zweidrahtdatenbus (b1b2b3) oder zumindest den besagten Zweidrahtdatenbusabschnitt (b1, b2, b3) vom Bus-Master (BM) zu zumindest dem betrachteten Busknoten (BSn) mit einer Systemtaktperiode (T/3) in vorzugsweise drei aufeinanderfolgenden Zeitschlitzen eines Zeitschlitzpaketes, wobei die Zeitschlitze in mindestens eine erste Halbtaktperiode (T_{1H}) und eine zweite Halbtaktperiode (T_{2H}) unterteilt sind; Als dritter Schritt folgt das Vergleichen des differentiellen Signalpegels (TOW) auf dem Zweidrahtdatenbus (b1b2b3) oder zumindest dem betrachteten Zweidrahtdatenbusabschnitt (b1, b2, b3) in Form einer differentiellen Signalspannung als differentieller Signalpegel (TOW) auf dem Zweidrahtdatenbus (b1b2b3) oder zumindest auf dem betrachteten Zweidrahtdatenbusabschnitt (bn) mit einem dritten Schwellwert, insbesondere dem eines dritten Schwellwertsignals (V_{2H}), durch eine dritte Einrichtung des betrachteten Busknotens (BS1, BS2, BS3), insbesondere einen dritten Komparator (cmp3); Als vierter Schritt folgt das Vergleichen des differentiellen Signalpegels (TOW) auf dem Zweidrahtdatenbus (b1b2b3) oder zumindest dem betrachteten Zweidrahtdatenbusabschnitt (bn) in Form einer differentiellen Signalspannung auf dem Zweidrahtdatenbus (b1b2b3) oder zumindest den betrachteten Zweidrahtdatenbusabschnitt (bn) mit einem zweiten, vom dritten Schwellwert (V_{2H}) verschiedenen Schwellwert (V_{2L}), insbesondere dem eines zweiten Schwellwertsignals (V_{2L}), durch eine zweite Einrichtung des betrachteten Busknotens (BS1, BS2, BS3), insbesondere einen zweiten Komparator (cmp2). Dabei definieren der dritte und zweite Schwellwert (V_{2L}, V_{2H}) drei Signalspannungsbetragsbereiche (V_{B1}, V_{B2}, V_{B3}). Ein mittlerer Spannungsbetragsbereich wird dabei als zweiter Spannungsbetragsbereich (V_{B2}) von einem ersten Spannungsbetragsbereich (V_{B1}) nach oben oder unten hin begrenzt. Der zweite Spannungsbetragsbereich (V_{B2}) wird dabei nach unten oder oben hin, aber andersherum als beim ersten Spannungsbetragsbereich (V_{B1}), durch einen dritten Spannungsbetragsbereich (V_{B3}) begrenzt; Als fünfter Schritt folgt die Übertragung der Daten auf dem Zweidrahtdatenbus (b1b2b3) oder zumindest dem betrachteten Zweidrahtdatenbusabschnitt (bn) in Zeitschlitzpaketen mit jeweils einer Dauer einer Systembasistaktperiode (T) mit zumindest drei aufeinander folgenden Zeitschlitzen (TINO, TIN1, TDO_{Z}), wobei die Reihenfolge der Zeitschlitze (TINO, TIN1, TDO_{Z}) innerhalb der Folge dieser mindestens drei Zeitschlitze (TINO, TIN1, TDO_{Z}) systemspezifisch gewählt werden kann; Als sechster Schritt folgt das Übertragen zumindest eines Kontrolldatums und/oder eines ersten Datums in einem ersten Zeitschlitz (TINO) und in einen zweiten Zeitschlitz (TIN1) vom Bus-Master (BM) zum betrachteten Busknoten (BS1, BS2, BS3), wobei das Kontrolldatum und das erste Datum insbesondere mit den Daten des IEEE 1149 Standards kompatibel sein können und wobei der betrachte Busknoten (BS1, BS2, BS3) das Kontrolldatum und das erste Datum empfängt; Das Übertragen eines Kontrolldatums und/oder eines ersten Datums erfolgt dabei in einer Halbtaktperiode der mindestens zwei Halbtaktperioden (T_{1H}, T_{2H}) des betreffenden Zeitschlitzes der Systembasistaktperiode (T) des betreffenden Zeitschlitzes, im zweiten Spannungsbetragsbereich (V_{B2}) und dritten Spannungsbetragsbereich (V_{B3}) auf dem Zweidrahtdatenbus (b1b2b3) oder zumindest dem betrachteten Zweidrahtdatenbusabschnitt (b1, b2, b3) vom Bus-Master (BM) zum betrachteten Busknoten (BS1, BS2, BS3) in dem ersten und/oder zweiten Zeitschlitz (TINO, TIN1) der mindestens drei aufeinanderfolgenden Zeitschlitze (TINO, TIN1, TDO_{Z}), wobei der betrachtete Busknoten (BS1, BS2, BS3) das Kontrolldatum und das erste Datum empfängt und wobei die Übertragung der Daten durch einen oder mehrere Wechsel des Betrags des differentiellen Signalpegels (TOW) auf dem Zweidrahtdatenbus (b1b2b3) oder zumindest dem betrachteten Zweidrahtdatenbusabschnitt (b1, b2, b3) zwischen dem zweiten Spannungsbetragsbereich (V_{B2}) auf der einen Seite und dem dritten Spannungsbetragsbereich (V_{B3}) auf der anderen Seite über den ersten Spannungsbereich (V_{B1}) und einen oder mehrere Wechsel in die Gegenrichtung erfolgt.

Als siebter Schritt folgt das Übertragen eines zweiten Datums in einer Halbtaktperiode der mindestens zwei Halbtaktperioden (T_{1H}, T_{2H}) des betreffenden Zeitschlitzes der Systembasistaktperiode (T) im zweiten Spannungsbetragsbereich (V_{B2}) und im dritten Spannungsbetragsbereich (V_{B3}) auf dem Zweidrahtdatenbus (b1b2b3) oder zumindest dem betrachteten Zweidrahtdatenbusabschnitt (bn) vom betrachteten Busknoten (BS1, BS2, BS3) zum Bus-Master (BM) in einem dritten Zeitschlitz (TDO_{Z}) der mindestens drei aufeinanderfolgenden Zeitschlitze (TINO, TIN1, TDO_{Z}), wobei der Bus-Master (BM) dieses zweite Datum empfängt.

Als achter Schritt folgt das Übertragen eines Systemtaktes in der jeweils anderen Halbtaktperiode der mindestens zwei Halbtaktperioden (T_{1H}, T_{2H}) des betreffenden Zeitschlitzes der Systembasistaktperiode (T), typischerweise in jedem der mindestens drei Zeitschlitze (TINO, TIN1, TDO_{Z}), wobei in dieser Halbtaktperiode keine Daten gesendet werden und wobei die Übertragung des Systemtaktes in dem betreffenden Zeitschlitz durch einen oder mehrere Wechsel des Betrags des differentiellen Signalpegels (TOW) auf dem Zweidrahtdatenbus (b1b2b3) oder zumindest dem betreffenden Zweidrahtdatenbusabschnitt (bn) zwischen dem ersten Spannungsbetragsbereich (V_{B1}) einerseits und dem zweiten Spannungsbetragsbereich (V_{B2}) und/oder dritten Spannungsbetragsbereich (V_{B3}) andererseits oder durch einen oder mehrere Wechsel in die Gegenrichtung erfolgt.

Eine Variante dieses Verfahrens zeichnet sich dadurch aus, dass drei logische Zustände beim bidirektionalen Senden der Daten auf dem Zweidrahtdatenbus (b1b2b3) oder zumindest dem betreffenden Zweidrahtdatenbusabschnitt (b1, b2, b3) durch den Bus-Master (BM) und den betrachteten Busknoten verwendet werden, wobei jeder logische Zustand einem, typischerweise genau einem, Spannungsbetragsbereich (V_{B1}, V_{B2}, V_{B3}) des Betrags des differentiellen Signalpegels (TOW) des Zweidrahtdatenbusses (b1b2b3) oder zumindest des betrachteten Zweidrahtdatenbusabschnitts (bn) zugeordnet ist.

Eine weitere Variante dieses Verfahrens zeichnet sich aus durch ein zeitweises Schließen der dominanten differentiellen Schalter (T1a, T1b) des Bus-Masters (BM), die auch jeweils ein MOS-Transistor oder anderer Halbleiterschalter sein können, zur zeitweisen Erzeugung eines ersten der drei logischen Zustände auf dem Zweidrahtdatenbus (b1b2b3) oder zumindest dem betrachteten Zweidrahtdatenbusabschnitt (bn), wobei der Betrag des differentiellen Signalpegels (TOW) des Zweidrahtdatenbusses (b1, b2, b3) oder zumindest des betrachteten Zweidrahtdatenbusabschnitts (bn) in den ersten Spannungsbetragsbereich (V_{B1}) gezwungen wird.

Eine weitere Variante dieses Verfahrens zeichnet sich durch ein zeitweises Einschalten einer ersten schaltbaren Stromquelle (T2a, T2b) in dem Bus-Master (BM) und/oder durch zeitweises Einschalten einer zweiten schaltbaren Stromquelle (T3a, T3b) in dem betrachteten Busknoten (BSn) zur Erzeugung eines dritten der drei logischen Zustände auf dem Zweidrahtdatenbus (b1b2b3) oder zumindest dem betrachteten Zweidrahtdatenbusabschnitt (b1, b2, b3) aus.

Eine weitere Variante dieses Verfahren zeichnet sich dadurch aus, dass das Einschalten der ersten schaltbaren Stromquelle (I₁, S_{1H}) in dem Bus-Master (BM) und/oder das Einschalten der zweiten schaltbaren Stromquelle (I₂, S_{2H}) in dem betrachteten Busknoten das Potenzial auf dem Eindrahtdatenbus (b1,b2,b3) oder zumindest dem betrachteten Eindrahtdatenbusabschnitt (b1,b2,b3) auf ein drittes Potenzial zwingt, sofern der erste dominante Schalter (S_{1L}) des Bus-Masters (BM) nicht eingeschaltet ist.

Eine weitere Variante dieses Verfahrens zeichnet sich durch das Erzeugen eines zweiten der drei logischen Zustände auf dem Zweidrahtdatenbus (b1b2b3) oder zumindest dem betrachteten Zweidrahtdatenbusabschnitt (bn), insbesondere durch einen differentiellen Pull-Schaltkreis (R1a, R2a; R1b, R2b) aus, wenn keiner der anderen logischen Zustände auf dem Zweidrahtdatenbus (b1b2b3) oder zumindest dem betrachteten Zweidrahtdatenbusabschnitt (bn) vorliegt, insbesondere indem der Pull-Schaltkreis (R1a, R2a; R1b, R2b) den Betrag des differentiellen Signalpegels (TOW) des Zweidrahtdatenbusses (b1b2b3) oder zumindest des betrachteten Zweidrahtdatenbusabschnitts (bn) auf einem mittleren zweiten differentiellen Spannungsbetragspegel (V_{M}) im zweiten Spannungsbetragsbereich (V_{B2}) hält.

Eine weitere Variante dieses Verfahrens zeichnet sich durch die Übertragung eines Systemtakts durch das Wechseln vom zweiten oder dritten logischen Zustand auf dem Zweidrahtdatenbus (b1b2b3) oder zumindest dem betrachteten Zweidrahtdatenbusabschnitt (bn) einerseits zu einem ersten logischen Zustand auf dem Zweidrahtdatenbus (b1b2b3) oder zumindest dem betrachteten Zweidrahtdatenbusabschnitt (bn) andererseits und das Wechseln in die umgekehrte Richtung aus.

Eine weitere Variante dieses Verfahrens zeichnet sich durch die Übertragung von Daten durch das Wechseln vom zweiten logischen Zustand auf dem Zweidrahtdatenbus (b1b2b3) oder zumindest dem betrachteten Zweidrahtdatenbusabschnitt (bn) auf der einen Seite zu einem dritten logischen Zustand auf dem Zweidrahtdatenbus (b1b2b3) oder zumindest dem betrachteten Zweidrahtdatenbusabschnitt (bn) auf der anderen Seite über einen ersten logischen Zustand auf dem Zweidrahtdatenbus (b1b2b3) und das Wechseln in die umgekehrte Richtung aus.

Eine weitere Variante dieses Verfahrens zeichnet sich dadurch aus, dass ein erstes oder zweites Datum oder ein Kontrolldatum oder ein anderes Datum in einer Halbtaktperiode der mindestens zwei Halbtaktperioden (T_{1H}, T_{2H}) eines Zeitschlitzes der mindestens drei aufeinander folgenden Zeitschlitze (TINO, TIN1, TDO_{Z}) in einem Zweitschlitzpaket übertragen wird und ein Systemtakt in der anderen Halbtaktperiode der mindestens zwei Halbtaktperioden (T_{1H}, T_{2H}) dieses Zeitschlitzes der mindestens drei aufeinander folgenden Zeitschlitze (TINO, TIN1, TDO_{Z}) übertragen wird, wobei ein Zeitschlitzpaket eine Länge einer Systembasistaktperiode (T) mit mindestens drei mal zwei Halbtaktperioden (T_{1H}, T_{2H}) aufweist.

Ein anderer Aspekt des erfindungsgemäßen Vorschlags betrifft ein Verfahren zum Betreiben eines Zweidrahtdatenbusses (b1b2b3) zwischen einer ersten Teilvorrichtung, dem Bus-Master (BM), und mindestens zwei weiteren Teilvorrichtungen, den Busknoten (BS1, BS2, BS3). Der Zweidrahtdatenbus (b1b2b3) wird durch die mindestens zwei Busknoten (BS1, BS2) in mindestens zwei Zweidrahtdatenbusabschnitte (b1, b2, b3) unterteilt und durch mindestens einen Busknoten (BS3) der Busknoten (BS1, BS2, BS3), den abschließenden Busknoten (BS3), abgeschlossen. Das Verfahren umfasst als ersten Schritt das zeitweise Verbinden des Zweidrahtdatenbusses (b1b2b3) oder zumindest eines Zweidrahtdatenbusabschnitts der Eindrahtdatenbusabschnitte (b1, b2, b3), im Folgenden als betrachteter Zweidrahtdatenbusabschnitt (bn) bezeichnet, mit einer ersten schaltbaren differentiellen Spannungsquelle (T1a, T1b) des Bus-Masters (BM), die einen ersten Innenwiderstand hat und die beim Zuschalten einen ersten betragsmäßigen differentiellen Signalpegel (TOW) auf dem Zweidrahtdatenbus (b1b2b3) hervorruft. Als zweiten Schritt umfasst es das zeitweise Verbinden des Zweidrahtdatenbusses (b1b2b3) oder zumindest des betrachteten Zweidrahtdatenbusabschnitts (b1, b2, b3) mit einer zweiten zuschaltbaren differentiellen Spannungsquelle (T2a, T2b) des Bus-Masters (BM), die einen zweiten Innenwiderstand besitzt und die beim Zuschalten einen zweiten betragsmäßigen differentiellen Signalpegel (TOW) auf dem Zweidrahtdatenbus (b1b2b3) hervorruft. Dabei kann die zweite zuschaltbare differentielle Spannungsquelle auch als eine differentielle Stromquelle (T2a, T2b) ausgeführt sein, die einen entsprechenden zweiten Innenwiderstand und den entsprechenden Stromwert besitzt. Die Umrechnung zwischen den Werten realer Strom- und Spannungsquellen, wie hier erwähnt, ist dem Fachmann geläufig. Als dritten Schritt umfasst das Verfahren das zeitweise Verbinden des Zweidrahtdatenbusses (b1b2b3) oder zumindest des betrachteten Zweidrahtdatenbusabschnitts (bn) mit einer dritten zuschaltbaren differentiellen Spannungsquelle (T3a, T3b) eines Busknotens (BS1, BS2, BS3), im Folgenden betrachteter Busknoten (BSn) genannt. Die dritte zuschaltbare differentielle Spannungsquelle ruft beim Zuschalten einen dritten betragsmäßigen differentiellen Signalpegel (TOW) auf dem Zweidrahtdatenbus (b1b2b3) hervor. Vorzugsweise ist dieser dritte differentielle Signalpegel (TOW) gleich dem zweiten differentiellen Signalpegel (TOW). Die dritte zuschaltbare Spannungsquelle (T3a, T3b) weist dabei einen dritten Innenwiderstand auf. Die dritte zuschaltbare Spannungsquelle kann auch als eine Stromquelle (T3a, T3b), die einen dritten Innenwiderstand und den entsprechenden Stromwert besitzt, aufgefasst werden. Die Umrechnung zwischen den Werten realer Strom- und Spannungsquellen, wie hier erwähnt, ist dem Fachmann geläufig. Als vierten Schritt umfasst das Verfahren das zeitweise Halten des Betrags des Signalpegels (TOW) auf dem Zweidrahtdatenbus (b1b2b3) oder zumindest auf dem betrachteten Zweidrahtdatenbusabschnitt (bn) durch eine vierte differentielle Spannungsquelle, insbesondere einen differentiellen Pull-Schaltkreis (R₁ₐ, R₂ₐ; R_{1b}, R_{2b},) betragsmäßig zwischen einem dritten differentiellen Spannungsbetragspegel (V_{IO}), der vorzugsweise gleich dem vierten und fünften Spannungsbetrag (V_{IO1}, V_{IO2}) ist, und dem ersten differentiellen Spannungsbetragspegel (-V_{IO}), mit einem vierten Innenwiderstand (R₀) auf einem mittleren zweiten differentiellen Spannungsbetragspegel (V_{M}). Dabei liegt der Wert des mittleren zweiten differentiellen Spannungsbetragspegels (V_{M}) zwischen dem Wert des ersten differentiellen Spannungsbetragspegels (-V_{IO}) und dem Wert des vierten Spannungsbetrags (V_{IO1}) und/oder zwischen dem Wert des ersten differentiellen Spannungsbetragspegel (-V_{IO}) und dem Wert des fünften Spannungsbetrags (V_{IO2}).Der erste Innenwiderstand ist dabei kleiner als die anderen Innenwiderstände. Der vierte Innenwiderstand ist dabei größer als die anderen Innenwiderstände.

Die Erfindung umfasst auch ein Verfahren zur Initialisierung eines solchen Zweidrahtdatenbusses, wie er hier beschrieben wurde, zwischen einer ersten Teilvorrichtung, dem Bus-Master (BM), und mindestens zwei weiteren Teilvorrichtungen, den Busknoten (BS1, BS2, BS3). Dabei wird der Zweidrahtdatenbus (b1b2b3) durch die mindestens zwei Busknoten (BS1, BS2, BS3) in mindestens zwei Zweidrahtdatenbusabschnitte (b1, b2, b3) unterteilt. Er wird durch mindestens einen Busknoten (BS3) der Busknoten (BS1, BS2, BS3), den abschließenden Busknoten (BS3), abgeschlossen. Das Verfahren umfasst als ersten Schritt das Ermitteln einer neuen Busknotenadresse durch den Bus-Master (BM). Dies kann beispielsweise durch einfaches Hochzählen eines Bus-Master- internen Wertes erfolgen. Es folgt als zweiter Schritt das Ablegen dieser Busknotenadresse in einem Busknotenadressregister (BKADRn) eines Busknotens (BS1, BS2, BS3), des betreffenden Busknotens (BSn), durch den Bus-Master (BM). Dabei sind der Bus-Master (BM) und der betreffende Busknoten (BSn) durch einen oder mehrere Zweidrahtdatenbusabschnitte (b1, b2, b3) miteinander datenmäßig verbunden. Vorzugsweise wird das Busknotenadressregister (BKADRn) des betreffenden Busknotens (BSn) als eigenständiges Datenregister (DR) im betreffenden Busknoten (BSn) realisiert. Es kann aber auch als Teil eines Daten- oder Instruktionsregisters (IRn) der JTAG-Schnittstelle des betreffenden Busknotens (BSn) realisiert werden. Die Programmierung wird dann aber gegebenenfalls komplizierter. Wie zuvor ist wieder eine JTAG-Schnittstelle eines betreffenden Busknotens (BSn) im Sinne dieser Erfindung dadurch gekennzeichnet, dass sie einen Test-Controller (TAPCn) des betreffenden Busknotens (BSn) mit einem Zustandsdiagram entsprechend dem IEEE 1149 Standard oder eines seiner Unterstandards, wie im Zusammenhang mit Fig. 1 erläutert, aufweist. Als dritter Schritt folgt nach dieser Busknotenadressvergabe das Verbinden der bereits mit dem betreffenden Busknoten (BSn) und dem Bus-Mater (BM) verbundenen einen oder mehrere Zweidrahtdatenbusabschnitte (b1, b2, b3) mit einem oder mehreren weiteren Zweidrahtdatenbusabschnitten (b1, b2, b3) durch das Schließen des Transfer-Gates (TGn) des betreffenden Busknotens (BSn). Um bei der nächsten Busknotenadressvergabe ein Überschreiben der zuvor vergebenen Busknotenadresse im Busknotenadressregister (BKADRn) des betreffenden Busknotens (BSn) zu verhindern, verhindert eine Logik innerhalb des betreffenden Busknotens (BSn) eine solche Ablage einer Busknotenadresse in dem Busknotenadressregister (BKADRn) des betreffenden Busknotens (BSn) solange, wie das Transfer-Gate (TGn) des betreffenden Busknotens (BSn) geschlossen ist. Ein Beschreiben des Busknotenadressregisters (BKADRn) des betreffenden Busknotens (BSn) ist daher nur mit geöffnetem Transfer-Gate (TGn) des betreffenden Busknotens (BSn) möglich.

Eine weitere Ausprägung des Verfahrens umfasst als weiteren Schritt das Ablegen eines Befehls zum Öffnen des Transfer-Gates (TGn) des betreffenden Busknotens (BSn) in dem Instruktionsregister (IRn) des betreffenden Busknotens (BSn) oder einem Transfer-Gate-Control-Register (TGCR) des betreffenden Busknotens (BSn) der JTAG-Schnittstelle des betrachteten Busknotens (BSn). Hierdurch kann der Bus-Master (BM) den Bus jederzeit neu initialisieren. Vorzugsweise wird das Transfer-Gate-Control-Register (TGCRn) des betreffenden Busknotens (BSn) hierfür benutzt und mit einer identischen Instruktion im Instruktionsregister (IRn) des betreffenden Busknotens (BSn) angesprochen.

Eine weitere Ausprägung des Verfahrens umfasst als weiteren Schritt das Überprüfen der korrekten Adressierung zumindest eines betreffenden Busknotens (BSn) durch zyklisches Schreiben und Lesen, insbesondere eines Bypass-Registers des betreffenden Busknotens (BSn).

Eine weitere Ausprägung des Verfahrens umfasst als weiteren Schritt das Ermitteln der Anzahl korrekt adressierbarer Busknoten (BS1, BS2, BS3) durch den Bus-Master (BM). Es folgt dann das Vergleichen der Anzahl korrekt adressierbarer Busknoten (BS1, BS2, BS3) mit einer Sollanzahl und Auslösung mindestens eines Signals oder einer Maßnahme in Abhängigkeit von der ermittelten Anzahl durch den Bus-Master (BM) oder ein angeschlossenes System, beispielsweise einen Watch-Dog-Zähler.

Eine weitere Ausprägung des Verfahrens umfasst als ersten weiteren Schritt das gleichzeitige Übermitteln einer Sendeadresse an alle erreichbaren Busknoten (BS1, BS2, BS3) durch das Beschreiben von Senderegistern (SR) aller Busknoten (BS1, BS2, BS3) durch den Busmaster (BM) mit dieser Sendeadresse, wobei das jeweilige Senderegister (SRn) eines jeweiligen betrachteten Busknotens (BSn) ein Datenregister (DRn) oder ein Teil eines Datenregisters oder ein Teil des Instruktionsregisters (IRn) der JTAG-Schnittstelle dieses betrachteten Busknotens (BSn) ist, und wobei das Busknotenadressregister (BKADRn) kein Teil des betreffenden Registers des betrachteten Busknotens (BSn) ist. Als zweiter weiterer Schritt folgt der Vergleich der Sendeadresse im jeweiligen Senderegister (SR) mit der Busknotenadresse im jeweiligen Busknotenadressregister (BKADR) durch jeden Busknoten (BS1, BS2, BS3) mittels eines vorbestimmten Vergleichsalgorithmus. Vorzugsweise wird auf Gleichheit geprüft. Andere Algorithmen sind aber denkbar. Als dritter weiterer Schritt folgt entweder die Aktivierung der Sendefähigkeit für den jeweiligen Busknoten zu den dafür vorgesehenen Zeitpunkten, wenn der Vergleichsalgorithmus des zuvor durch diesen jeweiligen Busknoten ausgeführten Vergleichs eine ausreichende Übereinstimmung mit der für die Sendeerlaubnis erwarteten Kombination aus der in seinem Busknotenregister (BKADR) abgelegten Busknotenadresse und der in seinem Senderegister (SR) abgelegten Sendeadresse ergibt oder als alternativer dritter weiterer Schritt die Deaktivierung der Sendefähigkeit für den jeweiligen Busknoten, wenn der Vergleichsalgorithmus des zuvor durch diesen jeweiligen Busknoten ausgeführten Vergleichs keine ausreichende Übereinstimmung mit der für die Sendeerlaubnis erwarteten Kombination aus der in seinem Busknotenregister (BKADR) abgelegten Busknotenadresse und der in seinem Senderegister (SR) abgelegten Sendeadresse ergibt. Vorzugsweise erhält nur ein Busknoten eine Sendeerlaubnis.

Um sicherzustellen, dass nur der Busknoten die für ihn bestimmten Daten erhält, ist es sinnvoll, wenn nicht nur das Senden des Busknotens gesteuert wird, sondern auch das Empfangen des Busknotens. Hierzu werden bestimmte Register eines Busknotens ganz oder teilweise für ein Beschreiben durch den Bus-Master (BM) gesperrt, bis die Sendeadresse im Senderegister (SR) mit der Busknotenadresse (BKADR) übereinstimmt. Diese Sperrung kann die Sperrung des Schieberegisterteils eines oder mehrerer Datenregister (DR) oder die Datenübernahme vom Schieberegisterteil eines oder mehrerer Datenregister (DR) oder des Instruktionsregisters in das Schattenregister des betreffenden Busknotens (BSn) betreffen. Dabei können gegebenenfalls auch nur einzelne oder mehrere Bits durch eine Sperrung der Datenübernahme betroffen sein. Es ist ja notwendig, stets die Übertragung bestimmter Befehle, zumindest das Schreiben des Senderegisters (SR) zuzulassen. Daher beginnt die Übertragung eines Kommandos oder von Daten an einen zuvor nicht angesprochenen Busknoten wie zuvor mit dem gleichzeitigen Übermitteln einer Sendeadresse an alle erreichbaren Busknoten durch Beschreiben der Senderegister (SR) aller Busknoten durch den Busmaster (BM) mit dieser Sendeadresse. Dabei ist das jeweilige Senderegister (SR) des betreffenden Busknotens (BSn) ein Datenregister oder ein Teil eines Datenregisters oder ein Teil des Instruktionsregisters (IRn) der JTAG-Schnittstelle dieses betreffenden Busknotens (BSn). Wie zuvor darf das Busknotenadressregister (BKADRn) kein Teil des betreffenden Registers sein. Es folgt wieder der Vergleich der Sendeadresse im Senderegister (SR) mit der Busknotenadresse im Busknotenadressregister (BKADR) durch jeden Busknoten mittels des besagten vorbestimmten Vergleichsalgorithmus. Schließlich folgt die Aktivierung der Empfangsfähigkeit des betreffenden Busknotens (BSn) für den Inhalt vorbestimmter Datenregister des betreffenden Busknotens (BSn), wenn der Vergleichsalgorithmus des zuvor durch diesen betreffenden Busknoten (BSn) ausgeführten Vergleichs eine ausreichende Übereinstimmung mit der für die Sendeerlaubnis erwarteten Kombination aus der in seinem Busknotenregister (BKADRn) abgelegten Busknotenadresse und der in seinem Senderegister (SRn) abgelegten Sendeadresse ergibt. Im anderen Fall folgt die Deaktivierung der Empfangsfähigkeit des jeweiligen Busknotens für den Inhalt vorbestimmter Datenregister des jeweiligen Busknotens, wenn der Vergleichsalgorithmus des zuvor durch diesen jeweiligen Busknoten ausgeführten Vergleichs keine ausreichende Übereinstimmung mit der für die Sendeerlaubnis erwarteten Kombination aus der in seinem Busknotenregister (BKADR) abgelegten Busknotenadresse und der in seinem Senderegister (SR) abgelegten Sendeadresse ergibt.

Sofern das Beschreiben von Teilen des Instruktionsregisters (IR) oder von Teilen von Datenregistern gesperrt bzw. entsperrt werden soll, beginnt das entsprechende Verfahren mit dem gleichzeitigen Übermitteln einer Sendeadresse an alle erreichbaren Busknoten (BS1, BS2, BS3) durch das Beschreiben der Senderegister (SR) aller Busknoten (BS1, BS2, BS3) durch den Busmaster (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der JTAG-Schnittstelle dieses Busknotens ist, und wobei das Busknotenadressregister (BKADR) kein Teil des betreffenden Registers ist. Es folgt wieder der Vergleich der Sendeadresse im Senderegister (SR) mit der Busknotenadresse im Busknotenadressregister (BKADR) durch jeden Busknoten mittels des besagten vorbestimmten Vergleichsalgorithmus. Je nach Ergebnis des Vergleichs folgt die Aktivierung der Empfangsfähigkeit des jeweiligen Busknotens für den Inhalt vorbestimmter Inhalte des Instruktionsregisters (IR) des jeweiligen Busknotens zur Zulassung vorbestimmter Befehle für einen Instruktionsdecoder (IRDC) der JTAG-Schnittstelle des jeweiligen Busknotens, wenn der Vergleichsalgorithmus des zuvor durch diesen jeweiligen Busknoten ausgeführten Vergleichs eine ausreichende Übereinstimmung mit der für die Sendeerlaubnis erwarteten Kombination aus der in seinem Busknotenregister (BKADR) abgelegten Busknotenadresse und der in seinem Senderegister (SR) abgelegten Sendeadresse ergibt. Im anderen Fall erfolgt die Deaktivierung der Empfangsfähigkeit des jeweiligen Busknotens für den Inhalt vorbestimmter Inhalte des Instruktionsregisters (IR) des jeweiligen Busknotens zur Unterdrückung vorbestimmter Befehle für einen Instruktionsdecoder (IRDC) der JTAG-Schnittstelle des jeweiligen Busknotens, wenn der Vergleichsalgorithmus des zuvor durch diesen jeweiligen Busknoten ausgeführten Vergleichs keine ausreichende Übereinstimmung mit der für die Sendeerlaubnis erwarteten Kombination aus der in seinem Busknotenregister (BKADR) abgelegten Busknotenadresse und der in seinem Senderegister (SR) abgelegten Sendeadresse ergibt.

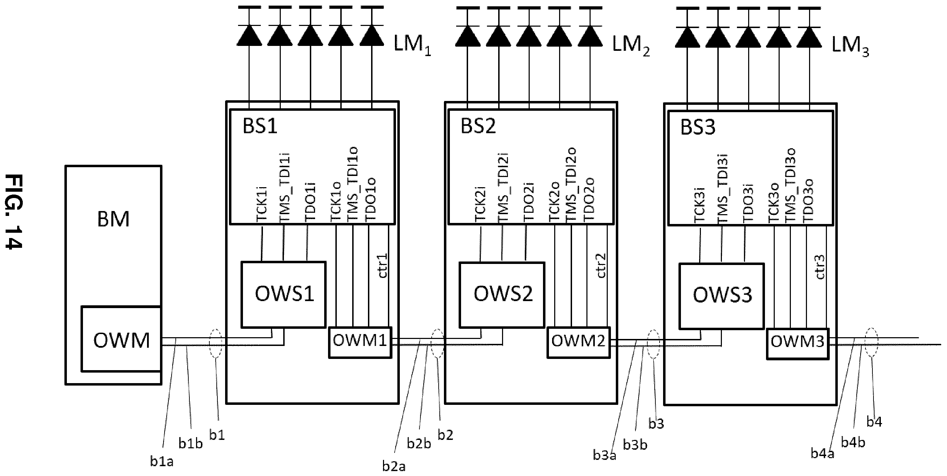

In einer weiteren Ausprägung umfasst die Vorrichtung ein Datenbussystem mit einem Zweidrahtdatenbus (b1b2b3) zur Übertragung von Daten zwischen einem Bus-Master (BM) und zwischen mindestens zwei Busknoten (BS1, BS2, BS3), insbesondere Leuchtmittel-Busknoten. In dieser Ausprägung agiert nicht nur der Bus-Master (BM) selbst als Bus-Master, vielmehr kann jeder der Busknoten gegenüber den nachfolgenden Busknoten als Bus-Master auftreten. Dies ermöglicht es insbesondere, komprimierte Daten zu wenigen, speziellen Busknoten zu übertragen, dort zu dekomprimieren und von dort die dekomprimierten Daten zu einigen, wenigen nachfolgenden Busknoten zu übertragen. Dies senkt die Datenlast erheblich. Wie zuvor wird durch die somit aufgewerteten Busknoten (BS1, BS2, BS3) der Zweidrahtdatenbus (b1b2b3) in mindestens zwei Zweidrahtdatenbusabschnitte (b1, b2, b3) unterteilt und durch einen Busknoten, den abschließenden Busknoten (BS3) abgeschlossen. Jeder der Busknoten (BS1, BS2, BS3) bis auf einen ersten Busknoten (BS1) wird durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) und der eine erste Busknoten (BS1) durch einen vorausgehenden Zweidrahtdatenbusabschnitt (b1) der Zweidrahtdatenbusabschnitte (b1, b2, b3) mit dem Bus-Master (BM) verbunden. Jeder Busknoten (BS1, BS2, BS3) ist bis auf einen abschließenden Busknoten (BS3) durch einen nachfolgenden Zweidrahtdatenbusabschnitt (b2, b3) der Zweidrahtdatenbusabschnitte (b1, b2, b3) mit einem nachfolgenden Busknoten (BS2, BS3) der Busknoten (BS1, BS2, BS3) verbunden. Hierbei besitzen die Busknoten jedoch kein Transfer-Gate mehr, sondern eine zweite JTAG-Schnittstelle, die jedoch eine Bus-Master Schnittstelle (OWM1, OWM2, OWM3) ist (siehe Fig. 14). Wie zuvor besitzt der Bus-Master (BM) eine Master-Zweidrahtdatenbusschnittstelle (OWM), die dazu vorgesehen ist, mittels eines Datenbusprotokolls mit mehr als zwei physikalischen differentiellen Spannungs- und/oder Strompegeln bidirektional Daten über den Zweidrahtdatenbus (b1b2b3) oder zumindest einen Zweidrahtdatenbusabschnitt (b1, b2, b3) der Zweidrahtdatenbusabschnitte (b1, b2, b3), im Folgenden als betrachteter Zweidrahtdatenbusabschnitt (bn) bezeichnet, zu senden und von diesem zu empfangen. Wie zuvor umfasst der betrachtete Zweidrahtdatenbusabschnitt (bn) nur zwei Signalleitungen.

An dem betrachteten Zweidrahtdatenbusabschnitt (bn) ist, wie zuvor, eine Zweidrahtdatenbusschnittstelle (OWS1, OWS2, OWS3) eines Busknotens (BS1, BS2, BS3) der Busknoten (BS1, BS2, BS3), im Folgenden als betrachteter Busknoten (BSn) bezeichnet, elektrisch angeschlossen. Ein Transfer-Gate (TGn) des betrachteten Busknotens (BSn) ist nun jedoch nicht vorgesehen. Das Transfer-Gate (TGn) des betrachteten Busknotens (BSn) kann aber optional ebenfalls eingefügt werden. Die Zweidrahtdatenbusschnittstelle (OWS1, OWS2, OWS3) des betrachteten Busknotens (BSn) ist wieder dazu vorgesehen, mittels eines Datenbusprotokolls mit mehr als zwei physikalischen diffentiellen Spannungs- und/oder Strompegeln Daten von dem betrachteten Zweidrahtdatenbusabschnitt (b1, b2, b3) zu empfangen. Die Zweidrahtdatenbusschnittstelle (OWS1, OWS2, OWS3) des betrachteten Busknotens (BSn) ist dazu vorgesehen, mittels eines Datenbusprotokolls mit mindestens zwei physikalischen differentiellen Spannungs- und/oder Strompegeln Daten über den betrachteten Zweidrahtdatenbusabschnitt (b1, b2, b3) zu senden. Im Gegensatz zu den zuvor beschriebenen Konfigurationen ist nun jedoch der betrachtete Busknoten (BSn) ebenfalls mit einer Master-Zweidrahtdatenbusschnittstelle (OWMn) des betrachteten Busknotens (BSn) versehen, an die der nachfolgende Zweidrahtdatenbusabschnitt (b(n+1)) angeschlossen ist. Diese Master-Zweidrahtdatenbusschnittstelle (OWMn) des betrachteten Busknotens (BSn) ist dazu vorgesehen, mittels eines Datenbusprotokolls mit mehr als zwei physikalischen differentiellen Spannungs- und/oder Strompegeln bidirektional Daten über zumindest den besagten nachfolgenden Zweidrahtdatenbusabschnitt (b(n+1)) der Zweidrahtdatenbusabschnitte (b1, b2, b3), im Folgenden als nachfolgender Zweidrahtdatenbusabschnitt (b(n+1)) bezeichnet, zu einem nachfolgenden Busknoten (BS(n+1)) zu senden und von diesem zu empfangen. Der betrachtete Busknoten (BSn) kann also gegenüber dem nachfolgenden Busknoten (BS(n+1)) als Bus-Master auftreten. Der betrachtete Busknoten (BSn) kann dabei selbstgenerierte Daten an den nachfolgenden Busknoten (BS(n+1)) senden und/oder den Sendedatenstrom, der beispielsweise vom Bus-Master (BM) empfangen wird, direkt über die eigene Bus-Master-Schnittstelle (OWMn) an den nachfolgenden Busknoten (BS(n+1)) weiterleiten. In diesem Fall arbeitet die Zweidrahtdatenbusschnittstelle (OWSn) des betrachteten Busknotens (BSn) in Kombination mit der eigenen Master-Zweidrahtdatenbusschnittstelle (OWMn) des betrachteten Busknotens (BSn) wie ein entsprechendes Transfer-Gate (TGn) des betrachteten Busknotens (BSn).

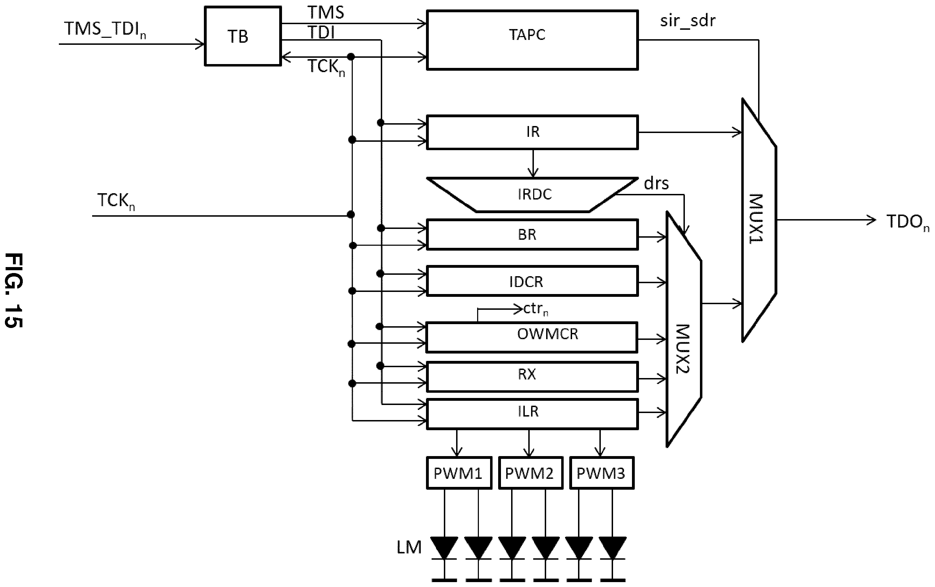

Um nun diese Busmasterschnittstelle (OWMn) des betrachteten Busknotens (BSn) zu steuern, verfügt der betrachtete Busknoten (BSn) vorzugsweise über ein Bus-Master-Control-Register (OWMCRn) und entsprechende Kontrollleitungen (ctr1, ctr2, ctr3) (siehe Fign. 14 und 15). Das Bus-Master-Control-Register (OWMCRn) des betrachteten Busknotens (BSn) ist dazu ausgelegt, die Master-Zweidrahtdatenbusschnittstelle (OWMn) des betrachteten Busknotens (BSn) zu steuern, wobei unter "steuern" das komplette Abschalten der Schnittstelle gehören kann. Ist innerhalb eines betrachteten Busknotens (BSn) eine Bus-Masterschnittstelle (OWMn) gleichzeitig mit einem Transfer-Gate (TGn) versehen, so wird durch eine Logik sichergestellt, dass
a) nur die ersten drei der vier möglichen Zustände, nämlich
   1. Transfer-Gate (TGn) offen und Master-Busschnittstelle (OWMn) abgeschaltet;
   2. Transfer-Gate (TGn) des betrachteten Busknotens (BSn) geschlossen und Master-Busschnittstelle (OWMn) des betrachteten Busknotens (BSn) abgeschaltet;
   3. Transfer-Gate (TG1, TG2, TG3) des betrachteten Busknotens (BSn) offen und Master-Busschnittstelle (OWMn) des betrachteten Busknotens (BSn) eingeschaltet;
   4. Transfer-Gate (TGn) des betrachteten Busknotens (BSn) geschlossen und Master-Busschnittstelle (OWMn) des betrachteten Busknotens (BSn) eingeschaltet,
   erlaubt sind und damit
b) der Zustand "Transfer-Gate (TGn) des betrachteten Busknotens (BSn) geschlossen und Master-Busschnittstelle (OWMn) des betrachteten Busknotens (BSn) eingeschaltet" nicht möglich ist, um Buskonflikte zu verhindern.

Um die Steuerung vornehmen zu können, kann erfindungsgemäß der Bus-Master (BM) über die Master-Zweidrahtdatenbusschnittstelle (OWM) des Busmasters (BM) und den Zweidrahtdatenbus (b1b2b3) oder den betrachteten Zweidrahtdatenbusabschnitt (b1, b2, b3) und die Zweidrahtdatenbusschnittstelle (OWSn) des betrachteten Busknotens (BSn) das Bus-Master-Control-Register (OWMCRn) des betrachteten Busknotens (BSn) beschreiben und somit den Zustand der Master-Zweidrahtdatenbusschnittstelle (OWMn) des betrachteten Busknotens (BSn) steuern.

Die Erfindung umfasst auch ein passendes Gehäuse (GH) für einen betrachteten Busknoten (BSn), wie oben beschrieben. Dieser Busknoten ist für den Einsatz in einem Datenbussystem zur Übertragung von Beleuchtungsdaten für Leuchtmittel (LM1, LM2, LM3) mittels eines differentiellen Zweidrahtdatenbusses (b1b2b3) vorgesehen. Der Zweidrahtdatenbus (b1b2b3) dient dabei zur Übertragung von Daten zwischen dem Bus-Master (BM) und zwischen mindestens zwei Busknoten (BS1, BS2, BS3), insbesondere Leuchtmittel-Busknoten. Der Zweidrahtdatenbus (b1b2b3) wird wieder durch die Busknoten (BS1, BS2, BS3) in mindestens zwei Zweidrahtdatenbusabschnitte (b1, b2, b3) unterteilt. Der Zweidrahtdatenbus (b1b2b3) wird durch einen Busknoten, den abschließenden Busknoten (BS3) abgeschlossen. Vorzugsweise ist, bis auf einen ersten Busknoten (BS1) jeder der Busknoten (BS2, BS3) durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) verbunden. Der erste Busknoten (BS1) ist durch einen ersten Zweidrahtdatenbusabschnitt (b1) der Zweidrahtdatenbusabschnitte (b1, b2, b3) mit dem Bus-Master (BM) verbunden. Vorzugsweise ist, bis auf einen abschließenden Busknoten (BS3) jeder Busknoten (BS1, BS2, BS3) durch einen nachfolgenden Zweidrahtdatenbusabschnitt (b2, b3) der Zweidrahtdatenbusabschnitte (b1, b2, b3) mit einem nachfolgenden Busknoten (BS2, BS3) der Busknoten (BS1, BS2, BS3) verbunden. Das Gehäuse (GH) des Busknotens (BSn), der für den Einsatz in einem solchen Datenbussystem vorgesehen ist, weist vorzugsweise mindestens zwei Reihen von Anschlüssen auf, nämlich eine erste Anschlussreihe (LED1, LED2, GND, b1a, b1b, V_{bat}) und eine zweite Anschlussreihe (LED3, LED4, GND, b2a, b2b, V_{bat}) auf. Diese mindestens zwei Anschlussreihen sind am Gehäuse (GH) gegenüberliegend angeordnet. Vorzugsweise jede der Anschlussreihen umfasst einen Anschluss für die negative Versorgungsspannung, das zweite Bezugspotenzial (GND), und jeweils einen Anschluss für die positive Versorgungsspannung (V_{bat}). Die Anschlüsse für die negative Versorgungsspannung und die positive Versorgungsspannung sind dabei so in jeder Anschlussreihe angeordnet, dass sie kreuzungsfrei verbunden werden können, wenn der Anschluss (GND) für die negative Versorgungsspannung und derjenige für das zweite Bezugspotenzial (GND) der ersten Anschlussreihe mit dem Anschluss (GND) für die negative Versorgungsspannung bzw. demjenigen für das zweite Bezugspotenzial (GND), der zweiten Anschlussreihe verbunden wird und wenn der Anschluss für die positive Versorgungsspannung (V_{bat}) der ersten Anschlussreihe mit dem Anschluss für die positive Versorgungsspannung (V_{bat}) der zweiten Anschlussreihe verbunden wird. Dies hat den Vorteil, dass bei einer Leuchtmittelkette die Gehäuse (GH) hintereinander angeordnet werden können, ohne Durchkontaktierungen zu erfordern.

Die zwei Anschlüsse (b1a, b1b) für einen vorausgehenden Zweidrahtdatenbusabschnitt (bn) des betrachteten Busknotens (BSn) in der ersten Anschlussreihe sind zwischen dem Anschluss (GND) für die negative Versorgungsspannung und dem Anschluss für das zweite Bezugspotenzial (GND) der ersten Anschlussreihe und dem Anschluss für die positive Versorgungsspannung (V_{bat}) der ersten Anschlussreihe angeordnet. Hierdurch wird elektromagnetische Abstrahlung des Zweidrahtdatenbusses (b1b2b3) minimiert. Die zwei Anschlüsse (b2a, b2b) für einen nachfolgenden Zweidrahtdatenbusabschnitt (b2) des Busknotens in der zweiten Anschlussreihe sind zwischen dem Anschluss (GND) für die negative Versorgungsspannung und dem Anschluss für das zweite Bezugspotenzial (GND) der zweiten Anschlussreihe und dem Anschluss für die positive Versorgungsspannung (V_{bat}) der zweiten Anschlussreihe angeordnet. Auch hierdurch wird die Abstrahlung des Zweidrahtdatenbusses (b1b2b3) minimiert.

Die Anschlüsse für die Versorgung und/oder für die Ansteuerung von Leuchtmitteln (LED1, LED2, LED3, LED4) in ihrer jeweiligen Anschlussreihe sind so angeordnet, dass in der jeweiligen Anschlussreihe der Anschluss für diejenige Versorgungsspannung, über die der elektrische Strom, der aus diesen Anschlüssen für die Versorgung und/oder die Ansteuerung der Leuchtmittel (LED1, LED2, LED3, LED4) durch die Leuchtmittel (LED1, LED2, LED3, LED4) fließt, wieder abgeführt wird, in der jeweiligen Anschlussreihe zwischen den beiden Anschlüssen (b1a, b1b bzw. b2a, b2b) für den zugehörigen Zweidrahtdatenbusabschnitt (b1 bzw. b2) und den Anschlüssen für die Versorgung und/ oder die Ansteuerung der Leuchtmittel (LED1, LED2, LED3, LED4) platziert sind. Dies hat den Vorteil, dass die Leuchtmittel (hier Leuchtdioden LED1, LED2, LED3, LED4) kreuzungsfrei mit dem Busknoten verbunden werden können.

Das derart ausgestaltete Gehäuse ist daher geeignet, im Zusammenwirken mit dem hier beschriebenen Bussystem parasitäre elektromagnetische Abstrahlungen zu minimieren.

Die vorgeschlagene Vorrichtung umfasst auch ein Lichtmodul mit einem Gehäuse (GH) für einen Busknoten (BSn). Dieser Busknoten (BSn) stellt einen der oben beschriebenen Busknoten dar und wird vorzugsweise in Form einer integrierten Schaltung ausgeführt. Das Lichtmodul ist dazu vorgesehen in einem Datenbussystem zur Übertragung von Beleuchtungsdaten für Leuchtmittel (LED1, LED2, LED3) mittels eines differentiellen Zweidrahtdatenbusses (b1b2b3) eingesetzt zu werden. Vorzugsweise ist der Datenbus differentiell ausgeführt. Der Zweidrahtdatenbus (b1b2b3) dient dabei zur Übertragung von Daten zwischen einem Bus-Master (BM) und mindestens zwei Busknoten (BS1, BS2, BS3), hier Leuchtmittel-Busknoten. Der Zweidrahtdatenbus (b1b2b3) wird durch die Busknoten (BS1, BS2, BS3) in mindestens zwei Zweidrahtdatenbusabschnitte (b1, b2, b3) unterteilt.

Dies ermöglicht es, eine Autoadressierung der Lichtmodule vorzunehmen. Aus dem Stand der Technik sind verschiedene Autoadressierungsmethoden für die Teilnehmer von seriellen Bussystemen bekannt. Als Beispiele für Autoadressierungsmethoden aus dem Stand der Technik können hier die Schriften DE-B-10 256 631, DE-A-10 2014 003 066, EP-B-1 364 288, und EP-B-1 490 772 genannt werden.

Eine Stern-Struktur ist für eine Autoadressierung nicht geeignet. Durch das zuvor beschriebene Transfer-Gate in Kombination mit einer eigenen Busmasterschnittstelle in den Busknoten kann zwischen einer linearen Struktur zur Durchführung der Autoadressierung und einer Stern-Struktur im Betrieb gewechselt werden. Hierdurch können im Betrieb bei Bedarf auch sehr viele Busknoten durch einen Datenbefehl gleichzeitig angesprochen werden, ohne den Vorteil der Autoadressierung zu verlieren.

Typischerweise ist bis auf einen ersten Busknoten (BS1) jeder der Busknoten (BS2, BS3) dazu vorgesehen, durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) oder dem Busmaster (BM) verbunden zu werden.

Das Gehäuse (GH) des Busknotens (BSn) weist mindestens zwei Reihen von Anschlüssen auf, nämliche eine erste Anschlussreihe (GND, b1a, b1b, V_{bat}) und eine zweite Anschlussreihe (GND, b2a, b2b, V_{bat}) auf.

Zumindest diese mindestens zwei Anschlussreihen sind am Gehäuse (GH) gegenüberliegend angeordnet.

Jede der Anschlussreihen umfasst jeweils einen Anschluss (GND) für die negative Versorgungsspannung, das zweite Bezugspotenzial (GND), und für die positive Versorgungsspannung (V_{bat}). Die Anschlüsse für die negative Versorgungsspannung und die positive Versorgungsspannung sind so in jeder Anschlussreihe angeordnet, dass sie kreuzungsfrei verbunden werden können, wenn der Anschluss (GND) für die negative Versorgungsspannung und derjenige für das zweite Bezugspotenzial (GND) der ersten Anschlussreihe mit dem Anschluss (GND) für die negative Versorgungsspannung bzw. mit demjenigen für das zweite Bezugspotenzial (GND) der zweiten Anschlussreihe verbunden wird und wenn der Anschluss für die positive Versorgungsspannung (V_{bat}) der ersten Anschlussreihe mit dem Anschluss für die positive Versorgungsspannung (V_{bat}) der zweiten Anschlussreihe verbunden wird. Die zwei Anschlüsse (b1a, b1b) für einen vorausgehenden Zweidrahtdatenbusabschnitt (b1) des Busknotens sind in der ersten Anschlussreihe zwischen dem Anschluss (GND) für die negative Versorgungsspannung und demjenigen für das zweite Bezugspotenzial (GND) der ersten Anschlussreihe und dem Anschluss für die positive Versorgungsspannung (V_{bat}) der ersten Anschlussreihe angeordnet. Die zwei Anschlüsse (b2a, b2b) für einen nachfolgenden Zweidrahtdatenbusabschnitt (b2) des Busknotens sind in der zweiten Anschlussreihe zwischen dem Anschluss (GND) für die negative Versorgungsspannung und demjenigen für das zweite Bezugspotenzial (GND) der zweiten Anschlussreihe und dem Anschluss für die positive Versorgungsspannung (V_{bat}) der zweiten Anschlussreihe angeordnet.

Mindestens ein Leuchtmittel (LED1, LED2, LED3) ist in einer Aussparung (ASP) des Gehäuses angeordnet. Ein solches Gehäuse bietet den Vorteil, dass große Datenmengen bei geringer parasitärer Abstrahlung an das Leuchtmittel übertragen werden können. Solche Gehäuse eignen sich daher besonders für die Verwendung in bildgebenden Leuchtmodulgruppen. Hierbei werden die Leuchtmodule seriell hintereinander angeordnet.

In einer weitergehenden Ausprägung des Gehäuses sind mindestens drei Leuchtmittel (LED1, LED2, LED3) in einer Aussparung (ASP) des Gehäuses angeordnet. Diese mindestens drei Leuchtmittel (LED1, LED2, LED3) weisen bevorzugt für die menschliche Wahrnehmung jeweils eine unterschiedliche Leuchtfarbe auf, so dass über die Einstellung unterschiedlicher Leuchtstärken für die unterschiedlichen Leuchtmittel ein Farbeindruck hervorgerufen werden kann.

Die Anwendung der oben beschriebenen Vorrichtung und des oben beschriebenen Verfahrens ermöglicht nun ein Lichtmodul, das ein Gehäuse (GH) für eine integrierte Schaltung als Busknoten (BSn) umfasst. Das Leuchtmodul soll in einem mehrdimensionalen Datenbussystem zur Übertragung von Beleuchtungsdaten für Leuchtmittel (LED1, LED2, LED3) mittels eines differentiellen Zweidrahtdatenbusses (b1b2b3) eingesetzt werden. Die oben vorgeschlagene Buskonstruktion erlaubt es, auch bei einer Array-Anordnung von Leuchtmitteln eine Autoadressierung durchzuführen und Broadcast-Botschaften nach der Initialisierung an alle Leuchtmodule abzusetzen. Der Zweidrahtdatenbus (b1b2b3) ist wieder zur Übertragung von Daten zwischen einen Bus-Master (BM) und zwischen mindestens zwei Busknoten (BS1, BS2, BS3), insbesondere Leuchtmittel-Busknoten, vorgesehen. Der Zweidrahtdatenbus (b1b2b3) wird durch die Busknoten (BS1, BS2, BS3) in mindestens zwei Zweidrahtdatenbusabschnitte (b1, b2, b3) unterteilt. Diese müssen nun aber nicht mehr linear hintereinander liegen, sondern können schachbrettartig angeordnet werden. Lediglich zu Beginn ist eine Initialisierung notwendig. Bis auf einen ersten Busknoten (BS1) ist nun jeder der Busknoten (BS2, BS3) dazu vorgesehen, durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) oder dem Busmaster (BM) verbunden zu werden. Mindestens ein Busknoten (BSn) kann mit mindestens drei Zweidrahtdatenbusabschnitten (b1, b2, b3) verbunden werden. Hierdurch wird eine Verzweigung des Datenbusses möglich. Hierfür muss der betreffende Busknoten (BSn) zwei separate Master-Zweidrahtdatenbusschnittstellen (OWMa, OWMb) und/oder zwei Transfer-Gates (TGa, TGb) aufweisen, um die nunmehr zwei nachfolgenden Zweidrahtdatenbusabschnitte ansteuern zu können. Eine weitere Variante ist eine Konfiguration mit drei separaten Master-Zweidrahtdatenbusschnittstellen (OWMa, OWMb, OWMc) und/oder drei Transfer-Gates (TGa, TGb, TGc), um drei nachfolgende Zweidrahtdatenbusabschnitte ansteuern zu können. Dies ist jedoch nicht unbedingt nötig. Grundsätzlich reicht die Konfiguration mit zwei separaten Master-Zweidrahtdatenbusschnittstellen (OWMa, OWMb, OWMc) und/oder zwei Transfer-Gates (TGa, TGb, TGc) vollkommen aus, um eine zweidimensionale Fläche mit Leuchtmodulen füllen zu können. Daher sollte das Gehäuse (GH) des Busknotens (BSn) mindestens drei Reihen von Anschlüssen aufweisen, nämlich eine erste Anschlussreihe (V_{bat}, b1a, b1b), eine zweite Anschlussreihe (GND, b2a, b2b) sowie eine dritte Anschlussreihe (V_{bat}, b3a, b3b) und gegebenenfalls eine vierte Anschlussreihe (GND, b4a, b4b). Zumindest diese mindestens drei bzw. vier Anschlussreihen am Gehäuse (GH) sind zueinander im Winkel von 90° angeordnet. Dabei liegen zwei Anschlussreihen einander direkt gegenüber. Jede der drei bzw. vier Anschlussreihen hat dabei mindestens eine benachbarte Anschlussreihe, die im Winkel von 90° zu ihr angeordnet ist. Jede der Anschlussreihen umfasst genau einen Anschluss für eine Versorgungsspannung (GND, V_{bat}). Jede der Anschlussreihen, die einer anderen Anschlussreihe benachbart ist, weist einen Anschluss für eine andere Versorgungsspannung auf, als die Versorgungsspannung, deren Anschluss von der benachbarten Anschlussreihe umfasst ist. Dieser Anschluss der Versorgungsspannung ist bei allen Anschlussreihen jeweils der erste Anschluss in der Anschlussreihe bei gleicher Zählrichtung im Uhrzeigersinn oder gegen den Uhrzeigersinn. Jede Anschlussreihe umfasst die beiden Anschlüsse eines Zweidrahtdatenbusabschnitts. Diese beiden Anschlüsse dieses einen Zweidrahtdatenbusabschnitts liegen jeweils dem Anschluss für die Versorgungsspannung in der betreffenden Anschlussreihe benachbart. Mindestens ein Leuchtmittel (LED1, LED2, LED3) ist in einer Aussparung (ASP) des Gehäuses (GH) oder auf dem Gehäuse (GH) angeordnet.

In einer besonderen Ausführung dieses Leuchtmoduls liegt ein erster Anschluss einer ersten Versorgungsspannung in einer ersten Anschlussreihe, während ein zweiter Anschluss dieser ersten Versorgungsspannung liegt in einer zweiten Anschlussreihe. Die erste Anschlussreihe ist der zweiten Anschlussreihe gegenüber angeordnet. Der erste Anschluss ist durch einen Montageträger (englisch Lead-Frame) elektrisch leitend mit dem gegenüber liegenden zweiten Anschluss verbunden. Hierdurch können die Versorgungsleitungen kreuzungsfrei verlegt werden.

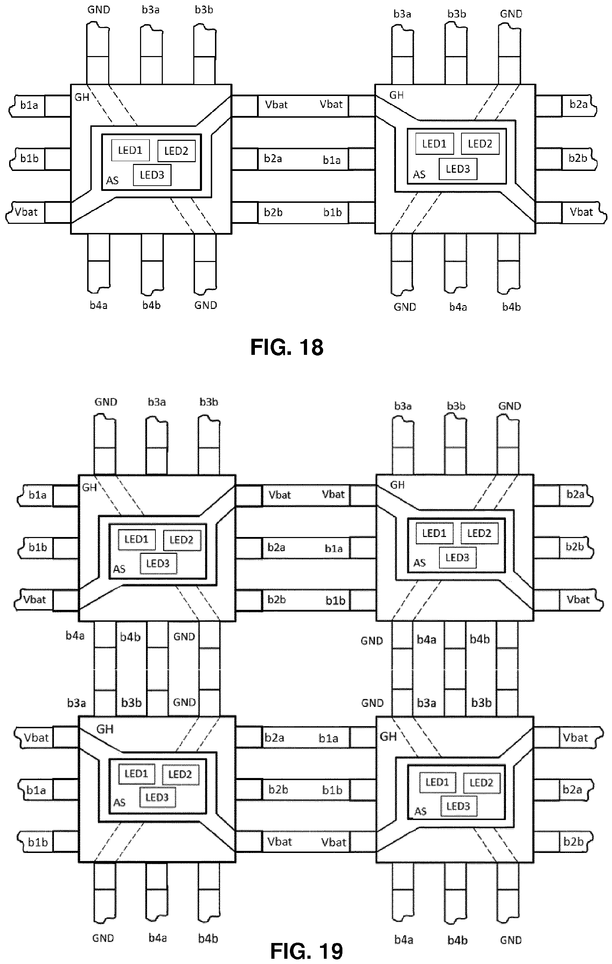

Besonders vorteilhaft ist es, wenn das Lichtmodul dazu vorgesehen ist, mit einem Lichtmodul mit einer horizontal und vertikal gespiegelten Lage der Versorgungsspannungsanschlüsse (GND, V_{bat}) zu einem Lichtmodulsystem verbaut zu werden. (siehe Fig. 18)

### Beschreibung der Figuren

Die Erfindung wird nachfolgend anhand diverser Ausführungsbeispiele und unter Bezugnahme auf die Zeichnung näher erläutert.
- Fig. 1: zeigt das Zustandsdiagramm eines Test-Controllers gemäß dem IEEE 1149 Standard. Die Fig. 1 wurde in der Einleitung erläutert.
- Fig. 2: zeigt die grundlegenden Signalformen eines JTAG-Datenprotokolls aus dem Stand der Technik.
- Fig. 3: zeigt die grundlegenden Signalformen des vorgeschlagenen Datenprotokolls auf dem Zweidrahtdatenbus (b1b2b3) oder einem angeschlossenen Zweidrahtdatenbusabschnitt (b1, b2, b3) des Zweidrahtdatenbusses (b1b2b3).
- Fig. 4: zeigt beispielhafte Pegelfolgen für jeweils ein Zeitschlitzpaket der Dauer T aus drei aufeinanderfolgenden Zeitschlitzen.
- Fig. 5: zeigt beispielhaft die Extraktion der Daten im betreffenden Busknoten (BSn) für drei aufeinander folgende Zeitschlitze.
- Fig. 6: zeigt schematisch ein beispielhaftes Zweidrahtdatenbussystem.
- Fig. 7: zeigt ein Detail aus dem beispielhaften Zweidrahtdatenbussystem: Die Verbindung zweier aufeinanderfolgender Busknoten.
- Fig. 8: zeigt schematisch vereinfacht eine beispielhafte Implementierung einer Bus-Master-Zweidrahtdatenbusschnittstelle.
- Fig. 9: zeigt schematisch vereinfacht eine beispielhafte Implementierung einer Busknoten-Zweidrahtdatenbusschnittstelle.
- Fig. 10: zeigt vereinfacht eine erfindungsgemäße JTAG-Schnittstelle mit Beleuchtungsregister (ILR).
- Fig. 11: zeigt vereinfacht eine erfindungsgemäße JTAG-Schnittstelle mit Beleuchtungsregister (ILR) und separatem zuschaltbaren seriellen Dateneingang für das Beleuchtungsregister.
- Fig. 12: zeigt schematisch ein beispielhaftes Zweidrahtdatenbussystem mit separatem seriellem Datenbus für Beleuchtungsdaten.
- Fig. 13: zeigt vereinfacht eine erfindungsgemäße JTAG-Schnittstelle mit Beleuchtungsregister (ILR) und Transfer-Gate-Control-Register (TGCR).
- Fig. 14: zeigt schematisch ein beispielhaftes Zweidrahtdatenbussystem, wobei jeder Busknoten über eine Bus-Masterschnittstelle zur Ansteuerung eines nachfolgenden Busknotens verfügt.
- Fig. 15: zeigt vereinfacht eine erfindungsgemäße JTAG-Schnittstelle mit Beleuchtungsregister (ILR) und Bus-Master-Control-Register (OWMCR).
- Fig. 16: zeigt eine besonders günstige Anordnung der Anschlüsse für eine erfindungsgemäße Vorrichtung.
- Fig. 17: zeigt ein besonders geeignetes Gehäuse (GH) für die Verwendung mit dem hier beschriebenen Datenbussystem.
- Fig. 18: zeigt zwei Lichtmodule für den flächenhaften Verbau als Flächenleuchte.
- Fig. 19: zeigt mehrere Lichtmodule gemäß Fig. 18, verbaut für eine Flächenleuchte,
- Fig. 20: zeigt eine flächenförmige Verkettung von sechs Lichtmodulen entsprechend Fig. 17 mit je zwei Zweidraht-Bus-Master-Schnittstellen (OWM1a bis OWM6a und OWM1b bis OWM6b) und einer Zweidrahtdatenbusschnittstelle (OWS1 bis OWS6).
- Fig. 21: zeigt vereinfacht eine erfindungsgemäße JTAG-Schnittstelle mit Beleuchtungsregister (ILR), Busknotenadressregister (BKADR) und Senderegister (SR).

### Fig. 2

Fig. 2 zeigt die grundlegenden Signalformen des erfindungsgemäßen Datenprotokolls auf dem Zweidrahtdatenbus (b1b2b3) oder einem angeschlossenen Zweidrahtdatenbusabschnitt (b1, b2, b3) des Zweidrahtdatenbusses (b1b2b3). Im oberen Teil der Fig. 2 sind die Signalformen der differentiellen Pegel für einen Zweidraht-Test-Bus analog dem IEEE 1149 Standard schematisch skizziert. Das oberste Signal (TDA) zeigt das Datensignal. Das zweite Signal (TCK) zeigt den zugehörigen Systemtakt (TCK). Beide Signale sind, auch wenn sie hier einen differentiellen Pegel bezeichnen, als Stand der Technik markiert und gehören zum 2-Draht-JTAG-Standard. Darunter ist beispielhaft die digitale Kodierung vermerkt. Hierbei wird noch nicht dargestellt, ob der betreffende Busknoten (BSn) oder der Bus-Master (BM) sendet. Hier ist nur die Signalform skizziert.

### Fig. 3

Fig. 3 zeigt eine vorgeschlagene Signalform in Form des differentiellen Signalpegels (TOW) auf dem Zweidrahtdatenbus (b1b2b3) oder einem angeschlossenen Zweidrahtdatenbusabschnitt (b1, b2, b3) des Zweidrahtdatenbusses (b1b2b3), die den Takt und die Daten kombiniert.

Es sind verschiedene differentielle Spannungspegel skizziert. Das differentielle Signal (TOW) weist beim Senden drei differentielle Spannungspegelbeträge auf:
1. einen dritten differentiellen Spannungsbetragspegel (V_{IO}),
2. einen mittleren zweiten differentiellen Spannungsbetragspegel (V_{M}) und
3. einen ersten differentiellen Spannungsbetragspegel (-V_{IO}).

Für die Extraktion des Systemtaktes ist ein zweiter Schwellwert (V_{2L}) in Form eines zweiten Schwellspannungsbetrages definiert, der zwischen dem ersten differentiellen Spannungsbetragspegel (-V_{IO}) und dem mittleren zweiten differentiellen Spannungsbetragspegel (V_{M}) liegt.

Für die Extraktion der Daten ist ein erster Schwellspannungsbetrag, der erste Schwellwert (V_{1H}), des Bus-Masters (BM) und ein dritter Schwellspannungsbetrag, der dritte Schwellwert (V_{2H}), der Busknoten (BS1, BS2, BS3) definiert, die zwischen dem dritten differentiellen Spannungsbetragspegel (V_{IO}) und dem mittleren zweiten differentiellen Spannungsbetragspegel (V_{M}) liegen und in etwa gleich sein sollten.

Durch den zweiten Schellwert (V_{2L}) in Form des zweiten Schwellspannungsbetrags der Busknoten (BS1, BS2, BS3) und den ersten differentiellen Spannungsbetragspegel (-V_{IO}) wird ein erster Spannungsbetragsbereich (V_{B1}) definiert und begrenzt.

Durch den dritten Schwellspannungsbetrag, den dritten Schwellwert (V_{2H}), der Busknoten (BS1, BS2, BS3) bzw. den ersten Schwellspannungsbetrag des ersten Schwellwerts (V_{1H}) des Bus-Masters (BM) einerseits und den zweiten Schwellspannungsbetrag des zweiten Schwellwerts (V_{2L}) der Busknoten (BS1, BS2, BS3) andererseits wird ein zweiter Spannungsbetragsbereich (V_{B2}) definiert und begrenzt.

Durch den dritten Schwellspannungsbetrag, den dritten Schwellwert (V_{2H}), der Busknoten (BS1, BS2, BS3) bzw. den ersten Schwellspannungsbetrag (V_{1H}) des Bus-Masters (BM) einerseits und den dritten differentiellen Spannungsbetragspegel (V_{IO}) andererseits wird ein dritter Spannungsbetragsbereich (V_{B3}) definiert und begrenzt.

Zeitlich gliedert sich das Signal auf dem Zweidrahtdatenbus (b1b2b3) oder einem angeschlossenen Zweidrahtdatenbusabschnitt (b1, b2, b3) des Zweidrahtdatenbusses (b1b2b3) in Zeitschlitzpakete mit mindestens drei Zeitschlitzen (TIN0, TIN1, TDO_{Z}). Die Zeitschlitzpakete folgen typischerweise aufeinander mit einer Systembasistaktperiode (T). Die Reihenfolge der Zeitschlitze innerhalb eines Zeitschlitzpaketes kann für ein System beliebig, aber vorzugsweise für alle Zeitschlitzpakete gleich gewählt werden. Jede Systembasistaktperiode (T) gliedert sich in mindestens drei Zeitschlitze mit typischerweise jeweils zwei Halbtaktperioden (T_{1H}, T_{2H}), deren Länge vorzugsweise aber nicht notwendigerweise gleich ist.

In einer Halbtaktperiode der mindestens zwei Halbtaktperioden (T_{1H}, T_{2H}) wird vorzugsweise jeweils der Systemtakt übertragen.

Hierbei befindet sich der Betrag des differentiellen Signalpegels (TOW) auf dem Zweidrahtdatenbus (b1b2b3) oder auf dem angeschlossenen Zweidrahtdatenbusabschnitt (b1, b2, b3) des Zweidrahtdatenbusses (b1b2b3) in einer Halbtaktperiode der mindestens zwei Halbtaktperioden (T_{1H}, T_{2H}) im ersten Spannungsbetragsbereich (V_{B1}). Hierdurch wird ein erster logischer Wert des Systemtaktes übertragen. In dem Beispiel reicht es aus, dass der Betrag des Signalpegels (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich unterhalb der zweiten Spannungsbetragsschwelle, dem zweiten Schwellwert (V_{2L}), befindet. Der erste Spannungsbetragsbereich (V_{B1}) kann in vielen Anwendungsfällen auch als nach unten offen angesehen werden.

In der anderen Halbtaktperiode der mindestens zwei Halbtaktperioden (T_{1H}, T_{2H}) befindet sich der differentielle Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) im zweiten Spannungsbetragsbereich (V_{B2}) oder dritten Spannungsbetragsbereich (V_{B3}). Hierdurch wird ein zweiter logischer Wert des Systemtaktes übertragen, der vom ersten logischen Wert des Systemtaktes verschieden ist. In dem Beispiel reicht es aus, dass der differentielle Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich oberhalb der zweiten Spannungsbetragsschwelle in Form des zweiten Schwellwerts (V_{2L}) befindet. Eine Begrenzung nach oben durch die Versorgungsspannung (V_{bat}) oder eine andere Obergrenze (V_{IO}) ist für die Entscheidung, ob der Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich im zweiten Spannungsbetragsbereich (V_{B2}) oder dritten Spannungsbetragsbereich (V_{B3}) befindet, nicht relevant und wird daher in der Praxis nicht verwendet. Daher kann der dritte Spannungsbetragsbereich (V_{B3}) in vielen Anwendungsfällen auch als nach oben offen angesehen werden.

Da es für die Extraktion des Systemtaktes innerhalb dieser anderen Halbtaktperiode der mindestens zwei Halbtaktperioden (T_{1H}, T_{2H}) nicht relevant ist, ob der Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich im dritten Spannungsbetragsbereich (V_{B3}) oder zweiten Spannungsbetragsbereich (V_{B2}) befindet, können nun durch eine Unterscheidung zwischen dem dritten Spannungsbetragsbereich (V_{B3}) und dem zweiten Spannungsbetragsbereich (V_{B2}) innerhalb dieser anderen Halbtaktperiode der mindestens zwei Halbtaktperioden (T_{1H}, T_{2H}) Daten übertragen werden.

In dieser anderen Halbtaktperiode der mindestens zwei Halbtaktperioden (T_{1H}, T_{2H}) befindet sich der differentielle Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) im zweiten Spannungsbetragsbereich (V_{B2}), wenn ein erster logischer Datenwert übertragen wird und im dritten Spannungsbetragsbereich (V_{B3}), wenn ein zweiter logischer Datenwert übertragen wird.

Rechts neben dem unteren Signal sind zur besseren Verdeutlichung beispielhafte logische Zustände für die drei differentiellen Pegel eingezeichnet.

Der obere differentielle Pegel entspricht in dem Beispiel einem beispielhaften logischen Wert des Systemtakts (TCK) von 1 und einem beispielhaften logischen Wert des Datensignals (TDA) von 1.

Der mittlere differentielle Pegel entspricht in dem Beispiel einem beispielhaften logischen Wert des Systemtakts (TCK) von 1 und einem beispielhaften logischen Wert des Datensignals (TDA) von 0.

Der untere differentielle Pegel entspricht in dem Beispiel einem beispielhaften logischen Wert des Systemtakts (TCK) von 0.

### Fig. 4

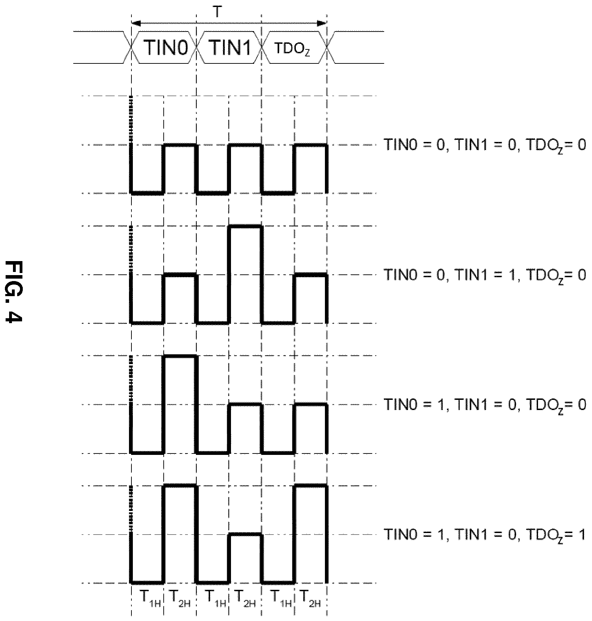

Fig. 4 zeigt eine beispielhafte Protokollsequenz von drei aufeinander folgenden Zeitschlitzen (TIN0, TIN1, TDO_{Z}). In anderen Implementierungen der Erfindung kann ein Zeitschlitzpaket auch mehr als drei Zeitschlitze (TIN0, TIN1, TDO_{Z}) umfassen. Im ersten Zeitschlitz (TIN0) werden typischerweise Kontrolldaten übertragen, die dem TMS-Signal des Standard-Boundary-Scan (IEEE1149) entsprechen. Dieses Signal steuert typischerweise den Zustand des endlichen Automaten gemäß Zustandsdiagram in Fig. 1. Im zweiten Zeitschlitz (TIN1) werden typischerweise die Daten übertragen, die dem TDI -Signals des Standard-Boundary-Scans (IEEE 1149) entsprechen. In diesen beiden Zeitschlitzen überträgt der Bus-Master (BM) Daten auf den Busknoten. Sollte parallel auch der Busknoten senden, so überschreibt der Busknoten den Bus-Master (BM), wenn dessen schaltbare Stromquelle (T1a, T1b) ausgeschaltet ist. Umgekehrt kann der Bus-Master (BM) den Busknoten überschreiben, wenn die schaltbare Stromquelle (T3a, T3b) des Busknotens ausgeschaltet ist. Ein Überschreiben des Bus-Masters (BM) durch den Busknoten kann der Bus-Master (BM) dadurch detektieren, dass die gesendeten Daten (TMS_TDI) im Hinblick auf ihren logischen Inhalt darauf hin durch eine Logik im Bus-Master (BM) überprüft werden, ob diese mit den empfangenen Daten (TDo) in der betreffenden Halbtaktperiode übereinstimmen, in der der Systemtakt (TCK) den dominierenden Schalter (T1a, T1b) nicht schließt. Im Falle einer solchen Asynchronizität kann der Bus-Master (BM) durch permanentes Halten des differentiellen Signalpegels (TOW) auf dem Zweidrahtdatenbus (b1b2b3) oder dem angeschlossenen ersten Zweidrahtdatenbusabschnitt (b1) des Zweidrahtdatenbusses (b1b2b3) im dritten Spannungsbetragsbereich (V_{B3}) bei geeigneter Auslegung der State-Machine der Test-Controller (TAPC) der Busknoten diese wieder re-synchronisieren. Hierzu muss die State-Machine der Test-Controllers (TAPC) der Busknoten so ausgelegt sein, dass ein permanentes Halten im dritten Spannungsbetragsbereich (V_{B3}) im Kontrollfeld, also hier beispielsweise im ersten Zeitschlitz (TIN0), zu einem Reset in Form der Einnahme eines sogenannten "Idle-States" (TLR) als einem abwartenden Zustand der Test-Controller (TAPC) führt. Dies ist bei einem Zustandsdiagramm eines JTAG-Controllers gemäß IEEE 1149 Standard der Fall. Dieses permanente Halten des differentiellen Signalpegels (TOW) auf dem Zweidrahtdatenbus (b1b2b3) oder dem angeschlossenen ersten Zweidrahtdatenbusabschnitt (b1) des Zweidrahtdatenbusses (b1b2b3) im dritten Spannungsbetragsbereich (V_{B3}) kann durch ein dauerhaftes Einschalten der schaltbaren Stromquelle (T2a, T2b) des Bus-Masters (BM) für die Dauer des Reset-Vorgangs erfolgen.

### Fig. 5

Fig. 5 zeigt eine erfindungsgemäße, beispielhafte Abfolge von differentiellen Signalen. Eingabe sind die mit "2 Draht Daten" bezeichneten Zweidraht basierenden Daten, die nicht differentiell sind. In dem Beispiel werden drei aufeinanderfolgende Zeitschlitzpakete (n-1, n, n+1) mit beispielhaft je drei Zeitschlitzen (TIN0, TIN1, TDO_{Z}) dargestellt. Die Verwendung von mehr als drei Zeitschlitzen je Zeitschlitzpakete ist natürlich denkbar. Die Bedeutung der jeweiligen Zeitschlitze innerhalb eines Zeitschlitzpakets hängt nur von der zeitlichen Position ab und ändert sich nicht. Wenn in dieser Beschreibung vom ersten Zeitschlitz (TIN0), zweiten Zeitschlitz (TIN1) und dritten Zeitschlitz (TDO_{z}) die Rede ist, so ist das eine reine Bezeichnung und bezieht sich nicht auf die Position innerhalb eines Zeitschlitzpaketes. Vorzugsweise ist die zeitliche Positionierung der einzelnen mindestens drei Zeitschlitze (TIN0, TIN1, TDO_{Z}) innerhalb der Zeitschlitzpakete immer gleich oder zumindest durch einen Algorithmus vorhersagbar. Auch zeigt die Figur den zugehörigen Systemtakt (nicht differentieller 2 Draht Takt). Im Zeitschlitzpaket n-1 liefert der betroffene Busknoten (BSn) im Zeitschlitz TDO_{Z(n-1)} eine logische 1 und im Zeitschlitzpaket n im Zeitschlitz TDO_{Z(n)} eine logische 1 und im Zeitschlitzpaket n+1 im Zeitschlitz TDO_{Z(n+1)} eine logische 0. Die vom Bus-Master (BM) gesendeten Daten in den Zeitschlitzen TIN0ₙ₋₁, TIN1ₙ₋₁, TIN0ₙ, TIN1ₙ, TIN0ₙ₊₁, TIN1ₙ₊₁ sind in ihrem logischen Gehalt nicht beispielhaft festgelegt und darum schraffiert. Das mit "TOW" bezeichnete Signal soll den differentiellen Potenzialverlauf des differentiellen Signalpegels (TOW) auf dem Zweidrahtdatenbus (b1b2b3...bₙ..bₘ) oder einem angeschlossenen n-ten Zweidrahtdatenbusabschnitt (bₙ) des Zweidrahtdatenbusses (b1b2b3...bₙ..bₘ) schematisch veranschaulichen. Aus diesem Potenzialverlauf der Potentialdifferenz auf dem betroffenen Zweidrahtdatenbusabschnitt (bₙ) erzeugt beispielhaft der dritte Komparator (cmp3) des betroffenen Busknotens (BSn) die durch den betroffenen Busknoten (BSn) empfangenen Daten (TMS_TDIₙ). Der zweite Komparator (cmp2) des betroffenen Busknotens (BSn) erzeugt beispielhaft aus dem differentiellen Potenzialverlauf des differentiellen Signalpegels (TOW) auf dem betroffenen Zweidrahtdatenbusabschnitt (bₙ) das durch den betreffenden Busknoten (BSn) empfangene Taktsignal (TCKₙ), das dem rekonstruierten Systemtakt (TCK) entspricht. Bei geeigneter Synchronisierung von betroffenem Busknoten (BSn) und Bus-Master (BM), erzeugt der betroffene Busknoten (BSn) einen internen Systembasistakt (iTCKₙ), der erst in der zweiten Halbtaktperiode (T_{2H}) des dritten Zeitschlitzes (TDO_{Z}) der Systembasistaktperiode (T) des n-ten Zeitschlitzpaketes einen Puls mit der Dauer einer Halbtaktperiode zeigt. Mit der steigenden Flanke dieses Systembasistakt-Signals übernimmt der betroffene Busknoten (BSn) in diesem Beispiel die logischen Werte der vom Bus-Master (BM) gesendeten Daten (TMS_TDIₙ), welche mittels der fallenden Flanke von TCKₙ detektiert wurden. Mit der fallenden Flanke des Taktsignals (TCKₙ) zu Beginn des nächsten Zeitschlitzpaketes wird der in diesem Beispiel vom betroffenen Busknoten (BSn) zu sendende Wert (TDOₙ) geändert. TDOₙ wird jedoch erst im dritten Zeitschlitz (TDO_{Z(n+1)}) des folgenden n+1-ten Zeitschlitzpaketes aktiv, wenn der betroffene Busknoten (BSn) senden darf. Dem Fachmann ist klar, dass die Steuerung nicht nur mittels der in Fig. 5 dargestellten Steuerung über die fallende Flanke des Systemtaktes (TCKₙ) möglich ist, sondern auch über die steigenden Flanke.

### Fig. 6

Fig. 6 zeigt einen beispielhaften Zweidrahtdatenbus (b1b2b3) mit drei Busknoten (BS1, BS2, BS3), drei Zweidrahtdatenbusabschnitten (b1, b2, b3) und mit einem Busmaster (BM). Der erste Zweidrahtdatenbusabschnitt (b1) verbindet den Busmaster (BM) mit dem ersten Busknoten (BS1).

Der zweite Zweidrahtdatenbusabschnitt (b2) verbindet den zweiten Busknoten (BS2) mit dem ersten Busknoten (BS1). Der dritte Zweidrahtdatenbusabschnitt (b3) verbindet den dritten Busknoten (BS3) mit dem zweiten Busknoten (BS2).

Der Zweidrahtdatenbus wird durch einen Bus-Master (BM) mittels einer Master-Zweidrahtdatenbusschnittstelle (OWM) gesteuert, an die der erste Zweidrahtdatenbusabschnitt (b1) angeschlossen ist.

Die erste Zweidrahtdatenbusschnittstelle (OWS1) ist mit dem ersten Zweidrahtdatenbusabschnitt (b1) verbunden. Sie empfängt über diesen ersten Zweidrahtdatenbusabschnitt (b1) Daten vom Bus-Master und sendet solche zu diesem. Intern stellt sie einen ersten rekonstruierten Systemtakt (TCK1) bereit, mit dem die interne JTAG-Schnittstelle des ersten Busknotens (BS1) betrieben wird. Des Weiteren stellt sie das erste kombinierte TMS-TDI-Signal (TMS_TDI1) bereit, das in diesem Beispiel im Zeitmultiplex das Test-Mode-Signal (TMS) und das Dateneingangssignal (TDI) umfasst. Mit dem Test-Mode-Signal (TMS) wird der endliche Automat (finite state machine) des Test-Controllers (TAPC) der JTAG-Schnittstelle des ersten Busknotens (BS1) gesteuert. Die Daten des TDI-Signalanteils werden zum Beschicken der Schieberegister der JTAG-Schnittstelle des ersten Busknotens (BS1) benutzt. Umgekehrt liefert die JTAG-Schnittstelle mit dem seriellen TDo Ausgangssignal Daten aus den Registern der JTAG-Schnittstelle des ersten Busknotens (BS1) zurück. Durch ein erstes Transfer-Gate (TG1) kann der erste Zweidrahtdatenbusabschnitt (b1) mit dem nachfolgenden zweiten Zweidrahtdatenbusabschnitt (b2) verbunden werden. Hierzu beschreibt der Bus-Master (BM) ein hier nicht gezeichnetes Transfer-Gate-Control-Register (TGCR) des ersten Busknotens (BS1) über den Zweidrahtdatenbus (b1) und setzt ein Flag in dem besagten Transfer-Gate-Control-Register (TGCR) des ersten Busknotens (BS1), das die erste Enable-Leitung (en₁) innerhalb des ersten Busknotens (BS1) setzt oder löscht. In Abhängigkeit von dieser ersten Enable-Leitung (en₁) des ersten Busknotens (BS1) wird das erste Transfer-Gate (TG1) des ersten Busknotens (BS1) geöffnet und geschlossen. Somit kann mittels eines Befehls vom Bus-Master (BM) an den ersten Busknoten (BS1) der Zweidrahtdatenbus (b1b2b3) verlängert und verkürzt werden.

Die zweite Zweidrahtdatenbusschnittstelle (OWS2) ist mit dem zweiten Zweidrahtdatenbusabschnitt (b2) verbunden. Sie empfängt über diesen zweiten Zweidrahtdatenbusabschnitt (b2) Daten vom Bus-Master (BM), wenn der erste Busknoten (BS1) sein Transfer-Gate (TG1) geschlossen hat. Die zweite Zweidrahtdatenbusschnittstelle (OWS2) sendet auch solche Daten zu dem Bus-Master (BM). Intern stellt sie einen zweiten rekonstruierten Systemtakt (TCK2) bereit, mit dem die interne JTAG-Schnittstelle des zweiten Busknotens (BS2) betrieben wird. Des Weiteren stellt sie das zweite kombinierte TMS-TDI-Signal (TMS_TDI2) bereit, das in diesem Beispiel im Zeitmultiplex das Test-Mode-Signal (TMS) und das Dateneingangssignal (TDI) umfasst. Mit dem Test-Mode-Signal (TMS) wird der endliche Automat (finite state machine) des Test-Controllers (TAPC) der JTAG-Schnittstelle des zweiten Busknotens (BS2) gesteuert. Die Daten des TDI-Signalanteils werden zum Beschicken der Schieberegister der JTAG-Schnittstelle des zweiten Busknotens (BS2) benutzt. Umgekehrt liefert die JTAG-Schnittstelle des zweiten Busknotens (BS2) mit dem seriellen TDo Ausgangssignal Daten aus den Registern der JTAG-Schnittstelle des zweiten Busknotens (BS2) zurück. Durch ein zweites Transfer-Gate (TG2) kann der zweite Zweidrahtdatenbusabschnitt (b2) mit dem dritten Zweidrahtdatenbusabschnitt (b3) verbunden werden. Hierzu beschreibt der Bus-Master (BM) ein hier nicht gezeichnetes Transfer-Gate-Control-Register (TGCR) des zweiten Busknotens (BS2) über den ersten Zweidrahtdatenbusabschnitt (b1) und den zweiten Zweidrahtdatenbusabschnitt (b2) und setzt ein Flag in dem Transfer-Gate-Control-Register (TGCR) des zweiten Busknotens (BS2), das die zweite Enable-Leitung (en2) des zweiten Busknotens (BS2) setzt oder löscht. In Abhängigkeit von dieser zweiten Enable-Leitung (en2) des zweiten Busknotens (BS2) wird das zweite Transfer-Gate (TG2) des zweiten Busknotens (BS2) geöffnet und geschlossen. Somit kann mittels eines Befehls vom Bus-Master (BM) der Zweidrahtdatenbus (b1b2b3) noch weiter verlängert und verkürzt werden.

Die dritte Zweidrahtdatenbusschnittstelle (OWS3) ist mit dem dritten Zweidrahtdatenbusabschnitt (b3) verbunden. Sie empfängt über diesen dritten Zweidrahtdatenbusabschnitt (b3) Daten vom Bus-Master (BM), wenn der erste Busknoten (BS1) sein Transfer-Gate (TG1) geschlossen hat und wenn der zweite Busknoten (BS2) ebenfalls sein zweites Transfer-Gate (TG2) geschlossen hat. Die dritte Zweidrahtdatenbusschnittstelle (OWS3) sendet auch solche Daten zu dem Bus-Master (BM). Intern stellt sie einen dritten rekonstruierten Systemtakt (TCK3) bereit, mit dem die interne JTAG-Schnittstelle des dritten Busknotens (BS2) betrieben wird. Des Weiteren stellt sie das dritte kombinierte TMS-TDI-Signal (TMS_TDI3) bereit, das in diesem Beispiel im Zeitmultiplex das Test-Mode-Signal (TMS) und das Dateneingangssignal (TDI) für die JTAG-Schnittstelle des dritten Busknotens (BS3) umfasst. Mit dem Test-Mode-Signal (TMS) wird der endliche Automat (finite state machine) des Test-Controllers (TAPC) der JTAG-Schnittstelle des dritten Busknotens (BS3) gesteuert. Die Daten des TDI-Signalanteils werden zum Beschicken der Schieberegister der JTAG-Schnittstelle des dritten Busknotens (BS3) benutzt. Umgekehrt liefert die JTAG-Schnittstelle des dritten Busknotens (BS3) mit dem seriellen TDo-Ausgangssignal Daten aus den Registern der JTAG-Schnittstelle des dritten Busknotens (BS3) zurück. Durch ein drittes Transfer-Gate (TG3) des dritten Busknotens (BS3) kann der dritte Zweidrahtdatenbusabschnitt (b3) mit weiteren Zweidrahtdatenbusabschnitten (bₙ) verbinden. Hier soll der dritte Busknoten aber beispielhaft den Zweidrahtdatenbus (b1b2b3) abschließen.

Jeder der Busknoten (BS1, BS2, BS3) ist mit Gruppen von Leuchtmitteln (LM1, LM2, LM3) verbunden, die durch den jeweiligen Busknoten (BS1, BS2, BS3) gesteuert werden. Andere Verbraucher elektrischer Energie sind natürlich denkbar.

### Fig. 7

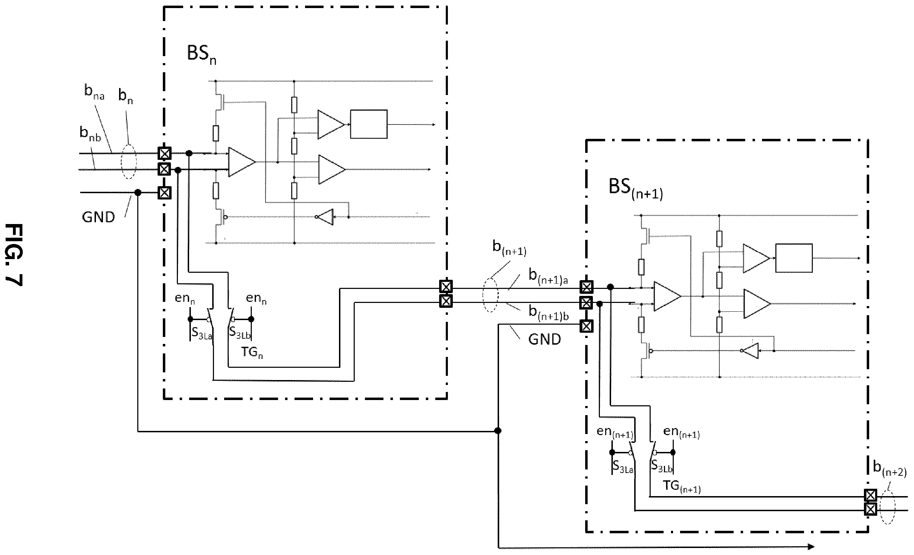

Fig. 7 entspricht der Aneinanderreihung zweier Busknotendatenbusschnittstellen in Form von zwei rechten Hälften der nachfolgenden Fig. 9. Ein vorausgehender n-ter Zweidrahtdatenbusabschnitt (bₙ) ist mit einem n-ten Busknoten (BSₙ) verbunden. Dieser n-te Busknoten (BSₙ) kann mittels seines Transfer-Gate (TGn) diesen vorausgehenden n-ten Zweidrahtdatenbusabschnitt (bₙ) mit dem nachfolgenden n+1-ten Zweidrahtdatenbusabschnitt (b₍ₙ₊₁₎) verbinden. Sofern das Transfer-Gate (TGₙ) des n-ten Busknotens (BSₙ) geöffnet ist, legt ein nicht gezeigter differentieller Schalter den differentiellen Pegel (TOW) des n+1-ten Zweidrahtdatenbusabschnitts(b₍ₙ₊₁₎) und damit auf allen nachfolgenden Zweidrahtdatenbusabschnitte (b(ₙ₊ᵢ)mit i > n+1), sofern vorhanden bzw. über Transfer-Gates zugeschaltet, vorzugsweise auf eine definierte differentielle Potenzialdifferenz und verhindert damit eine versehentliche Datenübertragung.

Der n+1-te Busknoten (BS₍ₙ₊₁₎) kann mittels seines Transfer-Gates (TG₍ₙ₊₁₎) wieder diesen vorausgehenden n+1-ten Zweidrahtdatenbusabschnitt (b₍ₙ₊₁₎) mit dem n+2-ten Zweidrahtdatenbusabschnitt (b₍ₙ₊₂₎) verbinden. Sofern das Transfer-Gate (TG₍ₙ₊₁₎) des n+1-ten Busknotens (BS₍ₙ₊₁₎) geöffnet ist, legt ein nichtgezeichneter differentieller Schalter wieder den differentiellen Signalpegel (TOW) auf dem n+2-ten Zweidrahtdatenbusabschnitts(b₍ₙ₊₂₎) und damit auf allen nachfolgenden Zweidrahtdatenbusabschnitte (b₍ₙ₊₃₎), sofern vorhanden bzw. über Transfer-Gates zugeschaltet, auf eine definierte differentielle Potenzialdifferenz und verhindert damit die versehentliche Datenübertragung.

### Fig. 8

Fig. 8 zeigt die Implementierung der Erfindung für eine Master-Zweidrahtdatenbusschnittstelle (OWM).

In den Fign. 7 und 8 sind die wichtigsten Teile einer Schnittstelle zur Realisierung des Protokolls für einen dem Eindrahtdatenbus oder dem hier beispielhaft angeschlossenen ersten Zweidrahtdatenbusabschnitt (b1) des Zweidrahtdatenbusses (b1b2b3) zwischen dem Bus-Master und dem betreffenden Busknoten (BSn) dargestellt. Als Bezugspotenzial für die Signale auf dem Zweidrahtdatenbus (b1b2b3) und dem angeschlossenen ersten Zweidrahtdatenbusabschnitt (b1) des Zweidrahtdatenbusses (b1b2b3) dient hier das zweite Bezugspotenzial (GND) der Bezugspotenzialleitung (GND), welche beispielhaft auf Masse liegt.

Durch den differentiellen Spannungsteiler aus
- einem unteren Widerstand (R2a) zwischen dem ersten Eindrahtdatenbus (b1a, b2a, b3a) und damit dem angeschlossenen ersten Eindrahtdatenbusabschnitt (b1a) des ersten Eindrahtdatenbusses (b1a, b2a, b3a) des Zweidrahtdatenbusses (b1b2b3) und Bezugspotenzialleitung (GND) mit dem zweiten Bezugspotenzial (GND) und
- einem weiteren unteren Widerstand (R2b) zwischen dem zweiten Eindrahtdatenbus (b1b, b2b, b3b) und damit dem angeschlossenen zweiten Eindrahtdatenbusabschnitt (b1b) des zweiten Eindrahtdatenbusses (b1b, b2b, b3b) des Zweidrahtdatenbusses (b1b2b3) und Bezugspotenzialleitung (GND) ) mit dem zweiten Bezugspotenzial (GND) und
- einem oberen Widerstand (R1a) zwischen dem ersten Eindrahtdatenbus (b1a, b2a, b3a) und damit dem angeschlossenen ersten Eindrahtdatenbusabschnitt (b1a) des ersten Eindrahtdatenbusses (b1a, b2a, b3a) des Zweidrahtdatenbusses (b1b2b3) und der Versorgungsspannung (V_{bat}) mit einem Potenzial (V_{IO}) und
- einem weiteren oberen Widerstand (R1b) zwischen dem zweiten Eindrahtdatenbus (b1b, b2b, b3b) und damit dem angeschlossenen zweiten Eindrahtdatenbusabschnitt (b1b) des zweiten Eindrahtdatenbusses (b1b, b2b, b3b) des Zweidrahtdatenbusses (b1b2b3) und der Versorgungsspannung (V_{bat}) mit einem Potenzial (V_{IO})
wird der Zweidrahtdatenbus (b1b2b3) in Form des angeschlossenen ersten Zweidrahtdatenbusabschnitts (b1) hinsichtlich des Betrags des differentiellen Signalpegels (TOW) zunächst auf einem mittleren zweiten differentiellen Spannungsbetragspegel (V_{M}) zwischen diesen beiden Potenzialen (-V_{IO}, V_{IO}) gehalten. Auf der Master-Seite werden nun immer in einer Halbtaktperiode der mindestens zwei Halbtaktperioden (T_{1H}, T_{2H}) vorzugsweise jedes Zeitschlitzes der drei Zeitschlitze einer Systembasistaktperiode (T) des Systembasistaktes die dominierenden Schalter (T1a, T1b) geschlossen. Hierdurch wird ein maximaler differentieller Signalpegel (TOW) auf dem Zweidrahtdatenbus (b1b2b3) erzwungen. Da der Innenwiderstand der dominierenden Schalter (T1a, T1b) vorzugsweise kleiner als der Innenwiderstand des differentiellen Spannungsteilers aus den beiden oberen Widerständen (R1a, R1b) und den beiden unteren Widerständen (R2a, R2b) ist, wird dadurch in der betreffenden Halbtaktperiode der mindestens zwei Halbtaktperioden (T_{1H}, T_{2H}) vorzugsweise jedes Zeitschlitzes der drei Zeitschlitze einer Systembasistaktperiode (T) durch das Schließen der dominierenden Schalter (T1a, T1b) der differentielle Spannungspegel, der der differentielle Signalpegel (TOW) ist, auf dem Zweidrahtdatenbus (b1b2b3) von dem besagten mittleren zweiten differentiellen Spannungsbetragspegel (V_{M}) in einem zweiten Spannungsbetragsbereich (V_{B2}) zumindest auf den ersten differentiellen Spannungsbetragspegel (-V_{IO}), der sich im ersten Spannungsbetragsbereich (V_{B1}) befindet, gezogen. Die dominierenden Schalter (T1a, T1b) werden dabei durch den Systemtakt auf Masterseite (TCK) angesteuert. Sind diese dominierenden Schalter (T1a, T1b) nicht geschlossen, so können Daten bidirektional in den anderen Halbtaktperioden der mindestens zwei Halbtaktperioden (T_{1H}, T_{2H}) vorzugsweise jedes Zeitschlitzes der typischerweise drei Zeitschlitze (TIN0, TIN1, TDO_{Z}) einer Systembasistaktperiode (T) übertragen werden. Auf der Bus-Master-Seite speist dazu eine geschaltete Stromquelle (T2a, T2b) Strom in den Zweidrahtdatenbus (b1b2b3) ein, wenn die Sendeleitung (TMS_TDI) aus dem Inneren des Bus-Masters (BM) aktiv ist. Hierzu schließt die Sendeleitung (TMS_TDI) aus dem Inneren des Bus-Masters (BM) die Schalter (T2a, T2b) der steuerbaren Stromquelle. Vorzugsweise handelt es sich also um Transistoren (MOS-Transistoren im Speziellen), die als Stromquellen im eingeschalteten Zustand betrieben werden. Ganz besonders eignen sich also Stromspiegelschaltungen für deren Ansteuerung. Hierdurch liefern die so ausgebildeten Transistorstromquellen der steuerbaren differentiellen Stromquelle (T2a, T2b) Strom in den Zweidrahtdatenbus (b1b2b3). Vorzugsweise ist dieser Strom betragsmäßig jeweils größer als der Betrag des Stromes, den der differentielle Pull-Schaltkreis bestehend aus den oberen Widerständen (R1a, R1b) und den unteren Widerständen (R2a, R2b) abführen kann. Somit wandert der differentielle Signalpegel (TOW) in Form der Potenzialdifferenz auf dem Zweidrahtdatenbus (b1b2b3) oder zumindest auf dem angeschlossenen ersten Zweidrahtdatenbusabschnitts (b1) des Zweidrahtdatenbusses (b1b2b3) in diesem Fall betragsmäßig vom mittleren zweiten differentiellen Spannungsbetragspegel (V_{M}) in einem zweiten Spannungsbetragsbereich (V_{B2}) zu einem Potenzial nahe der Versorgungsspannung (V_{IO1}) für die schaltbare differentielle Stromquelle (T2a, T2b) des Bus-Masters (BM) in dem dritten Spannungsbetragsbereich (V_{B3}). Werden jedoch die dominierenden Schalter (T1a, T1b) geschlossen, so überschreiben diese den Einfluss der schaltbaren differentiellen Stromquelle (T2a, T2b) des Bus-Masters (BM) und des Pull-Schaltkreises bestehend aus den oberen Widerständen (R1a, R1b) und den unteren Widerständen (R2a, R2b). Diese sind bei geeigneter Auslegung der dominierenden Schalter (T1a, T1b) nicht in der Lage, den Betrag des Signalpegels (TOW) auf dem Zweidrahtdatenbus (b1b2b3) oder zumindest dem beispielhaft angeschlossenen ersten Zweidrahtdatenbusabschnitt (b1) des Zweidrahtdatenbusses (b1b2b3) gegen die dominierenden Schalter (T1a, T1b) zu bestimmen.

In gleicher Weise arbeitet die zweite schaltbare Stromquelle auf der Busknoten-Seite, siehe Fig. 9. Auf der Busknoten-Seite speist dazu eine geschaltete Stromquelle (T3a, T3b) Strom in den Zweidrahtdatenbus (b1b2b3) bzw. den angeschlossenen Zweidrahtdatenbusabschnitt (b1, b2, b3) des Zweidrahtdatenbusses (b1b2b3) ein, wenn die Sendeleitung (TDOₙ) aus dem Inneren des Busknotens aktiv ist. Hierzu schließt die Sendeleitung (TDOₙ) aus dem Inneren des betrachteten Busknotens (BSn) die Schalter (T3a, T3b) der steuerbaren Stromquelle. Vorzugsweise werden also der in der Fig. 8 gezeigte dritte Transistor (T3a) und der weitere dritte Transistor (T3b) als schaltbare Stromquelle betrieben. Hierdurch liefert die Stromquelle der steuerbaren Stromquelle (T3a, T3b) Strom in den Zweidrahtdatenbus (b1b2b3) bzw. den angeschlossenen Zweidrahtdatenbusabschnitt (bn) des Eindrahtdatenbusses. Vorzugsweise ist dieser Strom wieder größer als der Strom, den der Pull-Schaltkreis bestehend aus den oberen Widerständen (R1a, R1b) und den unteren Widerständen (R2a, R2b) abführen kann. Somit wandert der Betrag des differentiellen Signalpegels (TOW) des Zweidrahtdatenbusses (b1b2b3) bzw. des angeschlossenen Zweidrahtdatenbusabschnitts (bn) in diesem Fall vom mittleren zweiten differentiellen Spannungsbetragspegel (V_{M}) in einem zweiten Spannungsbetragsbereich (V_{B2}) zu einem Potenzial nahe der Versorgungsspannung (V_{IO2}) für die schaltbare Stromquelle (T3a, T3b) des betrachteten Busknotens (BSn) in dem dritten Spannungsbetragsbereich (V_{B3}). Werden jedoch die dominierenden Schalter (T1a, T1b) im Bus-Master (BM) geschlossen, so überschreiben diese wieder den Einfluss der schaltbaren Stromquelle (T3a, T3b) des betrachteten Busknotens (BSn) und des differentiellen Pull-Schaltkreises (R1a, R1b, R2a, R2b). Beide sind bei geeigneter Auslegung der dominierenden Schalters (T1a, T1b) nicht in der Lage, den differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) gegen die dominierenden Schalter (T1a, T1b) des Busmasters (BM) zu bestimmen. Auch wenn die schaltbaren Stromquellen (T2a, T2b) des Bus-Masters (BM) ebenfalls hinzugeschaltet werden, werden bei geeigneter Auslegung der dominierenden Schalter (T1a, T1b) des Bus-Masters (BM) diese den differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) weiterhin bestimmen.

Auf der Busknoten-Seite vergleicht ein dritter Komparator (cmp3) den Betrag des differentiellen Signalpegels (TOW) auf dem Zweidrahtdatenbus (b1b2b3) oder dem angeschlossenen Zweidrahtdatenbusabschnitt (bn) des Zweidrahtdatenbusses (b1b2b3) mit einem dritten Schwellwert (V_{2H}). Gleichzeitig vergleicht ein zweiter Komparator (cmp2) den Betrag des differentiellen Signalpegels (TOW) auf dem Zweidrahtdatenbus (b1b2b3) oder dem angeschlossenen Zweidrahtdatenbusabschnitt (bn) des Zweidrahtdatenbusses (b1b2b3) mit einem zweiten Schwellwert (V_{2L}). Der zweite Schwellwert (V_{2L}) unterscheidet sich vom dritten Schwellwert (V_{2H}) und bestimmt die Grenze zwischen dem ersten Spannungsbetragsbereich (V_{B1}) und dem zweiten Spannungsbetragsbereich (V_{B2}). Der dritte Schwellwert (V_{2H}) bestimmt die Grenze zwischen dem zweiten Spannungsbetragsbereich (V_{B2}) und dem dritten Spannungsbetragsbereich (V_{B3}). Der zweite Komparator (cmp2) gewinnt den Systemtakt aus dem differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) zurück. Dieses Signal wird ins Innere des betrachteten Busknotens (BSn) als durch den betrachteten Busknoten (BSn) empfangenes Taktsignal (TCKₙ) weitergegeben. Der dritte Komparator (cmp3) gewinnt die Dateninformation aus dem differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) als durch den betrachteten Busknoten (BSn) empfangene Daten (TMS_TDIₙ) zurück. Dabei enthalten die durch den betrachteten Busknoten (BSn) empfangenen Daten auch noch Anteile des Systemtaktes. Dies kann durch einfaches Abtasten beispielsweise in einem Flip-Flop mit der Flanke eines leicht verzögerten rekonstruierten Systemtakts (TCKₙ) oder alternativ durch Verzögerung der empfangenen Daten und Abtastung mit einem nicht verzögerten rekonstruierten Systemtakt (TCKₙ) leicht behoben werden. Gegebenenfalls müssen die Signale vor der Verwendung noch aufbereitet werden.

In einer Ausprägung könnte das Datenausgangssignal (TMS_TDIₙ) auf 1 durch den dritten Komparator (cmp3) geschaltet werden, wenn der differentielle Signalpegel (TOW) auf dem Zweidrahtdatenbus (b1b2b3) oder dem angeschlossenen ersten Zweidrahtdatenbusabschnitt (bn) des Zweidrahtdatenbusses (b1b2b3) höher als der dritte Schwellwert (V_{2H}) ist, und umgekehrt auf 0 geschaltet werden, wenn der Betrag des differentiellen Signalpegels (TOW) niedriger als dieser dritte Schwellwert (V_{2H}) ist. In einer Ausprägung könnte der rekonstruierte Systemtakt (TCKₙ) auf 1 durch den zweiten Komparator (cmp2) geschaltet werden, wenn der differentielle Signalpegel (TOW) auf dem Zweidrahtdatenbus (b1b2b3) oder dem angeschlossenen Zweidrahtdatenbusabschnitt (bn) des Zweidrahtdatenbusses (b1b2b3) höher als der zweite Schwellwert (V_{2L}) ist, und umgekehrt auf 0 geschaltet werden, wenn der differentielle Signalpegel (TOW) niedriger als dieser zweite Schwellwert (V_{2L}) ist.

In ähnlicher Weise tastet der Bus-Master (BM) mittels eines ersten Komparators (cmp) den differentielle Signalpegel (TOW) auf dem Zweidrahtdatenbus (b1b2b3) oder dem angeschlossenen Zweidrahtdatenbusabschnitt (bn) des Zweidrahtdatenbusses (b1b2b3) ab. Hierzu vergleicht der erste Komparator (cmp) den differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) mit einem ersten Schwellwert (V_{1H}) und gewinnt dadurch die auf der Datenleitung befindlichen Daten zurück, die jedoch auch hier noch Anteile des Systemtaktes aufweisen. Auch hier hilft eine geeignete Abtastung. Auf diese Weise werden die durch den Bus-Master (BM) empfangenen Daten (TDo) gewonnen. In einer Ausprägung könnte das Datenausgangssignal (TDo) auf 1 durch den ersten Komparator (cmp) geschaltet werden, wenn der Betrag des differentielle Signalpegels (TOW) auf dem Zweidrahtdatenbus (b1b2b3) oder dem angeschlossenen Zweidrahtdatenbusabschnitt (bn) des Zweidrahtdatenbusses (b1b2b3) höher als der erste Schwellwert (V_{1H}) ist, und umgekehrt auf 0 geschaltet werden, wenn das Potenzial niedriger als dieser erste Schwellwert (V_{1H}) ist. Der erste Schwellwert (V_{1H}) ist vorzugsweise bis auf einen kleinen Toleranzbereich von vorzugsweise deutlich kleiner 25% dieses Wertes gleich dem dritten Schwellwert (V_{2H}).

In der weiteren Verarbeitung können nun Schaltungen aus dem Stand der Technik für einen Datenbus mit separater Datenleitung und Systemtaktleitung verwendet werden, sodass hier auf die Beschreibung verzichtet werden kann. Beispielhaft sei auf die WO 2006/102284 A2 verwiesen.

Es ergibt sich nun folgende Tabelle der Beträge der Signalpegel (TOW) und logischen Werte als eine mögliche Implementierung. Andere Signalpegel (TOW) und korrespondierende logische Werte sind natürlich möglich, wie dem Fachmann klar sein wird. Man beachte, dass hier in diesem Beispiel TCK=0 die dominierenden Schalter (T1a, T1b) schließt. Dies kann natürlich auch invertiert implementiert werden.

| **Senden** | | | **Betrachtete(r) Zweidrahtdaten-leitung / -leitungsabschnitt** | **Empfangen** | | |
|---|---|---|---|---|---|---|
| **TCK** | **TMS_TDI** | **TDOₙ** | **b1, b2, b3, bₙ** | **TCKₙ** | **TMS_TDIₙ** | **TDo** |
| **BM** | **BM** | **BSn** | | **BSn** | **BSn** | **BM** |
| 0 | 0 | 0 | -V_{IO1} | 0 | 0 | 0 |
| 0 | 0 | 1 | -V_{IO1} | 0 | 0 | 0 |
| 0 | 1 | 0 | -V_{IO1} | 0 | 0 | 0 |
| 0 | 1 | 1 | -V_{IO1} | 0 | 0 | 0 |
| 1 | 0 | 0 | V_{M} | 1 | 0 | 0 |
| 1 | 0 | 1 | V_{IO2} | 1 | 1 | 1 |
| 1 | 1 | 0 | V_{IO1} | 1 | 1 | 1 |
| 1 | 1 | 1 | V_{IO1/2} | 1 | 1 | 1 |

Vorzugsweise stimmen der dritte Schwellwert (V_{2H}) und der erste Schwellwert (V_{1H}) überein, wodurch der Bus-Master (BM) und die Busknoten die gleiche Datensequenz erkennen. Durch entsprechend gesteuerte zeitliche Abtastung können diese Daten dann geeignet den Zeitschlitzen (TIN0, TIN1, TDO_{Z}) zugeordnet werden.

Im Gegensatz zu den deutschen Patenten DE-B-10 2015 004 433, DE-B-10 2015 004 434, DE-B-10 2015 004 435 und DE-B-10 2015 004 436 weist der erfindungsgemäße Busknoten typischerweise ein differentielles Transfer-Gate (TG) auf, das die Funktion zweier Schalter hat. Der erste Schalter kann einen vorausgehenden ersten Eindrahtdatenbusabschnitt (bna) des vorausgehenden Zweidrahtdatenbusabschnittes (bn) mit einem nachfolgenden ersten Eindrahtdatenbusabschnitt (b(n+1)a) des nachfolgenden Zweidrahtdatenbusabschnitts (b(n+1))verbinden. Der zweite Schalter kann einen vorausgehenden zweiten Eindrahtdatenbusabschnitt (bnb) des vorausgehenden Zweidrahtdatenbusabschnittes (bn) mit einem nachfolgenden zweiten Eindrahtdatenbusabschnitt (b(n+1)b) des nachfolgenden Zweidrahtdatenbusabschnitts (b(n+1))verbinden. Ist das Transfer-Gate (TGn) des betreffenden Busknotens (BSn) geöffnet, so verbinden vorzugsweise zwei weitere, nicht eingezeichnete Schalter den nachfolgenden Zweidrahtdatenbusabschnitt (b(n+1)) mit einem Haltepotenzial oder einem anderen geeigneten Potenzial. Hierdurch erhält der differentielle Signalpegel des nachfolgenden Zweidrahtdatenbusses (b(n+1)) einen vordefinierten Signalpegelbetrag ohne dass ein Systemtakt und damit Daten übertragen werden.

Zurück zu Fig. 8: Die beiden Spannungsteilerpaare, die beispielhaft den differentiellen Pull-Schaltkreis bilden, werden jeweils durch die ersten Widerstände (R1a, R1b) und die zweiten Widerstände (R2a, R2b) gebildet. Der differentielle Pull-Schaltkreis besteht aus einem ersten Spannungsteilerpaar mit einem ersten Widerstand (R1a) und einem zweiten Widerstand (R2a). Der differentielle Pull-Schaltkreis umfasst des Weiteren ein zweites Spannungsteilerpaar mit einem weiteren ersten Widerstand (R2a) und einem weiteren zweiten Widerstand (R2b). Der differentielle Pull-Schaltkreis hält den Betrag des differentiellen Spannungspegels (TOW) auf dem Zweidrahtdatenbus (b1b2b3) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist. Hier ist beispielhaft der erste Zweidrahtdatenbusabschnitt (b1) am Ausgang der Master-Zweidrahtdatenbusschnittstelle (OWM) angeschlossen. Der Datensender des Bus-Masters wird durch die zweiten Transistoren (T2a, T2b) gebildet. Der dominierende Taktsender wird durch die ersten Transistoren (T1a, T1b) gebildet. Der eine zweite Transistor (T2a) ist in diesem Beispiel ein P-Kanal-Transistor. Der weitere zweite Transistor (T2b) ist in diesem Beispiel ein N-Kanal-Transistor. Der eine erste Transistor (T1a) ist in diesem Beispiel ein N-Kanal-Transistor. Der weitere erste Transistor (T1b) ist in diesem Beispiel ein P-Kanal-Transistor. Über einen beispielhaften invertierenden Pufferschaltkreis (buf) wird der erste Transistor (T1a) mit dem Systemtakt (TCK) angesteuert. Der weitere erste Transistor (T1b) wird in dem Beispiel direkt angesteuert. Über ein NOR-Gatter (NOR) wird der zweite Transistor (T2a) mit dem kombinierten TMS-TDI Signal (TMS_TDI) angesteuert, wenn der Systemtakt (TCK) inaktiv ist. Über einen beispielhaft invertierenden dritten Pufferschaltkreis (buf3) wird der weitere zweite Transistor (T2b) angesteuert, wenn der Systemtakt (TCK) inaktiv ist. Der erste Verstärker (V1) bildet das differentielle Pegelsignal (DPSM) in der Bus-Master-Schnittstelle (OWM) auf Basis der differentiellen Spannungsdifferenz auf dem angeschlossenen ersten Zweidrahtdatenbusabschnitt (b1). Durch den Spannungsteiler (R3) wird eine Referenzspannung, der erste Schwellwert (V_{1H}), erzeugt, mit der der erste Komparator (cmp) den differentiellen Signalpegel (TOW) in Form des Werts des differentiellen Pegelsignals (DPSM) in der Bus-Master-Schnittstelle (OWM) vergleicht und das Datensignal (TDo) für die weitere Verarbeitung innerhalb des Busmasters (BM) erzeugt. Gegebenenfalls wird das Vergleichsergebnis durch eine Verzögerungsvorrichtung (Δt) verzögert.

### Fig. 9

Fig. 9 zeigt eine beispielhafte Implementierung der n-ten Eindrahtdatenbusschnittstelle (OWSₙ) eines n-ten Busknotens (BSₙ) der Busknoten (BS1, BS2, BS3) passend zur Master-Zweidrahtdatenbusschnittstelle (OWM) der Fig. 8. Die Zweidrahtdatenbusschnittstelle (OWSₙ) des n-ten Busknotens (BSₙ) ist beispielhaft an den n-ten Zweidrahtdatenbusabschnitt (bₙ) angeschlossen. Der Datensender des n-ten Busknotens (BSₙ) wird durch die dritten Transistoren (T3a, T3b) gebildet. Deren Innenwiderstand (Widerstand im eingeschalteten Zustand) wird durch jeweils einen zu den jeweiligen dritten Transistoren (T3a, T3b) seriell geschalteten siebten Widerstand (R7a, R7b) bestimmt. Der zweite Verstärker (V2) bildet das differentielle Pegelsignal (DPS) in der Busknoten-Schittstelle (OWSn) auf Basis der differentiellen Spannungsdifferenz auf dem vorausgehenden angeschlossenen n-ten Zweidrahtdatenbusabschnitt (bn). Durch den Spannungsteiler aus dem vierten Widerstand (R4), dem fünften Widerstand (R5) und dem sechsten Widerstand (R6) werden zwei Referenzspannungen, ein dritter Schwellwert (V_{2H}) und ein zweiter Schwellwert (V_{2L}), aus der Versorgungsspannung (V_{bat}) des n-ten Busknotens (BSn) erzeugt. Mit diesen zwei Referenzspannungen, dem dritten Schwellwert (V_{2H}) und dem zweiten Schwellwert (V_{2L}), vergleichen ein zweiter Komparator (cmp2) und ein dritter Komparator (cmp3) den differentiellen Signalpegel (TOW) auf dem beispielhaft angeschlossenen vorausgehenden n-ten Zweidrahtdatenbusabschnitt (bₙ) in Form des Werts des differentiellen Pegelsignals (DPS). Sie erzeugen hieraus den rekonstruierten Systemtakt (TCKₙ) des n-ten Busknotens (BSₙ) und das n-te kombinierte TMS-TDI-Signal (TMS_TDIₙ) innerhalb des n-ten Busknotens (BSₙ) für die Ansteuerung des Test-Controllers (TAPC) der JTAG-Schnittstelle innerhalb des n-ten Busknotens (BSₙ). Hierbei werden Takt und Daten durch eine Verzögerungseinheit (Δt) für das kombinierte TMS-TDI-Signal (TMS_TDIₙ) wieder synchronisiert.

Das Ausgangssignal der JTAG-Schnittstelle des n-ten Busknotens (BSₙ) wird in diesem Beispiel genutzt, um über einen invertierenden zweiten Pufferschaltkreis (buf2) den dritten Transistor (T3a) und direkt den weiteren dritten Transistor (T3b) anzusteuern.

Dem Fachmann wird es ein Leichtes sein, die zeitliche Struktur der Signale durch eine geeignete Logik sicherzustellen.

### Fig. 10

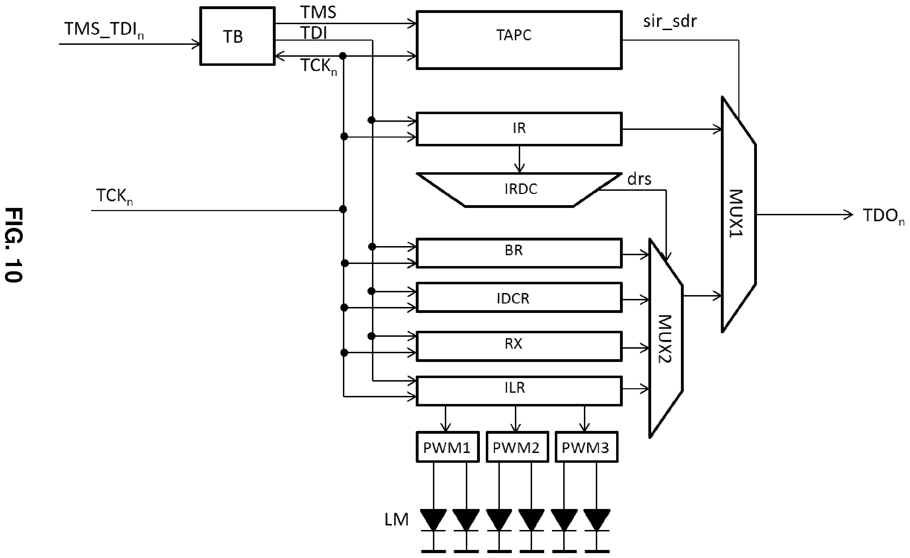

Fig. 10 zeigt die innere Struktur einer erfindungsgemäßen JTAG-Schnittstelle. Diese ist mit der in dem IEEE 1149 Standard vorgesehenen Architektur kompatibel, sodass die auf dem Markt erhältliche Software genutzt werden kann, was einen erheblichen Vorteil darstellt.

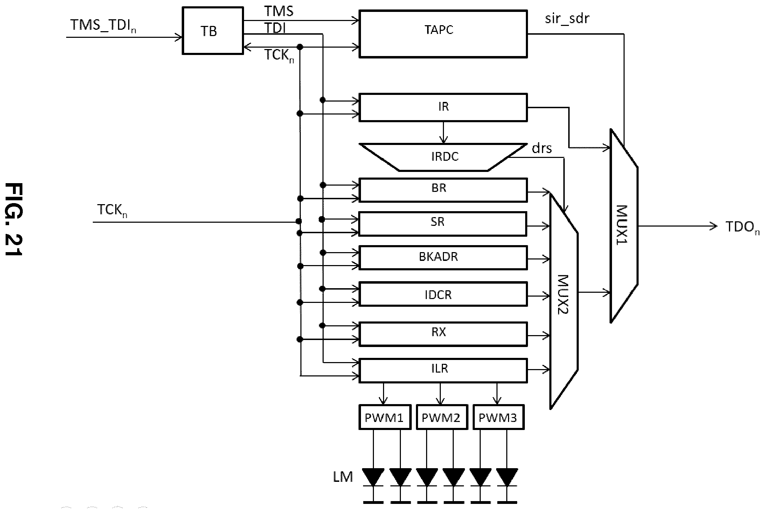

In diesem Beispiel wird das kombinierte TMS-TDI-Signal (TMS_TDIₙ) in einer Testdatenaufbereitung (TB) synchron zum rekonstruierten Systemtakt (TCKₙ) in das Test-Mode-Signal (TMS) und die seriellen Eingangsdaten (TDI) zerlegt. Mit dem Test-Mode-Signal (TMS) wird wieder der Test-Controller (TAPC) synchron zum Takt entsprechend dem bereits aus dem Stand der Technik bekannten und bei der Beschreibung der Fig. 1 besprochenem Zustandsdiagramm gesteuert. Dieses Zustandsdiagramm eines Test-Controllers (TAPC) kennzeichnet im Sinne dieser Erfindung eine JTAG-Schnittstelle, da durch Einhaltung dieses Zustandsdiagramms erst Software-Kompatibilität hergestellt wird. Durch das Steuersignal (sir_sdr) für den ersten Multiplexer (MUX1) schaltet der Test-Controller zwischen dem Instruktionsregister (IR) und den Datenregistern (BR, IDCR, RX, ILR) mittels des ersten Multiplexers (MUX1) um. Der serielle Dateneingang (TDI) wird auf alle Datenregister (BR, IDCR, RX, ILR), das Instruktionsregister (IR) und gegebenenfalls weitere Datenregister geleitet. Alle diese Register sind typischerweise zweistufig ausgeführt. Das bedeutet, dass sie über ein Schieberegister einer Bit-Länge m und parallel dazu über ein Schattenregister der gleichen Länge m verfügen. Das Schieberegister dient dem Datentransport, während das Schattenregister die gültigen Daten enthält. Wie oben beschrieben, werden die Daten in Abhängigkeit vom Zustand des Test-Controllers (TAPC) in das Schattenregister vom Schieberegister geladen oder vom Schattenregister in das Schieberegister geladen, geschoben oder die Daten ruhen. In dem Beispiel der Fig. 10 steuert ein Instruktionsdekoder (IRDC) in Abhängigkeit vom Inhalt des Instruktionsregisters (IR) die JTAG-Schnittstelle. Beispielsweise ist es denkbar, dass der betreffende Busknoten nur dann senden darf, wenn das Schattenregister des Instruktionsregisters (IR) an bestimmten Bit-Positionen bestimmte Werte, also eine bestimmte Sendeadresse enthält. Eine solche Adressierung kann aber auch in einem separaten Senderegister (SR) vorgenommen werden(siehe Fig. 21).

Besonders bevorzugt verfügt die JTAG-Schnittstelle über ein Busknotenadressregister (BKADR). (siehe Fig. 21) Dieses gibt die Identifikationsnummer des Busknotens an. Des Weiteren verfügt die JTAG-Schnittstelle bevorzugt über ein Senderegister (SR). Dieses Senderegister (SR) wird durch den Busmaster (BM) gesetzt und gibt die Nummer des Busknotens an, der senden soll / darf. Nur wenn beide Adressen, die Adresse im Busknotenadressregister (BKADR) und die Adresse im Senderegister (SR) übereinstimmen, darf der betreffende Busknoten (BSₙ) zur vorbestimmten Zeit senden. Um die Busknotenadressen in den Busknotenadressregistern (BKADR) der Busknoten bei der Initialisierung des Zweidrahtdatenbussystems zu setzen, sind zu Anfang alle Transfer-Gates (TG) aller Busknoten (BS1, BS2, BS3) geöffnet. Dies kann vorzugsweise durch einen speziellen Befehl an alle erreichbaren Instruktionsregister (IR) aller an den Zweidrahtdatenbus (b1b2b3) angeschlossenen erfindungsgemäßen JTAG-Schnittstellen und erreichbaren Busknoten geschehen. Hierfür müssen die Instruktionsregister (IR) dieser JTAG Schnittstellen in den niederwertigsten Bits, das sind die zuerst beschriebenen Schieberegisterbits, übereinstimmen. Der Busmaster (BM) vergibt nach einem festgelegten Algorithmus dann die erste Busadresse an den ersten und einzigen Busknoten (BS1), der direkt mit ihm verbunden ist durch Beschreiben des ersten Busknotenadressregister (BKADR) des ersten Busknotens (BS1). Dann testet der Busmaster (BM) typischer-, aber nicht notwendigerweise die Verbindung. Vorzugsweise kann das Busknotenadressregister (BKADR) des betreffenden Busknotens (BSn) nur beschrieben werden, wenn das Transfer-Gate (TGn) des betreffenden Busknotens (BSn) nicht geschlossen ist. Hierdurch wird sichergestellt, dass nur der letzte Busknoten, also der erste Busknoten in der Folge von Busknoten vom Busmaster aus, der sein Transfer-Gate (TG) nicht geschlossen hat, eine Busknotenadresse in sein Busknotenadressregister (BKADR) übernimmt. Nach einer solchen Übernahme wird das Transfer-Gate (TG) typischerweise automatisch oder per Software-Befehl des Bus-Masters (BM) geschlossen. Damit wird die im Busadressregister gespeicherte Busknotenadresse eingefroren. Gleichzeitig kann nun die Adressierung des nachfolgenden Busknotens erfolgen. Um ein geordnetes Rücksetzen des Bussystems zu ermöglichen, wird beispielsweise ein für alle Busknoten gleicher Befehl im Instruktionsregister (IR) vorgesehen, der alle Transfer-Gatter aller Busknoten öffnet, sodass eine Neuvergabe von Adressen erfolgen kann. Sofern nach einer Adressvergabe der Busknoten mit dieser Busknotenadresse nicht antwortet, ist der Busknoten entweder defekt oder existiert nicht. Im letzteren Fall kennt dann der Bus-Master die Position aller Busknoten und deren Anzahl.

Die beispielhafte JTAG-Schnittstelle der Fig. 10 umfasst ein Standard-gemäßes Bypass-Register (BR), das zum Vorbeileiten von Daten durch die JTAG-Schnittstelle dient. Darüber hinaus umfasst es in diesem Beispiel ein Identifikationsregister (IDCR) zum Auslesen einer Seriennummer des Schaltkreises und weitere Datenregister (RX), die dem JTAG-Standard entsprechen. Diese können beispielsweise Testregister und andere Register sein.

Erfindungsgemäß ist nun ein Beleuchtungsregister (ILR) vorgesehen. Im Beleuchtungsregister (ILR) legt der Bus-Master (BM) Daten zur Einstellung der Energieversorgungen für die Leuchtmittel (LM) ab. Typischerweise handelt es sich bei den Energieversorgungen um ein oder mehrere (hier drei) Puls-Weiten-Modulations-(PWM-) Treiber (PWM1, PWM2, PWM3), die eine puls-weiten-(PWM-) modulierte Ausgangsspannung oder einen entsprechend modulierten Strom erzeugen.

### Fig. 11

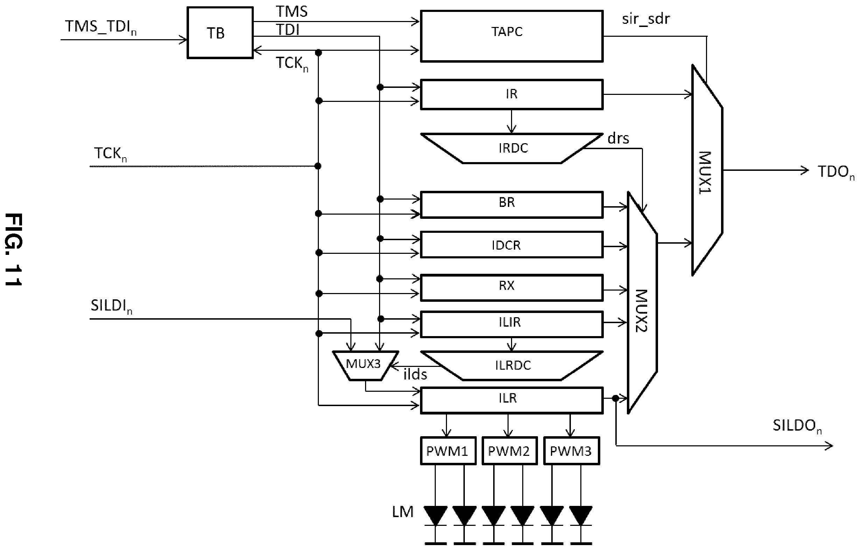

Fig. 11 zeigt die Fig. 10 mit dem Unterschied, dass die JTAG-Schnittstelle zusätzlich ein Beleuchtungsinstruktionsregister (ILIR) aufweist. Dieses steuert einen dritten Multiplexer (MUX3). Dieser kann die seriellen Eingabedaten für das Beleuchtungsregister (ILR) zwischen einem seriellen Eingang für Beleuchtungsdaten (SILDIₙ) und dem seriellen Dateneingang (TDI) mittels eines Beleuchtungsdatenauswahlsignals (ilds) umschalten. Gleichzeitig wird der Ausgang des Beleuchtungsregisters (ILR) auf den seriellen Ausgang für Beleuchtungsdaten (SILDOₙ) kopiert.

### Fig. 12

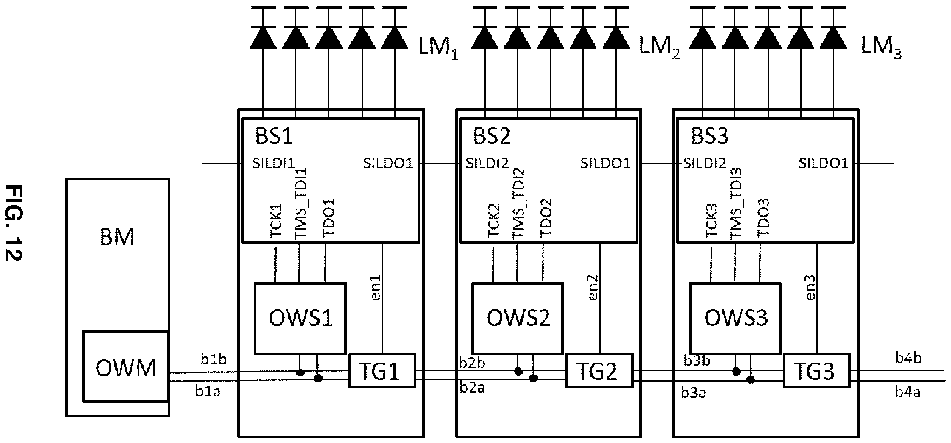

Fig. 12 zeigt die mögliche direkte Verbindung mehrerer Schaltkreise mit JTAG-Controllern entsprechend Fig. 11 über eine Verkettung mittels der Eingänge für Beleuchtungsdaten (SILDI1, SILDI2, SILDI3) und entsprechender Ausgänge für Beleuchtungsdaten (SILDO1, SILDO2, SILDO3).

Hierdurch ist es möglich, ohne komplizierte Adressierung schnell Daten für ganze Gruppen von Leuchtmitteln zu übertragen, da nur noch ein Baustein adressiert werden muss.

### Fig. 13

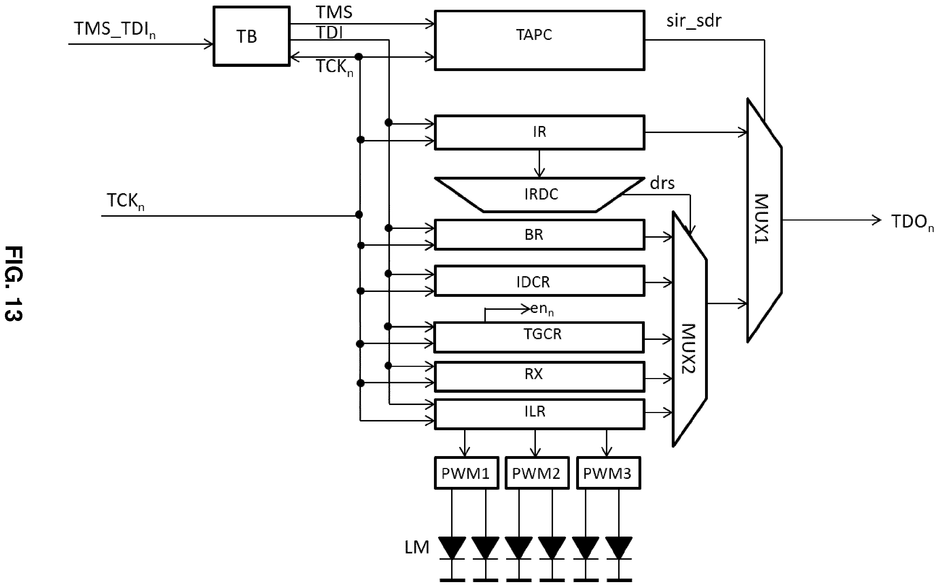

Fig. 13 zeigt eine JTAG-Schnittstelle wie in Fig. 10 mit dem Unterschied, dass sie ein separates Transfer-Gate-Control-Register (TGCR) aufweist. Anstatt das Flag für das Öffnen und Schließen des Transfer-Gate (TG) im Instruktionsregister (IR) zu platzieren, kann auch ein separates Transfer-Gate-Control-Register (TGCR) vorgesehen werden, das die entsprechende Enable-Leitung (enₙ) des entsprechenden Busknotens (BSₙ) erzeugt.

### Fig. 14

Fig. 14 zeigt die mögliche direkte Verbindung mehrerer Schaltkreise mit JTAG-Controllern entsprechend Fig. 15 über eine Verkettung mittels Point-to-Point-Verbindungen in denen bidirektional Daten und unidirektional ein Takt über die Eindrahtdatenbusabschnitte (b1, b2, b3) übertragen werden. Jeder Busknoten weist eine Zweidrahtdatenbusschnittstelle (OWS1, OWS2, OWS3) und eine Zweidraht-Bus-Master-Schnittstelle (OWM1, OWM2, OWM3) auf. Hierdurch entsteht eine äquivalente Verkettung wie in den anderen Figuren.

### Fig. 15

Fig. 15 zeigt eine JTAG-Schnittstelle wie in Fig. 10 mit dem Unterschied, dass sie ein separates Bus-Master-Control-Register (OWMCR) aufweist. Anstatt die Kontroll-Bits für die Steuerung der Bus-Master-Schnittstelle (OWM1, OWM2, OWM3) des betreffenden Busknotens (BS1, BS2, BS3) im Instruktionsregister (IR) zu platzieren, kann auch ein separates Bus-Master-Control-Register (OWMCR) vorgesehen werden, das die entsprechenden Kontrollleitungen (ctrₙ) innerhalb des entsprechenden Busknotens (BSₙ) erzeugt.

### Fig. 16

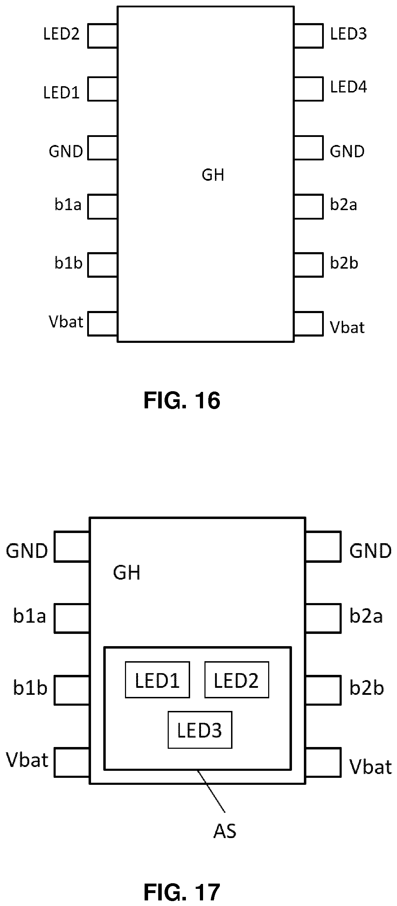

Die Fig. 16 zeigt ein beispielhaftes Gehäuse für einen Busknoten (BSn) in der Aufsicht. Die Versorgungsspannungsleitungen (V_{bat}, GND) können kreuzungsfrei miteinander verbunden werden. Die LEDs können kreuzungsfrei mit den entsprechenden Anschlüssen (LED1, LED2, LED3, LED4) und mit der negativen Versorgungsspannung, dem zweiten Bezugspotenzial (GND) der Bezugspotenzialleitung (GND) verbunden werden. Der Zweidrahtdatenbus (b1, b2) kann zwischen den Busknoten zwischen den beiden Versorgungsspannungsleitungen kreuzungsfrei geführt werden, was diesen noch besser abschirmt und die Verwendung von Microstrip-Leitungen mit einem definierten Wellenwiderstand zulässt. Dies wiederum lässt den definierten Abschluss des Datenbusses möglich erscheinen. Es ist daher dann besonders sinnvoll, wenn der Wellenwiderstand des Zweidrahtdatenbusses (b1b2b3) mit dem Widerstand des differentiellen Pull-Schaltkreises (R1a, R1b, R2a, R2b) übereinstimmt.

### Fig. 17

Fig. 17 zeigt ein Leuchtmodul für den anreihenden Verbau in der Aufsicht. Der Zweidrahtdatenbus kann hier vorzugsweise von links herangeführt werden. Der nachfolgende Zweidrahtdatenbusabschnitt (b2a, b2b) wird vorzugsweise rechts angeschlossen. Die Versorgungsspannungsleitungen können von links kommend nach rechts durchgezogen werden. In eine Aussparung (AS) des Gehäuses (GH) können die Leuchtmittel (LED1, LED2, LED3) montiert werden. Auch ist eine Montage auf dem Gehäuse (GH) möglich. Die Verwendung von optischen Elementen, wie Linsen und Spiegeln ist für eine Lichtstrahlmodifikation sinnvoll.

### Fig. 18

Fig. 18 zeigt eine noch weiter vereinfachte Version der Fig. 17. Das linke Gehäuse der Fig. 18 ist die bezüglich der Anschlüsse der Versorgungsspannung des Busknotens (V_{bat}) und des Anschluss des Bezugspotenzials (GND) vertikal und horizontal gespiegelte Variante der rechten Version. Hierdurch können die Gehäuse flächenhaft verbaut werden und benötigen nicht 16, sondern nur zwölf Anschlüsse. Ein Nachteil ist jedoch, dass zum einen eine Kreuzung notwendig wird, die aber beispielsweise über die Die-Insel des integrierten Schaltkreises, der den Busknoten darstellt, realisiert werden kann. Beispielsweise ist es sinnvoll, wenn der integrierte Schaltkreis des Busknotens auf einer Die-Insel montiert wird, die mit der negativen Versorgungsspannung, dem zweiten Bezugspotenzial (GND) der Bezugspotenzialleitung (GND), verbunden ist. Diese Die-Insel kann als Überbrückung zwischen den gegenüberliegenden Versorgungsspannungsanschlüssen der negativen Versorgungsspannung dienen. Ist diese Die-Insel zur gedruckten Schaltung hin elektrisch isoliert, so kann die positive Versorgungsspannung unter dem Lichtmodul auf der gedruckten Schaltung hindurchgeführt werden. Damit die Zweidrahtdatenbusse kreuzungsfrei verbaut werden können, ist der schachbrettartige Verbau der nicht gespiegelten und der gespiegelten Variante auf einer gedruckten Schaltung zur Bildung einer Lichtmodulzusammenstellung notwendig.

In Fig. 18 ist auch gezeigt, wie die Anschlüsse (V_{bat}) pro Gehäuse (GH) elektrisch miteinander verbunden sind, während auf gleicher Art und Weise die Bezugspotentialanschlüsse (GND) jedes Gehäuses (GH) elektrisch miteinander verbunden sind. Entweder werden dabei die beiden Anschlüsse für das Versorgungspotential (V_{bat}) über den sogenannten Die-Paddle eines Lead-Frame elektrisch verbunden oder aber die beiden zweiten Versorgungspotentialanschlüsse (GND). Die verbleibenden Versorgungspotentialanschlüsse, die nicht über den Lead-Frame elektrisch miteinander verbunden werden, können beispielsweise über im Die integrierte Leitungen oder aber über Leiterbahnen auf einer Leiterplatine (PCB) miteinander verbunden sein.

### Fig. 19

Fig. 19 zeigt, wie die beiden Lichtmodule gemäß Fig. 18 in Array-Form angeordnet sind. Wie man erkennt, befindet sich bei der Anordnung gemäß Fig. 19 unterhalb und oberhalb des linken Lichtmoduls der Fig. 18 ein Lichtmodul vom Typ des rechten Lichtmoduls der Fig. 18. Dementsprechend befindet sich bei der Array-Anordnung gemäß Fig. 19 oberhalb und unterhalb des rechten Lichtmoduls der Fig. 18 ein Lichtmodul vom Typ des linken Lichtmoduls der Fig. 18.

### Fig. 20

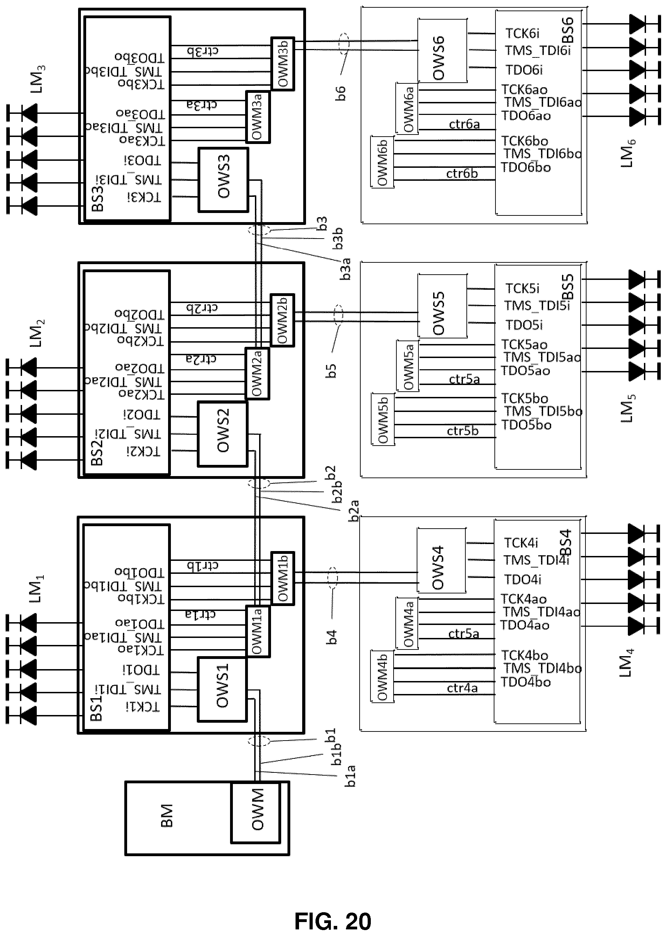

Fig. 20 zeigt eine flächenförmige Verkettung von sechs Lichtmodulen entsprechend Fig. 18 mit je zwei Zweidraht-Bus-Master-Schnittstellen (OWM1a bis OWM6a und OWM1b bis OWM6b) und einer Zweidrahtdatenbusschnittstelle (OWS1 bis OWS6). Fig. 20 zeigt die mögliche direkte Verbindung mehrerer Schaltkreise mit JTAG-Controllern entsprechend Fig. 14 über eine Verkettung mittels Point-to-Point-Verbindungen in denen bidirektional Daten und unidirektional ein Takt über die Eindrahtdatenbusabschnitte übertragen werden. Jeder Busknoten (BS1, BS2, BS3, BS4, BS5, BS6) weist eine Zweidrahtdatenbusschnittstelle (OWS1, OWS2, OWS3, OWS4, OWS5, OWS6) und eine erste Zweidraht-Bus-Master-Schnittstelle (OWM1a, OWM2a, OWM3a, OWM4a, OWM5a, OWM6a) sowie eine zweite Zweidraht- Bus-Master-Schnittstelle (OWM1b, OWM2b, OWM3b, OWM4b, OWM5b, OWM6b) auf. (Weitere Zweidrahtdatenbusschnittstellen sind denkbar, zur Vereinfachung hier aber nicht eingezeichnet.) Hierdurch entsteht eine äquivalente flächenhafte Verkettung wie in den anderen Figuren.

### Fig. 21

Fig. 21 zeigt vereinfacht eine erfindungsgemäße JTAG-Schnittstelle mit Beleuchtungsregister (ILR), Busknotenadressregister (BKADR) und Senderegister (SR).

### BEZUGSZEICHENLISTE

- AS: Aussparung des Gehäuses
- b1b2b3: Zweidrahtdatenbus
- b1b2b3b4: Zweidrahtdatenbus
- b1: erster Zweidrahtdatenbusabschnitt
- b1a: erster Eindrahtdatenbusabschnitt des ersten Zweidrahtdatenbusabschnitts (b1)
- b1b: zweiter Eindrahtdatenbusabschnitt des ersten Zweidrahtdatenbusabschnitts (b1)
- b2: zweiter Zweidrahtdatenbusabschnitt
- b2a: erster Eindrahtdatenbusabschnitt des zweiten Zweidrahtdatenbusabschnitts (b2)
- b2b: zweiter Eindrahtdatenbusabschnitt des zweiten Zweidrahtdatenbusabschnitts (b2)
- b3: dritter Zweidrahtdatenbusabschnitt
- b3a: erster Eindrahtdatenbusabschnitt des dritten Zweidrahtdatenbusabschnitts (b3)
- b3b: zweiter Eindrahtdatenbusabschnitt des dritten Zweidrahtdatenbusabschnitts (b3)
- b4: vierter Zweidrahtdatenbusabschnitt
- b4a: erster Eindrahtdatenbusabschnitt des vierten Zweidrahtdatenbusabschnitts (b4)
- b4b: zweiter Eindrahtdatenbusabschnitt des vierten Zweidrahtdatenbusabschnitts (b4)
- b5: fünfter Zweidrahtdatenbusabschnitt
- b6: sechster Zweidrahtdatenbusabschnitt
- bn: n-ter Zweidrahtdatenbusabschnitt
- bna: erster Eindrahtdatenbusabschnitt des n-ten Zweidrahtdatenbusabschnitts (bn)
- bnb: zweiter Eindrahtdatenbusabschnitt des n-ten Zweidrahtdatenbusabschnitts (bn)
- b(n+1): (n+1)-ter Zweidrahtdatenbusabschnitt
- b(n+1)a: erster Eindrahtdatenbusabschnitt des (n+1)-ten Zweidrahtdatenbusabschnitts (b(n+1))
- b(n+1)b: zweiter Eindrahtdatenbusabschnitt des (n+1)-ten Zweidrahtdatenbusabschnitts (b(n+1))
- BKADR: Busknotenadressregister
- BKADRn: Busknotenadressregister des betrachteten Busknotens (BSn)
- BM: Bus-Master
- BR: Bypass-Register
- BRn: Bypass-Register des betrachteten Busknotens (BSn)
- BS1: beispielhafter erster Busknoten
- BS2: beispielhafter zweiter Busknoten
- BS3: beispielhafter dritter Busknoten
- BS4: beispielhafter vierter Busknoten
- BS5: beispielhafter fünfter Busknoten
- BS6: beispielhafter sechster Busknoten
- BSn: beispielhafter n-ter Busknoten (Der relevante oder betrachtete Busknoten wird an verschiedenen Stellen dieser Erfindung mit BSₙ bezeichnet). Es ist also ein beliebiger der Busknoten (BS1, BS2, BS3). Die Anzahl der Busknoten kann von 3 verschieden sein.
- BS(n+1): beispielhafter (n+1)-ter Busknoten
- buf: Pufferschaltkreis
- buf2: zweiter Pufferschaltkreis
- Buf3: dritter Pufferschaltkreis.
- Busknoten Busknoten-Schaltkreis.: Der Busknoten ist typischerweise der integrierte Schaltkreis oder ein sonstiges elektrisches System, das durch den Host-Prozessor, den Bus-Master, über den Zweidrahtdatenbus (b1b2b3) bzw. zumindest einen angeschlossenen Zweidrahtdatenbusabschnitt (b1, b2, b3) gesteuert wird.
- Bus-Master Masterschaltkreis.: Der Bus-Master (BM) ist typischerweise der Host-Prozessor, über den der integrierte Schaltkreis, der betreffende Busknoten (BSn), gesteuert wird.
- cmp: erster Komparator auf Master Seite. Der erste Komparator vergleicht den Betrag des differentiellen Signalpegels (TOW) auf dem Zweidrahtdatenbus (b1b2b3) bzw. auf dem angeschlossenen Zweidrahtdatenbusabschnitt (b1, b2, b3) in Form des Werts des differentiellen Pegelsignals (DPSM) in der Bus-Master-Schnittstelle (OWM) mit einem ersten Schwellwert (V_{1H}) und gibt das durch den Bus-Master (BM) empfangene Datensignal (TDo) an das Innere der Schaltung des Bus-Masters (BM), typischerweise den Host-Prozessor, weiter. Der erste Komparator detektiert das Wechseln des Betrags des Signalpegels (TOW) auf dem Zweidrahtdatenbus (b1b2b3) bzw. auf dem angeschlossenen Zweidrahtdatenbusabschnitt (b1, b2, b3) vom dritten Spannungsbetragsbereich (V_{B3}) einerseits in den ersten Spannungsbetragsbereich (V_{B1}) oder zweiten Spannungsbetragsbereich (V_{B2}) andererseits und umgekehrt.
- cmp2: zweiter Komparator auf Busknoten Seite. Der zweite Komparator vergleicht den differentiellen Signalpegel (TOW) auf dem Zweidrahtdatenbus (b1b2b3) bzw. auf dem angeschlossenen Zweidrahtdatenbusabschnitt (b1, b2, b3) in Form des Werts des differentiellen Pegelsignals (DPS) mit einem zweiten Schwellwert (V_{2L}) und gibt den durch den betreffenden Busknoten (BSn) empfangenen rekonstruierten Systemtakt (TCKₙ) an das Innere der Schaltung des betreffenden Busknotens (BSn), typischerweise der integrierten Schaltung oder des zu steuernden Systems weiter. Der zweite Komparator detektiert das Wechseln des Betrags des differentiellen Signalpegels (TOW) auf dem Zweidrahtdatenbus (b1,b2,b3) bzw. auf dem angeschlossenen Zweidrahtdatenbusabschnitt (b1b2b3) vom ersten Spannungsbetragsbereich (V_{B1}) einerseits in den zweiten Spannungsbetragsbereich (V_{B2})oder dritten Spannungsbetragsbereich (V_{B3}) andererseits und umgekehrt.
- cmp3: dritter Komparator auf Busknoten Seite. Der dritte Komparator vergleicht den Wert des differentiellen Signalpegels (TOW) auf dem Zweidrahtdatenbus (b1b2b3) bzw. auf dem angeschlossenen Zweidrahtdatenbusabschnitt (b1, b2, b3) in Form des Werts des differentiellen Pegelsignals (DPSn) des betrachteten Busknotens (BSn) mit einem dritten Schwellwert (V_{2H}) und gibt das durch den betrachteten Busknoten (BSn) empfangene Datensignal (TMS_TDIₙ) an das Innere der Schaltung des betrachteten Busknotens (BSn), typischerweise der integrierten Schaltung oder des zu testenden oder zu steuernden Systems weiter. Der dritte Komparator detektiert das Wechseln des Betrags des differentiellen Signalpegels (TOW) auf dem Zweidrahtdatenbus (b1b2b3) bzw. auf dem angeschlossenen Zweidrahtdatenbusabschnitt (b1, b2, b3) vom dritten Spannungsbetragsbereich (V_{B3}) einerseits in den ersten Spannungsbetragsbereich (V_{B1}) oder zweiten Spannungsbetragsbereich (V_{B2}) andererseits und umgekehrt.
- CIR: Zustand "Instruktionsregisterdaten laden" des Test-Controllers (TAPC)
- CDR: Zustand "Datenregisterdaten laden" des Test-Controllers (TAPC)
- ctr1: Kontrollleitungen zur Steuerung der Busmasterschnittstelle (OWM1) des ersten Busknotens (BS1)
- ctr1a: Kontrollleitungen zur Steuerung der ersten Busmasterschnittstelle (OWM1a) des ersten Busknotens (BS1)
- ctr1b: Kontrollleitungen zur Steuerung der zweitenBusmasterschnittstelle (OWM1b) des ersten Busknotens (BS1)
- ctr2: Kontrollleitungen zur Steuerung der Busmasterschnittstelle (OWM2) des zweiten Busknotens (BS2)
- ctr2a: Kontrollleitungen zur Steuerung der ersten Busmasterschnittstelle (OWM2a) des zweiten Busknotens (BS2)
- ctr2b: Kontrollleitungen zur Steuerung der zweiten Busmasterschnittstelle (OWM2b) des zweiten Busknotens (BS2)
- ctr3: Kontrollleitungen zur Steuerung der Busmasterschnittstelle (OWM3) des dritten Busknotens (BS3)
- ctr3a: Kontrollleitungen zur Steuerung der ersten Busmasterschnittstelle (OWM3a) des dritten Busknotens (BS3)
- ctr3b: Kontrollleitungen zur Steuerung der zweiten Busmasterschnittstelle (OWM3b) des dritten Busknotens (BS3)
- ctr4: Kontrollleitungen zur Steuerung der Busmasterschnittstelle (OWM4) des vierten Busknotens (BS4)
- ctr4a: Kontrollleitungen zur Steuerung der ersten Busmasterschnittstelle (OWM4a) des vierten Busknotens (BS4)
- ctr4b: Kontrollleitungen zur Steuerung der zweiten Busmasterschnittstelle (OWM4b) des vierten Busknotens (BS4)
- ctr5: Kontrollleitungen zur Steuerung der Busmasterschnittstelle (OWM5) des fünften Busknotens (BS5)
- ctr5a: Kontrollleitungen zur Steuerung der ersten Busmasterschnittstelle (OWM5a) des fünften Busknotens (BS5)
- ctr5b: Kontrollleitungen zur Steuerung der zweiten Busmasterschnittstelle (OWM5b) des fünften Busknotens (BS5)
- ctr6: Kontrollleitungen zur Steuerung der Busmasterschnittstelle (OWM6) des sechsten Busknotens (BS6)
- ctr6a: Kontrollleitungen zur Steuerung der ersten Busmasterschnittstelle (OWM6a) des sechsten Busknotens (BS6)
- ctr6b: Kontrollleitungen zur Steuerung der zweiten Busmasterschnittstelle (OWM6b) des sechsten Busknotens (BS6)
- ctrₙ: Kontrollleitungen zur Steuerung der Busmasterschnittstelle (OWMₙ) des n-ten Busknotens (BSₙ)
- DPS: Pegelsignal des Busknotens. Das Pegelsignal wird durch den Ausgang des zweiten differentiellen Eingangsverstärkers (V2) der jeweiligen Zweidrahtdatenbusschnittstelle (OWSₙ) eines Busknotens gebildet.
- DPSn: Pegelsignal des betreffenden Busknotens (BSn). Das Pegelsignal wird durch den Ausgang des zweiten differentiellen Eingangsverstärkers (V2n) des betreffenden Busknotens (BSn) der jeweiligen Zweidrahtdatenbusschnittstelle (OWSₙ) eines betreffenden Busknotens (BSn) gebildet.
- DPSM: Pegelsignal des betreffenden Bus-Masters (BM). Das Pegelsignal wird durch den Ausgang des ersten differentiellen Eingangsverstärkers (V1) des Bus-Masters (BM) der jeweiligen Zweidrahtdatenbusschnittstelle (OWM) des Bus-Masters (BM) gebildet.
- DR: Datenregister der JTAG-Schnittstelle (Es sind typischerweise mehrere Datenregister parallel geschaltet und werden über den zweiten Multiplexer (MUX2) während der Lesens der Datenregister (DR) ausgewählt.)
- DRn: Datenregister der JTAG-Schnittstelle des betreffenden Busknotens (BSn) (Es sind typischerweise mehrere Datenregister parallel geschaltet und werden über den zweiten Multiplexer (MUX2n) des betreffenden Busknotens (BSn) während der Lesens der Datenregister (DR) ausgewählt.)
- drs: Auswahlsignal für das Datenregister, das gelesen werden soll.
- Δt: Verzögerungseinheit für das kombinierte TMS-TDI-Signal im Busknoten (TMS_TDIₙ) bzw. das TDo-Signal im Bus-Master;
- EDR1: Zustand "Datenregister Exit 1" des Test-Controllers (TAPC)
- EDR2: Zustand "Datenregister Exit 2" des Test-Controllers (TAPC)
- EIR1: Zustand "Instruktionsregister Exit 1" des Test-Controllers (TAPC)
- EIR2: Zustand "Instruktionsregister Exit 2" des Test-Controllers (TAPC)
- en1: erste Enable-Leitung zum Öffnen und Schließen des ersten TransferGates (TG1) des ersten Busknotens (BS1)
- en2: zweite Enable-Leitung zum Öffnen und Schließen des zweiten Transfer-Gates (TG2) des zweiten Busknotens (BS2)
- en3: dritte Enable-Leitung zum Öffnen und Schließen des dritten TransferGates (TG3) des dritten Busknotens (BS3)
- enₙ: n-te Enable-Leitung zum Öffnen und Schließen des n-ten TransferGates (TGn) des n-ten, betreffenden Busknotens (BSₙ)
- GH: Gehäuse
- GND: Bezugspotenzialleitung. Diese liegt typischerweise aber nicht notwendigerweise auf Masse. Sie besitzt das zweite Bezugspotenzial (GND).
- iTCKₙ: interner Systembasistakt des betroffenen Busknoten (BSn)
- IDCR: Identifikationsregister
- IDCRn: Identifikationsregister des betrachteten Busknotens (BSn)
- Ilds: Beleuchtungsdatenauswahlsignal
- Ildsn: Beleuchtungsdatenauswahlsignal des betrachteten Busknotens (BSn)
- ILR: Beleuchtungsregister
- ILRn: Beleuchtungsregister des betrachteten Busknotens (BSn)
- ILIR: Beleuchtungsinstruktionsregister
- ILIRn: Beleuchtungsinstruktionsregister des betrachteten Busknotens (BSn)
- IR: Instruktionsregister der JTAG-Schnittstelle
- IRn: Instruktionsregister der JTAG-Schnittstelle des betrachteten Busknotens (BSn)
- IRDC: Instruktionsdekoder
- IRDCn: Instruktionsdekoder des betrachteten Busknotens (BSn)
- LED: Leuchtdiode. Es kann sich im Sinne dieser Erfindung auch um die Parallel- und/oder Serienschaltung mehrerer LEDs handeln.
- LED1: Anschluss für die erste LED-Gruppe (eine LED oder mehrere LEDs in Serie und/oder in Reihe geschaltet)
- LED2: Anschluss für die zweite LED-Gruppe (eine LED oder mehrere LEDs in Serie und/oder in Reihe geschaltet)
- LED3: Anschluss für die dritte LED-Gruppe (eine LED oder mehrere LEDs in Serie und/oder in Reihe geschaltet)
- LED4: Anschluss für die vierte LED-Gruppe (eine LED oder mehrere LEDs in Serie und/oder in Reihe geschaltet)
- LM1: Leuchtmittelgruppe 1, die durch den ersten Busknoten (BS1) gesteuert wird.
- LM2: Leuchtmittelgruppe 2, die durch den zweiten Busknoten (BS2) gesteuert wird.
- LM3: Leuchtmittelgruppe 3, die durch den dritten Busknoten (BS3) gesteuert wird.
- LM4: Leuchtmittelgruppe 4, die durch den vierten Busknoten (BS4) gesteuert wird.
- LM5: Leuchtmittelgruppe 5, die durch den fünften Busknoten (BS5) gesteuert wird.
- LM6: Leuchtmittelgruppe 6, die durch den sechsten Busknoten (BS6) gesteuert wird.
- LMn: Leuchtmittelgruppe , die durch den betrachteten Busknoten (BSn) gesteuert wird.
- MUX1: erster Multiplexer innerhalb der JTAG Schnittstelle zum Umschalten zwischen den Datenregistern (DR) und dem Instruktionsregister (IR)
- MUX2: zweiter Multiplexer innerhalb der JTAG-Schnittstelle zum Auswählen des aktiven Datenregisters (DR)
- MUX3: dritter Multiplexer zum Umschalten zwischen einem seriellen Eingang für Beleuchtungsdaten (SILDI) und den seriellen Eingangsdaten (TDI).
- MUXn: Multiplexer zum Umschalten zwischen einem seriellen Eingang für Beleuchtungsdaten (SILDIₙ) und den seriellen Eingangsdaten (TDIn) des betrachteten Busknotens.
- NOR: invertierender ODER-Schaltkreis
- OWM: Master-Zweidrahtdatenbusschnittstelle
- OWM1: Master-Zweidrahtdatenbusschnittstelle des ersten Busknotens (BS1)
- OWM1a: erste Master-Zweidrahtdatenbusschnittstelle des ersten Busknotens (BS1)
- OWM1b: zweite Master-Zweidrahtdatenbusschnittstelle des ersten Busknotens (BS1)
- OWM2: Master-Zweidrahtdatenbusschnittstelle des zweiten Busknotens (BS2)
- OWM2a: erste Master-Zweidrahtdatenbusschnittstelle des zweiten Busknotens (BS2)
- OWM2b: zweite Master-Zweidrahtdatenbusschnittstelle des zweiten Busknotens (BS2)
- OWM3: Master-Zweidrahtdatenbusschnittstelle des dritten Busknotens (BS3)
- OWM3a: erste Master-Zweidrahtdatenbusschnittstelle des dritten Busknotens (BS3)
- OWM3b: zweite Master-Zweidrahtdatenbusschnittstelle des dritten Busknotens (BS3)
- OWM4: Master-Zweidrahtdatenbusschnittstelle des vierten Busknotens (BS4)
- OWM4a: erste Master-Zweidrahtdatenbusschnittstelle des vierten Busknotens (BS4)
- OWM4b: zweite Master-Zweidrahtdatenbusschnittstelle des vierten Busknotens (BS4)
- OWM5: Master-Zweidrahtdatenbusschnittstelle des fünften Busknotens (BS5)
- OWM5a: erste Master-Zweidrahtdatenbusschnittstelle des fünften Busknotens (BS5)
- OWM5b: zweite Master-Zweidrahtdatenbusschnittstelle des fünften Busknotens (BS5)
- OWM6: Master-Zweidrahtdatenbusschnittstelle des sechsten Busknotens (BS6)
- OWM6a: erste Master-Zweidrahtdatenbusschnittstelle des sechsten Busknotens (BS6)
- OWM6b: zweite Master-Zweidrahtdatenbusschnittstelle des sechsten Busknotens (BS6)
- OWMn: Master-Zweidrahtdatenbusschnittstelle des betrachteten Busknotens (BSn)
- OWMCR: Bus-Master-Control-Register
- OWMCRn: Bus-Master-Control-Register des betrachteten Busknotens (BSn)
- OWS1: Zweidrahtdatenbusschnittstelle des ersten Busknotens (BS1)
- OWS2: Zweidrahtdatenbusschnittstelle des zweiten Busknotens (BS2);
- OWS3: Zweidrahtdatenbusschnittstelle des dritten Busknotens (BS3);
- OWS4: Zweidrahtdatenbusschnittstelle des vierten Busknotens (BS4);
- OWS5: Zweidrahtdatenbusschnittstelle des fünften Busknotens (BS5);
- OWS6: Zweidrahtdatenbusschnittstelle des sechsten Busknotens (BS6);
- OWSₙ: Zweidrahtdatenbusschnittstelle des betrachteten Busknotens (BSn);
- PCM: Puls-Code-Modulation
- PDM: Puls-Dichte-Modulation
- PDR: Zustand "Pause Datenregister" des Test-Controllers (TAPC)
- PFM: Puls Frequenz Modulation
- PIR: Zustand "Pause Instruktionsregister" des Test-Controllers (TAPC)
- POM: Pulse-On-Time Modulation und/oder Pulse-Off-Time-Modulation
- PWM: Puls-Weiten-Modulation. (Dieser Begriff umfasst im Sinne dieser Erfindung alle bekannten Arten der Puls-Modulation wie beispielsweise PFM, PCM, PDM, POM etc.)
- PWM1: erste PWM-Einheit
- PWM2: zweite PWM-Einheit
- PWM3: dritte PWM-Einheit
- PWMn: PWM-Einheit des betrachteten Busknotens (BSn)
- R₀: Innenwiderstand des Pull-Schaltkreises (R₁ₐ, R_{1b}, R₂ₐ, R_{2b}), der als vierte reale Spannungsquelle den Zweidrahtdatenbus (b1b2b3) bzw. den angeschlossenen Zweidrahtdatenbusabschnitt (b1, b2, b3) auf einem mittleren zweiten differentiellen Spannungsbetragspegel (V_{M}) hält, wenn die anderen Sender (T1a, T1b, T2a, T2b, T3a, T3b) nicht aktiv sind. (Nicht in den Fig.en eingezeichnet)
- R1a: oberer Widerstand des ersten Spannungsteilers, der beispielhaft den differentiellen Pull-Schaltkreis zusammen mit dem zweiten Spannungsteiler bildet. Der differentielle Pull-Schaltkreis hält den Betrag des differentiellen Signalpegels (TOW) auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R1b: oberer Widerstand des zweiten Spannungsteilers, der beispielhaft den differentiellen Pull-Schaltkreis zusammen mit dem ersten Spannungsteiler bildet. Der differentielle Pull-Schaltkreis hält den Betrag des differentiellen Signalpegels (TOW) auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R2a: unterer Widerstand des ersten Spannungsteilers, der beispielhaft den differentiellen Pull-Schaltkreis zusammen mit dem zweiten Spannungsteiler bildet. Der differentielle Pull-Schaltkreis hält den Betrag des differentiellen Signalpegels (TOW)auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R2b: unterer Widerstand des zweiten Spannungsteilers, der beispielhaft den differentiellen Pull-Schaltkreis zusammen mit dem ersten Spannungsteiler bildet. Der differentielle Pull-Schaltkreis hält den Betrag des differentiellen Signalpegels (TOW)auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R1: erster Widerstand
- R_{1H}: Innenwiderstand der zweiten schaltbaren realen Spannungsquelle im eingeschalteten Zustand, die durch die schaltbare Stromquelle, die Transistoren (T1a, T1b), des Bus-Masters (BM) gebildet wird. (Nicht in den Figuren eingezeichnet)
- R2: zweiter Widerstand
- R_{2H}: Innenwiderstand der dritten schaltbaren realen Spannungsquelle im eingeschalteten Zustand, die durch die schaltbare Stromquelle, die Transistoren (T3a, T3b), des betreffenden Busknotens (BSn) gebildet wird. (Nicht in den Figuren eingezeichnet)
- R3: Spannungsteiler
- R4: vierter Widerstand
- R5: fünfter Widerstand
- R6: sechster Widerstand
- R7a: siebter Widerstand zur Einstellung des Innenwiderstands des Schalters der steuerbaren Stromquelle (T3a) für den Sender des betreffenden Busknotens (BSn)
- R7b: siebter Widerstand zur Einstellung des Innenwiderstands des Schalters der steuerbaren Stromquelle (T3b) für den Sender des betreffenden Busknotens (BSn)
- RUN: Zustand "Warten" des Test-Controllers (TAPC)
- RX: weitere Datenregister (DR), die dem JTAG-Standard entsprechen
- RXn: weitere Datenregister (DRn) des betreffenden Busknotens (BSn), die dem JTAG-Standard entsprechen
- SDRS: Zustand "Start des Datenregisterschiebens" im Test-Controller (TAPC)
- SILDIn: serieller Eingang für Beleuchtungsdaten des betreffenden Busknotens (BSn)
- SILDI1: serieller Eingang für Beleuchtungsdaten des ersten Busknotens (BS1)
- SILDI2: serieller Eingang für Beleuchtungsdaten des zweiten Busknotens (BS2)
- SILDI3: serieller Eingang für Beleuchtungsdaten des dritten Busknotens (BS3)
- SILDOn: serieller Ausgang für Beleuchtungsdaten des betreffenden Busknotens (BSn)
- SILDO1: serieller Ausgang für Beleuchtungsdaten des ersten Busknotens (BS1)
- SILDO2: serieller Ausgang für Beleuchtungsdaten des zweiten Busknotens (BS2)
- SILDO3: serieller Ausgang für Beleuchtungsdaten des dritten Busknotens (BS3)
- SIRS: Zustand "Start des Instruktionsregisterschiebens" im Test-Controller (TAPC)
- SIR: Zustand "Schieben Instruktionsregister" des Test-Controllers (TAPC)
- sir_sdr: Steuersignal für den ersten Multiplexer (MUX1) zwischen Instruktionsregister (IR) und Datenregistern (DR)
- SDR: Zustand "Schieben Datenregister" des Test-Controllers (TAPC)
- SR: Senderegister
- SRn: Senderegister des betreffenden Busknotens (BSn)
- T: Systembasistaktperiode
- T1a: erster Transistor für die Ansteuerung des ersten Eindrahtdatenbusses (b1a, b2a, b3a, b4a) des Zweidrahtdatenbusses (b1b2b3b4) zum Senden des Systemtakts vom Bus-Master (BM) zu Busknoten. Der erste Transistor bildet einen dominierenden Schalter gegenüber anderen Sendern (T2a, T3a, R1a, R2a) auf dem ersten Eindrahtdatenbus (b1a, b2a, b3a, b4a) des Zweidrahtdatenbusses (b1b2b3b4).
- T1b: weiterer erster Transistor für die Ansteuerung des zweiten Eindrahtdatenbusses (b1b, b2b, b3b, b4b) des Zweidrahtdatenbusses (b1b2b3b4) zum Senden des Systemtakts vom Bus-Master (BM) zu Busknoten. Der weitere erste Transistor bildet einen dominierenden Schalter gegenüber anderen Sendern (T2b, T3b, R1b, R2b) auf dem zweiten Eindrahtdatenbus (b1b, b2b, b3b, b4b) des Zweidrahtdatenbusses (b1b2b3b4).
- T_{1H}: erste Halbtaktperiode von mindestens zwei Halbtaktperioden (T_{1H}, T_{2H}) der Systemtaktperiode
- T2a: zweiter Transistor für die Ansteuerung des ersten Eindrahtdatenbusses (b1a, b2a, b3a, b4a) des Zweidrahtdatenbusses (b1b2b3b4) zum Senden von Daten vom Bus-Master (BM) zu Busknoten. Der zweite Transistor bildet einen dominierenden Schalter gegenüber dem Spannungsteiler des differentiellen Pull-Schaltkreises (R1a, R2a) auf dem ersten Eindrahtdatenbus (b1a, b2a, b3a, b4a) des Zweidrahtdatenbusses (b1b2b3b4). Der Innenwiderstand des zweiten Transistors im eingeschalteten Zustand ist so eingestellt, dass der erste Transistor (T1a) einen oder mehrere zweite und dritte Transistoren, die auf dem ersten Eindrahtdatenbus (b1a, b2a, b3a, b4a) des Zweidrahtdatenbusses (b1b2b3b4) senden, überschreiben kann. Der zweite Transistor ist vorzugsweise einem dritten Transistor (T3a) gegenüber gleichberechtigt.
- T2b: weiterer zweiter Transistor für die Ansteuerung des zweiten Eindrahtdatenbusses (b1b, b2b, b3b, b4b) des Zweidrahtdatenbusses (b1b2b3b4) zum Senden von Daten vom Bus-Master (BM) zu Busknoten. Der weitere zweite Transistor bildet einen dominierenden Schalter gegenüber dem Spannungsteiler des differentiellen Pull-Schaltkreises (R1b, R2b) auf dem zweiten Eindrahtdatenbus des Zweidrahtdatenbusses (b1b2b3b4). Der Innenwiderstand des weiteren zweiten Transistors im eingeschalteten Zustand ist so eingestellt, dass der weitere erste Transistor (T1b) einen oder mehrere weitere zweite und weitere dritte Transistoren, die auf dem zweiten Eindrahtdatenbus (b1b, b2b, b3b, b4b) des Zweidrahtdatenbusses (b1b2b3b4) senden, überschreiben kann. Der weitere zweite Transistor ist vorzugsweise einem weiteren dritten Transistor (T3b) gegenüber gleichberechtigt.
- T_{2H}: zweite Halbtaktperiode von mindestens zwei Halbtaktperioden (T_{1H}, T_{2H}) der Systemtaktperiode
- T3a: dritter Transistor für die Ansteuerung des ersten Eindrahtdatenbusses (b1a, b2a, b3a, b4a) des Zweidrahtdatenbusses (b1b2b3b4) zum Senden von Daten vom betrachteten Busknoten (BSn) zum Bus-Master (BM). Der dritte Transistor bildet einen dominierenden Schalter gegenüber dem Spannungsteiler des differentiellen Pull-Schaltkreises (R1a, R2a) auf dem ersten Eindrahtdatenbus des Zweidrahtdatenbusses (b1b2b3b4). Der Innenwiderstand des dritten Transistors im eingeschalteten Zustand ist so eingestellt, dass der erste Transistor (T1a) einen oder mehrere zweite und dritte Transistoren, die auf dem ersten Eindrahtdatenbus (b1a, b2a, b3a, b4a) des Zweidrahtdatenbusses (b1b2b3b4) senden, überschreiben kann. Der dritte Transistor ist vorzugsweise einem zweiten Transistor (T2a) gegenüber gleichberechtigt.
- T3b: weiterer dritter Transistor für die Ansteuerung des zweiten Eindrahtdatenbusses (b1b, b2b, b3b, b4b) des Zweidrahtdatenbusses (b1b2b3b4) zum Senden von Daten vom betrachteten Busknoten (BSn) zum Bus-Master (BM). Der weitere dritte Transistor bildet einen dominierenden Schalter gegenüber dem weiteren Spannungsteiler des differentiellen Pull-Schaltkreises (R1b, R2b) auf dem zweiten Eindrahtdatenbus (b1b, b2b, b3b, b4b) des Zweidrahtdatenbusses (b1b2b3b4). Der Innenwiderstand des weiteren dritten Transistors im eingeschalteten Zustand ist so eingestellt, dass der weitere erste Transistor (T1b) einen oder mehrere weitere zweite und weitere dritte Transistoren, die auf dem zweiten Eindrahtdatenbus des Zweidrahtdatenbusses (b1b2b3b4) senden, überschreiben kann. Der weitere dritte Transistor ist vorzugsweise einem weiteren zweiten Transistor (T2b) gegenüber gleichberechtigt.
- TAPC: Test-Controller
- TAPCn: Test-Controller des betreffenden Busknotens (BSn)
- TB: Datenaufbereitung
- TCK: Takteingang (Testtakteingang) und Systemtakt und durch den BusMaster (BM) zu sendendes Taktsignal (Systemtakt).
- TCK1: rekonstruierter Systemtakt innerhalb des ersten Busknotens (BS1)
- TCK1i: rekonstruierter Systemtakt innerhalb des ersten Busknotens (BS1) von der ersten Zweidrahtdatenbusschnittstelle (OWS1) des ersten Busknotens (BS1) kommend
- TCK1o: rekonstruierter Systemtakt innerhalb des ersten Busknotens (BS1) für die Master-Zweidrahtdatenbusschnittstelle (OWM1) des ersten Busknotens (BS1)
- TCK1ao: rekonstruierter Systemtakt innerhalb des ersten Busknotens (BS1) für die erste Master-Zweidrahtdatenbusschnittstelle (OWM1a) des ersten Busknotens (BS1)
- TCK1bo: rekonstruierter Systemtakt innerhalb des ersten Busknotens (BS1) für die zweite Master-Zweidrahtdatenbusschnittstelle (OWM1b) des ersten Busknotens (BS1)
- TCK2: rekonstruierter Systemtakt innerhalb des zweiten Busknotens (BS2)
- TCK2i: rekonstruierter Systemtakt innerhalb des zweiten Busknotens (BS2) von der zweiten Zweidrahtdatenbusschnittstelle (OWS2) des zweiten Busknotens (BS2) kommend
- TCK2o: rekonstruierter Systemtakt innerhalb des zweiten Busknotens (BS2) für die Master-Zweidrahtdatenbusschnittstelle (OWM2) des zweiten Busknotens (BS2)
- TCK2ao: rekonstruierter Systemtakt innerhalb des zweiten Busknotens (BS2) für die erste Master-Zweidrahtdatenbusschnittstelle (OWM2a) des zweiten Busknotens (BS2)
- TCK2bo: rekonstruierter Systemtakt innerhalb des zweiten Busknotens (BS2) für die zweite Master-Zweidrahtdatenbusschnittstelle (OWM2b) des zweiten Busknotens (BS2)
- TCK3: rekonstruierter Systemtakt innerhalb des dritten Busknotens (BS3)
- TCK3i: rekonstruierter Systemtakt innerhalb des dritten Busknotens (BS3) von der dritten Zweidrahtdatenbusschnittstelle (OWS3) des dritten Busknotens (BS3) kommend
- TCK3o: rekonstruierter Systemtakt innerhalb des dritten Busknotens (BS3) für die Master-Zweidrahtdatenbusschnittstelle (OWM3) des dritten Busknotens (BS3))
- TCK3ao: rekonstruierter Systemtakt innerhalb des dritten Busknotens (BS3) für die erste Master-Zweidrahtdatenbusschnittstelle (OWM3a) des dritten Busknotens (BS3))
- TCK3bo: rekonstruierter Systemtakt innerhalb des dritten Busknotens (BS3) für die zweite Master-Zweidrahtdatenbusschnittstelle (OWM3b) des dritten Busknotens (BS3)
- TCK4: rekonstruierter Systemtakt innerhalb des vierten Busknotens (BS4)
- TCK4i: rekonstruierter Systemtakt innerhalb des vierten Busknotens (BS4) von der vierten Zweidrahtdatenbusschnittstelle (OWS4) des vierten Busknotens (BS4) kommend
- TCK4o: rekonstruierter Systemtakt innerhalb des vierten Busknotens (BS4) für die Master-Zweidrahtdatenbusschnittstelle (OWM4) des vierten Busknotens (BS4))
- TCK4ao: rekonstruierter Systemtakt innerhalb des vierten Busknotens (BS4) für die erste Master-Zweidrahtdatenbusschnittstelle (OWM4a) des vierten Busknotens (BS4)
- TCK4bo: rekonstruierter Systemtakt innerhalb des vierten Busknotens (BS4) für die zweite Master-Zweidrahtdatenbusschnittstelle (OWM4b) des vierten Busknotens (BS4)
- TCK5: rekonstruierter Systemtakt innerhalb des fünften Busknotens (BS5)
- TCK5i: rekonstruierter Systemtakt innerhalb des fünften Busknotens (BS5)von der fünften Zweidrahtdatenbusschnittstelle (OWS5) des fünften Busknotens (BS5) kommend
- TCK5o: rekonstruierter Systemtakt innerhalb des fünften Busknotens (BS5) für die Master-Zweidrahtdatenbusschnittstelle (OWM5) des fünften Busknotens (BS5)
- TCK5ao: rekonstruierter Systemtakt innerhalb des fünften Busknotens (BS5) für die erste Master-Zweidrahtdatenbusschnittstelle (OWM5a) des fünften Busknotens (BS5)
- TCK5bo: rekonstruierter Systemtakt innerhalb des fünften Busknotens (BS5) für die zweite Master-Zweidrahtdatenbusschnittstelle (OWM5b) des fünften Busknotens (BS5)
- TCK6: rekonstruierter Systemtakt innerhalb des sechste Busknotens (BS6)
- TCK6i: rekonstruierter Systemtakt innerhalb des sechste Busknotens (BS6) von der sechsten Zweidrahtdatenbusschnittstelle (OWS6) des sechste Busknotens (BS6) kommend
- TCK6o: rekonstruierter Systemtakt innerhalb des sechste Busknotens (BS6) für die Master-Zweidrahtdatenbusschnittstelle (OWM6) des sechste Busknotens (BS6)
- TCK6ao: rekonstruierter Systemtakt innerhalb des sechste Busknotens (BS6)für die erste Master-Zweidrahtdatenbusschnittstelle (OWM6a) des sechste Busknotens (BS6)
- TCK6bo: rekonstruierter Systemtakt innerhalb des sechste Busknotens (BS6) für die zweite Master-Zweidrahtdatenbusschnittstelle (OWM6b) des sechste Busknotens (BS6)
- TCKₙ: rekonstruierter Systemtakt innerhalb des betreffenden Busknotens (BSn)
- TDI: serieller Dateneingang (Testdateneingang)
- TDO_{z}: dritter Zeitschlitz oder Busknotensendezeitschlitz. Der dritte Zeitschlitz wird typischerweise zur Übertragung des TDO-Signals des JTAG Test-Ports nach IEEE Standard 1149 vom angesprochenen Busknoten mit Sendeberechtigung zum Bus-Master (BM) verwendet. Es ist aber nicht zwingend notwendig, dass dieser Zeitschlitz an der dritten zeitlichen Position platziert wird. Andere zeitliche Reihenfolgen sind möglich.
- TDo: serieller Datenausgang (Testdatenausgang) und durch den Bus-Master (BM) empfangenes Datensignal
- TDO1i: rekonstruiertes Datensignal innerhalb des ersten Busknotens (BS1) von der ersten Zweidrahtdatenbusschnittstelle (OWS1) des ersten Busknotens (BS1) kommend
- TDO 1o: rekonstruiertes Datensignal innerhalb des ersten Busknotens (BS1) für die Master-Zweidrahtdatenbusschnittstelle (OWM1) des ersten Busknotens (BS1)
- TDO 1ao: rekonstruiertes Datensignal innerhalb des ersten Busknotens (BS1) für die erste Master-Zweidrahtdatenbusschnittstelle (OWM1a) des ersten Busknotens (BS1)
- TDO 1bo: rekonstruiertes Datensignal innerhalb des ersten Busknotens (BS1) für die zweite Master-Zweidrahtdatenbusschnittstelle (OWM1b) des ersten Busknotens (BS1)
- TDO2i: rekonstruiertes Datensignal innerhalb des zweiten Busknotens (BS2) von der zweiten Zweidrahtdatenbusschnittstelle (OWS2) des zweiten Busknotens (BS2) kommend
- TDO2o: rekonstruiertes Datensignal innerhalb des zweiten Busknotens (BS2) für die Master-Zweidrahtdatenbusschnittstelle (OWM2) des zweiten Busknotens (BS2)
- TDO2ao: rekonstruiertes Datensignal innerhalb des zweiten Busknotens (BS2) für die erste Master-Zweidrahtdatenbusschnittstelle (OWM2a) des zweiten Busknotens (BS2)
- TDO2bo: rekonstruiertes Datensignal innerhalb des zweiten Busknotens (BS2) für die zweite Master-Zweidrahtdatenbusschnittstelle (OWM2b) des zweiten Busknotens (BS2)
- TDO3i: rekonstruiertes Datensignal innerhalb des dritten Busknotens (BS3) von der dritten Zweidrahtdatenbusschnittstelle (OWS3) des dritten Busknotens (BS3) kommend
- TDO3o: rekonstruiertes Datensignal innerhalb des dritten Busknotens (BS3) für die Master-Zweidrahtdatenbusschnittstelle (OWM3) des dritten Busknotens (BS3)
- TDO3ao: rekonstruiertes Datensignal innerhalb des dritten Busknotens (BS3) für die erste Master-Zweidrahtdatenbusschnittstelle (OWM3a) des dritten Busknotens (BS3)
- TDO3bo: rekonstruiertes Datensignal innerhalb des dritten Busknotens (BS3) für die zweite Master-Zweidrahtdatenbusschnittstelle (OWM3b) des dritten Busknotens (BS3)
- TDO4i: rekonstruiertes Datensignal innerhalb des vierten Busknotens (BS4) von der vierten Zweidrahtdatenbusschnittstelle (OWS4) des vierten Busknotens (BS4) kommend
- TDO4o: rekonstruiertes Datensignal innerhalb des vierten Busknotens (BS4) für die Master-Zweidrahtdatenbusschnittstelle (OWM4) des vierten Busknotens (BS4)
- TDO4ao: rekonstruiertes Datensignal innerhalb des vierten Busknotens (BS4) für die erste Master-Zweidrahtdatenbusschnittstelle (OWM4a) des vierten Busknotens (BS4)
- TDO4bo: rekonstruiertes Datensignal innerhalb des vierten Busknotens (BS4) für die zweite Master-Zweidrahtdatenbusschnittstelle (OWM4b) des vierten Busknotens (BS4)
- TDO5i: rekonstruiertes Datensignal innerhalb des fünften Busknotens (BS5) von der fünften Zweidrahtdatenbusschnittstelle (OWS5) des fünften Busknotens (BS5) kommend
- TDO5o: rekonstruiertes Datensignal innerhalb des fünften Busknotens (BS5) für die Master-Zweidrahtdatenbusschnittstelle (OWM5) des fünften Busknotens (BS5)
- TDO5ao: rekonstruiertes Datensignal innerhalb des fünften Busknotens (BS5) für die erste Master-Zweidrahtdatenbusschnittstelle (OWM5a) des fünften Busknotens (BS5)
- TDO5bo: rekonstruiertes Datensignal innerhalb des fünften Busknotens (BS5) für die zweite Master-Zweidrahtdatenbusschnittstelle (OWM5b) des fünften Busknotens (BS5)
- TDO6i: rekonstruiertes Datensignal innerhalb des sechsten Busknotens (BS6) von der sechsten Zweidrahtdatenbusschnittstelle (OWS6) des sechsten Busknotens (BS6) kommend
- TDO6o: rekonstruiertes Datensignal innerhalb des sechsten Busknotens (BS6) für die Master-Zweidrahtdatenbusschnittstelle (OWM6) des sechsten Busknotens (BS6)
- TDO6ao: rekonstruiertes Datensignal innerhalb des sechsten Busknotens (BS6) für die erste Master-Zweidrahtdatenbusschnittstelle (OWM6a) des sechsten Busknotens (BS6)
- TDO6bo: rekonstruiertes Datensignal innerhalb des sechsten Busknotens (BS6) für die zweite Master-Zweidrahtdatenbusschnittstelle (OWM6b) des sechsten Busknotens (BS6)
- TDOₙ: aus dem Innern des betrachteten Busknotens (BSn) zu übertragende serielle Daten;
- TIN0: erster Zeitschlitz. Der erste Zeitschlitz wird typischerweise zur Übertragung des TMS-Signals des JTAG Test-Ports nach IEEE Standard 1149 vom Bus-Master (BM) zum jeweiligen Busknoten (BS1, BS2, BS3) verwendet. Es ist aber nicht zwingend notwendig, dass dieser Zeitschlitz an der ersten zeitlichen Position platziert wird. Andere zeitliche Reihenfolgen sind möglich.
- TIN1: zweiter Zeitschlitz. Der zweite Zeitschlitz wird typischerweise zur Übertragung des TDI-Signals des JTAG Test-Ports nach IEEE Standard 1149 vom Bus-Master zum Busknoten (BS1, BS2, BS3) verwendet. Es ist aber nicht zwingend notwendig, dass dieser Zeitschlitz an der zweiten zeitlichen Position platziert wird. Andere zeitliche Reihenfolgen sind möglich.
- TLR: Zustand "Testlogik zurücksetzen".
- TMS: Mode-Eingang (Testmode-Eingang) bzw. Test-Mode-Signal
- TMS_TDI1: kombiniertes TMS-TDI-Signal innerhalb des ersten Busknotens (BS1)
- TMS_TDI1i: kombiniertes TMS-TDI-Signal innerhalb des ersten Busknotens (BS1) von der ersten Zweidrahtdatenbusschnittstelle (OWS1) des ersten Busknotens (BS1) kommend
- TMS_TDI1o: kombiniertes TMS-TDI-Signal innerhalb des ersten Busknotens (BS1)für die Master-Zweidrahtdatenbusschnittstelle (OWM1) des ersten Busknotens (BS1)
- TMS_TDI1ao: kombiniertes TMS-TDI-Signal innerhalb des ersten Busknotens (BS1) für die erste Master-Zweidrahtdatenbusschnittstelle (OWM1a) des ersten Busknotens (BS1)
- TMS_TDI1bo: kombiniertes TMS-TDI-Signal innerhalb des ersten Busknotens (BS1) für die zweite Master-Zweidrahtdatenbusschnittstelle (OWM1b) des ersten Busknotens (BS1)
- TMS_TDI2: kombiniertes TMS-TDI-Signal innerhalb des zweiten Busknotens (BS2)
- TMS_TDI2i: kombiniertes TMS-TDI-Signal innerhalb des zweiten Busknotens (BS2) von der zweiten Zweidrahtdatenbusschnittstelle (OWS2) des zweiten Busknotens (BS2) kommend
- TMS_TDI2o: kombiniertes TMS-TDI-Signal innerhalb des zweiten Busknotens (BS2) für die Master-Zweidrahtdatenbusschnittstelle (OWM2) des zweiten Busknotens (BS2)
- TMS_TDI2ao: kombiniertes TMS-TDI-Signal innerhalb des zweiten Busknotens (BS2) für die erste Master-Zweidrahtdatenbusschnittstelle (OWM2a) des zweiten Busknotens (BS2)
- TMS_TDI2bo: kombiniertes TMS-TDI-Signal innerhalb des zweiten Busknotens (BS2) für die zweite Master-Zweidrahtdatenbusschnittstelle (OWM2b) des zweiten Busknotens (BS2)
- TMS_TDI3: kombiniertes TMS-TDI-Signal innerhalb des dritten Busknotens (BS3)
- TMS_TDI3i: kombiniertes TMS-TDI-Signal innerhalb des dritten Busknotens (BS3) von der dritten Zweidrahtdatenbusschnittstelle (OWS3) des dritten Busknotens (BS3) kommend
- TMS_TDI3o: kombiniertes TMS-TDI-Signal innerhalb des dritten Busknotens (BS3) für die Master-Zweidrahtdatenbusschnittstelle (OWM3) des dritten Busknotens (BS3))
- TMS_TDI3ao: kombiniertes TMS-TDI-Signal innerhalb des dritten Busknotens (BS3) für die erste Master-Zweidrahtdatenbusschnittstelle (OWM3a) des dritten Busknotens (BS3))
- TMS_TDI3bo: kombiniertes TMS-TDI-Signal innerhalb des dritten Busknotens (BS3) für die zweite Master-Zweidrahtdatenbusschnittstelle (OWM3b) des dritten Busknotens (BS3)
- TMS_TDI4: kombiniertes TMS-TDI-Signal innerhalb des vierten Busknotens (BS4)
- TMS_TDI4i: kombiniertes TMS-TDI-Signal innerhalb des vierten Busknotens (BS4) von der vierten Zweidrahtdatenbusschnittstelle (OWS4) des vierten Busknotens (BS4) kommend
- TMS_TDI4o: kombiniertes TMS-TDI-Signal innerhalb des vierten Busknotens (BS4) für die Master-Zweidrahtdatenbusschnittstelle (OWM4) des vierten Busknotens (BS4))
- TMS_TDI4ao: kombiniertes TMS-TDI-Signal innerhalb des vierten Busknotens (BS4) für die erste Master-Zweidrahtdatenbusschnittstelle (OWM4a) des vierten Busknotens (BS4)
- TMS_TDI4bo: kombiniertes TMS-TDI-Signal innerhalb des vierten Busknotens (BS4) für die zweite Master-Zweidrahtdatenbusschnittstelle (OWM4b) des vierten Busknotens (BS4)
- TMS_TDI5: kombiniertes TMS-TDI-Signal innerhalb des fünften Busknotens (BS5)
- TMS_TDI5i: kombiniertes TMS-TDI-Signal innerhalb des fünften Busknotens (BS5) von der fünften Zweidrahtdatenbusschnittstelle (OWS5) des fünften Busknotens (BS5) kommend
- TMS_TDI5o: kombiniertes TMS-TDI-Signal innerhalb des fünften Busknotens (BS5) für die Master-Zweidrahtdatenbusschnittstelle (OWM5) des fünften Busknotens (BS5)
- TMS_TDI5ao: kombiniertes TMS-TDI-Signal innerhalb des fünften Busknotens (BS5) für die erste Master-Zweidrahtdatenbusschnittstelle (OWM5a) des fünften Busknotens (BS5)
- TMS_TDI5bo: kombiniertes TMS-TDI-Signal innerhalb des fünften Busknotens (BS5) für die zweite Master-Zweidrahtdatenbusschnittstelle (OWM5b) des fünften Busknotens (BS5)
- TMS_TDI6: kombiniertes TMS-TDI-Signal innerhalb des sechsten Busknotens (BS6)
- TMS_TDI6i: kombiniertes TMS-TDI-Signal innerhalb des sechsten Busknotens (BS6) von der sechsten Zweidrahtdatenbusschnittstelle (OWS6) des sechsten Busknotens (BS6) kommend
- TMS_TDI6o: kombiniertes TMS-TDI-Signal innerhalb des sechsten Busknotens (BS6) für die Master-Zweidrahtdatenbusschnittstelle (OWM6) des sechsten Busknotens (BS6)
- TMS_TDI6ao: kombiniertes TMS-TDI-Signal innerhalb des sechsten Busknotens (BS6) für die erste Master-Zweidrahtdatenbusschnittstelle (OWM6a) des sechsten Busknotens (BS6)
- TMS_TDI6bo: kombiniertes TMS-TDI-Signal innerhalb des sechsten Busknotens (BS6) für die zweite Master-Zweidrahtdatenbusschnittstelle (OWM6b) des sechsten Busknotens (BS6)
- TMS_TDIₙ: kombiniertes TMS-TDI-Signal innerhalb des betrachteten Busknotens (BSn)
- TRST: optionaler Rücksetzeingang (Testrücksetzeingang)
- TG1: Transfer-Gate des beispielhaft ersten Busknotens (BS1)
- TG2: Transfer-Gate des beispielhaft zweiten Busknotens (BS2)
- TG3: Transfer-Gate des beispielhaft dritten Busknotens (BS3)
- TGn: Transfer-Gate des beispielhaft betrachteten Busknotens (BSn)
- TGCR: Transfer-Gate-Control-Register
- TGCRn: Transfer-Gate-Control-Register des betrachteten Busknotens (BSn)
- TOW: differentieller Signalpegel. Der differentielle Signalpegel auf dem Zweidrahtdatenbus (b1b2b3b4) ist die Potentialdifferenz zwischen dem ersten Eindrahtdatenbus und dem zweiten Eindrahtdatenbus des Zweidrahtdatenbusses (b1b2b3b4).
- UDR2: Zustand "Datenregister schreiben" des Test-Mode-Controllers
- UIR2: Zustand "Instruktionsregister schreiben" des Test-Mode-Controllers
- V_{bat}: Versorgungsspannung des Busknotens
- V_{M}: mittlerer zweiter differentieller Spannungsbetragspegel im zweiten Spannungsbetragsbereich (V_{B2}), der sich einstellt, wenn kein anderer Sender (T1a, T1b, T2a, T2b, T3a, T3b) aktiv ist und sich somit der Pull-Schaltkreis (R1a, R1b, R2a, R2b) durchsetzt.
- V_{1H}: erster Schwellwert. Der erste Schwellwert separiert den dritten Spannungsbetragsbereich (V_{B3}) einerseits vom ersten Spannungsbetragsbereich (V_{B1}) und zweiten Spannungsbetragsbereich (V_{B2}) andererseits auf Bus-Master-Seite. Der erste Schwellwert ist vorzugsweise gleich oder ähnlich dem dritten Schwellwert (V_{2H}). Er wird zur Übertragung von Daten verwendet.
- V_{2L}: zweiter Schwellwert. Der zweite Schwellwert separiert den ersten Spannungsbetragsbereich (V_{B1}) einerseits vom dritten Spannungsbetragsbereich (V_{B3}) und zweiten Spannungsbetragsbereich (V_{B2}) andererseits auf der Busknoten-Seite. Er wird zur Übertragung des Taktes verwendet.
- V_{2H}: dritter Schwellwert. Der dritte Schwellwert separiert den dritten Spannungsbetragsbereich (V_{B3}) einerseits vom ersten Spannungsbetragsbereich (V_{B1}) und zweiten Spannungsbetragsbereich (V_{B2}) andererseits auf Busknoten-Seite. Der dritte Schwellwert ist vorzugsweise gleich oder ähnlich dem ersten Schwellwert (V_{1H}). Er wird zur Übertragung von Daten verwendet.
- V_{B1}: erster Spannungsbetragsbereich, der zum zweiten Spannungsbetragsbereich (V_{B2}) hin durch den zweiten Schwellwert (V_{2L}) begrenzt wird. Er wird zur Übertragung des Taktes verwendet.
- V_{B2}: zweiter Spannungsbetragsbereich zwischen dem ersten Spannungsbetragsbereich (V_{B1}) und dem dritten Spannungsbetragsbereich (V_{B3}), der zum ersten Spannungsbetragsbereich (V_{B1}) hin durch den zweiten Schwellwert (V_{2L}) begrenzt wird und der zum dritten Spannungsbetragsbereich (V_{B3}) hin durch den dritten Schwellwert (V_{2H}) des Busknotens und/oder durch den ersten Schwellwert (V_{1H}) des Bus-Masters (BM) begrenzt wird. Er wird zur Übertragung von Daten verwendet.
- V_{B3}: dritter Spannungsbetragsbereich, der zum zweiten Spannungsbetragsbereich (V_{B2}) hin durch den dritten Schwellwert (V_{2H}) des Busknotens und/oder durch den ersten Schwellwert (V_{1H}) des Bus-Masters (BM) begrenzt wird. Er wird zur Übertragung von Daten verwendet.
- Vₑₓₜ₁: externe Versorgungsspannung
- -V_{IO}: erster differentieller Spannungsbetragspegel
- V_{IO}: dritter differentieller Spannungsbetragspegel und Versorgungsspannung für den Pull-Schaltkreis, hier den Spannungsteiler (R1a, R2a; R1b, R2b).
- V_{IO1}: Versorgungsspannung der schaltbaren Stromquelle (T2a, T2b) des Bus-Masters, also des Host-Prozessors. Der Spannungspegel liegt im dritten Spannungsbetragsbereich (V_{B3}).
- V_{IO2}: Versorgungsspannung der schaltbaren Stromquelle (T3a, T3b) des Busknotens, also der integrierten Schaltung oder des zu testenden oder steuernden Systems. Der Spannungspegel liegt im dritten Spannungsbetragsbereich (V_{B3}).
- VREF: Referenzspannung

## Patentansprüche

1. Verfahren zur Initialisierung eines differentiellen Zweidrahtdatenbusses zwischen einer ersten Teilvorrichtung, dem Bus-Master (BM), und mindestens zwei weiteren Teilvorrichtungen, den Busknoten (BS1, BS2, BS3), wobei der Zweidrahtdatenbus (b1b2b3b4) einen ersten Eindrahtdatenbus (b1a, b2a, b3a, b4a) sowie einen zweiten Eindrahtdatenbus (b1b, b2b, b3b) umfasst und durch die mindestens zwei Busknoten in mindestens zwei Zweidrahtdatenbusabschnitte (b1, b2, b3) mit zugehörigen ersten Eindrahtdatenbusabschnitten (b1a, b2a, b3a) und zweiten Eindrahtdatenbusabschnitten (b1b, b2b, b3b) unterteilt wird und durch mindestens einen Busknoten (BS3) der Busknoten (BS1, BS2, BS3), den abschließenden Busknoten (BS3), abgeschlossen wird, **umfassend die Schritte**,
- Ermitteln einer neuen Busknotenadresse durch den Bus-Master;
- Ablegen dieser Busknotenadresse in einem Busknotenadressregister (BKADR) eines Busknotens (BS1, BS2, BS3), des betrachteten Busknotens, durch den Bus-Master (BM), wobei der Bus-Master (BM) und der betrachtete Busknoten durch einen oder mehrere Zweidrahtdatenbusabschnitte (b1, b2, b3) miteinander verbunden sind und es sich bei dem Busknotenadressregister (BKADR) um ein Datenregister (DR) einer modifizierten JTAG-Schnittstelle oder einen Teil eines Datenregisters (DR) einer modifizierten JTAG-Schnittstelle des betrachteten Busknotens oder einen Teil eines Instruktionsregisters (IR) einer modifizierten JTAG-Schnittstelle des betrachteten Busknotens handelt, die insoweit modifiziert ist, als sie einen Test-Controller mit einem Zustandsdiagram entsprechend dem IEEE 1149-Standard oder eines seiner Unterstandards aufweist und statt eines Absolut-Spannungssignals, also eines Spannungssignals, welches sich bezogen auf einen Referenzpegel wie z.B. Massepotential verändert, mit einem differentiellen Signal betrieben wird, wie es über den differentiellen Zweidrahtdatenbus übertragen wird; und
- Verbinden eines oder mehrerer Zweidrahtdatenbusabschnitte (b1, b2, b3) mit einem oder mehreren weiteren Zweidrahtdatenbusabschnitten (b1, b2, b3) durch Schließen eines Transfer-Gates (TG) des betrachteten Busknotens, wobei eine Ablage einer Busknotenadresse in einem Busknotenadressregister (BKADR) des betrachteten Busknotens (BS1, BS2, BS3) durch den Bus-Master (BM) solange durch den Busknoten verhindert wird, wie das Transfer-Gate (TG) geschlossen ist.

2. Verfahren zur Initialisierung eines differenziellen Zweidrahtdatenbusses nach Anspruch 1, umfassend den Schritt des Ablegens eines Befehls zum Öffnen eines Transfer-Gates (TG) in dem Instruktionsregister (IR) oder einem Transfer-Gate-Control-Register (TGCR) der modifizierten JTAG-Schnittstelle des betrachteten Busknotens.

3. Verfahren zur Initialisierung eines differenziellen Zweidrahtdatenbusses nach Anspruch 1, umfassend den Schritt des Überprüfens der korrekten Adressierung zumindest eines Busknotens durch zyklisches Schreiben und Lesen, insbesondere eines Bypass-Registers.

4. Verfahren zur Initialisierung eines differenziellen Zweidrahtdatenbusses nach Anspruch 3, umfassend die Schritte des Ermittelns der Anzahl korrekt adressierbarer Busknoten durch den Bus-Master (BM) und des Vergleichens der Anzahl korrekt adressierbarer Busknoten mit einer Sollanzahl und Auslösung mindestens eines Signals oder einer Maßnahme in Abhängigkeit von der Anzahl durch den Bus-Master oder ein angeschlossenes System.

5. Verfahren zur Übermittlung von Daten nach Initialisierung eines differenziellen Zweidrahtdatenbusses nach einem der Ansprüche 1 bis 4, umfassend die folgenden Schritte:
- gleichzeitiges Übermitteln einer Sendeadresse an alle erreichbaren Busknoten durch Beschreiben von Senderegistern (SR) aller Busknoten durch den Bus-Master (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der modifizierten JTAG-Schnittstelle dieses Busknotens ist, und wobei das Busknotenadressregister (BKADR) kein Teil des betreffenden Registers ist;
- Vergleich der Sendeadresse im Senderegister (SR) mit der Busknotenadresse im Busknotenadressregister (BKADR) durch jeden Busknoten mittels eines vorbestimmten Vergleichsalgorithmus;
- Aktivierung der Sendefähigkeit für den jeweiligen Busknoten zu den dafür vorgesehenen Zeitpunkten, wenn der Vergleichsalgorithmus des zuvor durch diesen jeweiligen Busknoten ausgeführten Vergleiches eine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt;
- Deaktivierung der Sendefähigkeit für den jeweiligen Busknoten, wenn der Vergleichsalgorithmus des zuvor durch diesen jeweiligen Busknoten ausgeführten Vergleiches keine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt.

6. Verfahren zur Übermittlung von Daten nach Initialisierung eines differenziellen Zweidrahtdatenbusses nach Anspruch 1 bis 4, umfassend die folgenden Schritte:
- gleichzeitiges Übermitteln einer Sendeadresse an alle erreichbaren Busknoten durch Beschreiben von Senderegistern (SR) aller Busknoten durch den Bus-Master (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der modifizierten JTAG-Schnittstelle dieses Busknotens ist, und wobei das Busknotenadressregister (BKADR) kein Teil des betreffenden Registers ist;
- Vergleich der Sendeadresse im Senderegister (SR) mit der Busknotenadresse im Busknotenadressregister (BKADR) durch jeden Busknoten mittels eines vorbestimmten Vergleichsalgorithmus;
- Aktivierung der Empfangsfähigkeit des jeweiligen Busknotens für den Inhalt vorbestimmter Datenregister des jeweiligen Busknotens, wenn der Vergleichsalgorithmus des zuvor durch diesen jeweiligen Busknoten ausgeführten Vergleiches eine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt;
- Deaktivierung der Empfangsfähigkeit des jeweiligen Busknotens für den Inhalt vorbestimmter Datenregister des jeweiligen Busknotens, wenn der Vergleichsalgorithmus des zuvor durch diesen jeweiligen Busknoten ausgeführten Vergleiches keine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt.

7. Verfahren zur Übermittlung von Daten nach Initialisierung eines differenziellen Zweidrahtdatenbusses nach einem der Ansprüche 1 bis 6, umfassend die folgenden Schritte:
- gleichzeitiges Übermitteln einer Sendeadresse an alle erreichbaren Busknoten durch Beschreiben von Senderegistern (SR) aller Busknoten durch den Bus-Master (BM) mit dieser Sendeadresse, wobei das jeweilige Senderegister (SR) eines jeweiligen Busknotens ein Datenregister oder ein Teil eines Datenregisters oder ein Teil des Instruktionsregisters (IR) der modifizierten JTAG-Schnittstelle dieses Busknotens ist, und wobei das Busknotenadressregister (BKADR) kein Teil des betreffenden Registers ist;
- Vergleich der Sendeadresse im Senderegister (SR) mit der Busknotenadresse im Busknotenadressregister (BKADR) durch jeden Busknoten mittels eines vorbestimmten Vergleichsalgorithmus;
- Aktivierung der Empfangsfähigkeit des jeweiligen Busknotens für den Inhalt vorbestimmter Inhalte des Instruktionsregisters (IR) des jeweiligen Busknotens zur Zulassung vorbestimmter Befehle für einen Instruktionsdecoder (IRDC) der modifizierten JTAG-Schnittstelle des jeweiligen Busknotens, wenn der Vergleichsalgorithmus des zuvor durch diesen jeweiligen Busknoten ausgeführten Vergleichs eine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt;
- Deaktivierung der Empfangsfähigkeit des jeweiligen Busknotens für den Inhalt vorbestimmter Inhalte des Instruktionsregisters (IR) des jeweiligen Busknotens zur Unterdrückung vorbestimmter Befehle für einen Instruktionsdecoder (IRDC) der modifizierten JTAG-Schnittstelle des jeweiligen Busknotens, wenn der Vergleichsalgorithmus des zuvor durch diesen jeweiligen Busknoten ausgeführten Vergleiches keine ausreichende Übereinstimmung mit der für die Sendeerlaubnis erwarteten Kombination aus der in seinem Busknotenadressregister (BKADR) abgelegten Busknotenadresse und der in seinem Senderegister (SR) abgelegten Sendeadresse ergibt.

## Claims

1. A method for initializing a differential two-wire data bus between a first subdevice, a bus master (BM), and at least two further sub-devices, the bus nodes (BS1, BS2, BS3), wherein the two-wire data bus (b1b2b3b4) comprises a first one-wire data bus (b1a, b2a, b3a) and a second one-wire data bus (b1b, b2b, b3b) which is divided by the at least two bus nodes into at least two two-wire data bus sections (b1, b2, b3) with associated first one-wire data bus sections (b1a, b2a, b3a) and second one-wire data bus sections (b1b, b2b, b3b) and which is terminated by at least one bus node (BS3) of the bus nodes (BS1, BS2, BS3), the terminal bus node (BS3), comprising the steps of:
- determining a new bus node address by the bus master;
- storing this bus node address in a bus node address register (BKADR) of a bus node (BS1, BS2, BS3), the bus node of interest, by the bus master (BM), wherein the bus master (BM) and the bus node of interest are connected by one or a plurality of two-wire data bus sections (b1, b2, b3) and the bus node address register (BKADR) is a data register (DR) of a modified JTAG interface or a part of a data register (DR) of a modified JTAG interface of the bus node of interest or a part of an instruction register (IR) of a modified JTAG interface of the bus node of interest, wherein a modified JTAG interface is **characterized in that** it comprises a JTAG test controller comprising a state diagram corresponding to the IEEE 1149 standard or one of the substandards of the same, and is operated with a differential signal as transmitted via the differential two-wire data bus, instead of being operated with an absolute voltage signal, i.e. a voltage signal changing relative to a reference level, e.g. ground potential; and
- connecting one or a plurality of two-wire data bus sections (b1, b2, b3) with one or a plurality of further two-wire data bus sections (b1, b2, b3) by closing a transfer gate (TG) of the bus node of interest, whereby a storage of a bus node address in a bus node address register (BKADR) of the bus node of interest (BS1, BS2, BS3) is prevented by the bus node for as long as the transfer gate (TG) is closed.

2. The method for initializing a differential two-wire data bus as defined in claim 1, comprising the step of storing an instruction to open a transfer gate (TG) in the instruction register (IR) or a transfer gate control register (TGCR) of the modified JTAG interface of the bus node of interest.

3. The method for initializing a differential two-wire data bus as defined in claim 1, comprising the step of verifying the correct addressing of at least one bus node by cyclic writing and reading in particular a bypass register.

4. The method for initializing a differential two-wire data bus as defined in claim 3, comprising the steps of determining the number of correctly addressable bus modes by the bus master (BM), and of comparing the number of correctly addressable bus nodes to a set number and triggering, by the bus master or a connected system, at least one signal or one measure as a function of the number.

5. The method for transmitting data after the initialization of a differential two-wire data bus as defined in one of claims 1 to 4, comprising the following steps:
- simultaneously transmitting a transmission address to all accessible bus nodes by writing transmission registers (SR) of all bus nodes by the bus master (BM) having this transmission address, wherein the respective transmission register (SR) of a respective bus node is a data register or a part of a data register or a part of an instruction register (IR) of the modified JTAG interface of this bus node, and wherein the bus node address register (BKADR) is not a part of the respective register;
- comparing the transmission address in the transmission register (SR) to the bus node address in the bus node address register (BKADR) by each bus node using a predetermined comparison algorithm;
- activating the transmitting capability for the respective bus node at the times provided for that purpose, if the comparison algorithm of the comparison performed before by said respective bus node results in a sufficient congruence with the combination of the bus node address stored in its bus node address register (BKADR) and the transmission address stored in its transmission register (SR), which combination is expected for the transmission permission;
- deactivating the transmitting capability for the respective bus node, if the comparison algorithm of the comparison performed before by said respective bus node does not result in a sufficient congruence with the combination of the bus node address stored in its bus node address register (BKADR) and the transmission address stored in its transmission register (SR), which combination is expected for the transmission permission.

6. The method for transmitting data after the initialization of a differential two-wire data bus as defined in one of claims 1 to 4, comprising the following steps:
- simultaneously transmitting a transmission address to all accessible bus nodes by writing transmission registers (SR) of all bus nodes by the bus master (BM) having this transmission address, wherein the respective transmission register (SR) of a respective bus node is a data register or a part of a data register or a part of an instruction register (IR) of the modified JTAG interface of this bus node, and wherein the bus node address register (BKADR) is not a part of the respective register;
- comparing the transmission address in the transmission register (SR) to the bus node address in the bus node address register (BKADR) by each bus node using a predetermined comparison algorithm;
- activating the receiving capability of the respective bus node for the content of predetermined data registers of the respective bus node, if the comparison algorithm of the comparison performed before by said respective bus node results in a sufficient congruence with the combination of the bus node address stored in its bus node address register (BKADR) and the transmission address stored in its transmission register (SR), which combination is expected for the transmission permission;
- deactivating the receiving capability of the respective bus node for the content of predetermined data registers of the respective bus node, if the comparison algorithm of the comparison performed before by said respective bus node does not result in a sufficient congruence with the combination of the bus node address stored in its bus node address register (BKADR) and the transmission address stored in its transmission register (SR), which combination is expected for the transmission permission.

7. The method for transmitting data after the initialization of a differential two-wire data bus as defined in one of claims 1 to 6, comprising the following steps:
- simultaneously transmitting a transmission address to all accessible bus nodes by writing transmission registers (SR) of all bus nodes by the bus master (BM) having this transmission address, wherein the respective transmission register (SR) of a respective bus node is a data register or a part of a data register or a part of an instruction register (IR) of the modified JTAG interface of this bus node, and wherein the bus node address register (BKADR) is not a part of the respective register;
- comparing the transmission address in the transmission register (SR) to the bus node address in the bus node address register (BKADR) by each bus node using a predetermined comparison algorithm;
- activating the receiving capability of the respective bus node for the content of predetermined contents of the instruction register (IR) of the respective bus node to allow predetermined instructions for an instruction decoder (IEDC) of the modified JTAG interface of the respective bus node, if the comparison algorithm of the comparison performed before by said respective bus node results in a sufficient congruence with the combination of the bus node address stored in its bus node address register (BKADR) and the transmission address stored in its transmission register (SR), which combination is expected for the transmission permission;
- deactivating the receiving capability of the respective bus node for the content of predetermined contents of the instruction register (IR) of the respective bus node for suppressing predetermined instructions for an instruction decoder (IRDC) of the modified JTAG interface of the respective bus node, if the comparison algorithm of the comparison performed before by said respective bus node does not result in a sufficient congruence with the combination of the bus node address stored in its bus node address register (BKADR) and the transmission address stored in its transmission register (SR), which combination is expected for the transmission permission.

## Revendications

1. Procédé d'initialisation d'un bus de données différentiel bifilaire entre un premier diviseur, le bus maître (BM), au moins deux autres diviseurs et les nœuds de bus (BS1, BS2, BS3), sachant que ce bus de données bifilaire (b1b2b3b4) comporte un premier bus de données monofilaire (b1a, b2a, b3a, b4a) ainsi qu'un deuxième bus de données monofilaire (b1b, b2b, b3b) et qu'il est divisé par les au moins deux nœuds de bus en au moins deux sections du bus de données bifilaire (b1, b2, b3) avec des premières sections du bus de données monofilaire (b1a, b2a, b3a) et des deuxièmes sections du bus de données monofilaire (b1b, b2b, b3b) correspondantes et qu'il est terminé par un nœud de bus (BS3) au moins parmi les nœuds de bus (BS1, BS2, BS3), le nœud de bus de terminaison (BS3), comprenant les étapes consistant à :
- déterminer une nouvelle adresse pour le nœud de bus au moyen du bus maître ;
- consigner cette adresse pour le nœud de bus dans un registre d'adressage des nœuds de bus (BKADR) d'un nœud de bus (BS1, BS2, BS3), le nœud de bus concerné, par le bus maître (BM), sachant que le bus maître (BM) et le nœud de bus concerné sont reliés l'un à l'autre par une ou plusieurs sections du bus de données bifilaire (b1, b2, b3) et qu'il s'agit, en ce qui concerne le registre d'adressage des nœuds de bus (BKADR), d'un registre de données (DR) d'une interface JTAG modifiée, d'une partie d'un registre de données (DR) d'une interface JTAG modifiée du nœud de bus concerné ou d'une partie d'un registre d'instructions (IR) d'une interface JTAG modifiée du nœud de bus concerné, qui pour autant qu'elle soit modifiée, présente un contrôleur de test avec un diagramme d'états conformément à la norme IEEE 1149 ou à l'une de ses sous-normes et est exploitée par un signal différentiel transmis via le bus de données différentiel bifilaire plutôt que par un signal de tension absolu, c'est-à-dire un signal de tension qui fluctue sur la base d'un niveau de référence, tel qu'un potentiel de masse, par exemple ; et
- relier une ou plusieurs sections du bus de données bifilaire (b1, b2, b3) à une ou plusieurs autres sections du bus de données bifilaire (b1, b2, b3) en fermant une porte de transfert (TG) du nœud de bus concerné, sachant que la consignation d'une adresse pour le nœud de bus dans un registre d'adressage des nœuds de bus (BKADR) du nœud de bus concerné (BS1, BS2, BS3) par le bus maître (BM) est empêchée par ce nœud de bus tant que la porte de transfert (TG) est fermée.

2. Procédé d'initialisation d'un bus de données différentiel bifilaire selon la revendication 1, comprenant l'étape consistant à consigner un ordre d'ouverture d'une porte de transfert (TG) dans le registre d'instructions (IR) ou dans un registre de contrôle de la porte de transfert (TGCR) de l'interface JTAG modifiée du nœud de bus concerné.

3. Procédé d'initialisation d'un bus de données différentiel bifilaire selon la revendication 1, comprenant l'étape consistant à vérifier l'adressage correct d'au moins un nœud de bus grâce à des opérations d'écriture et de lecture cycliques, en particulier d'un registre Bypass.

4. Procédé d'initialisation d'un bus de données différentiel bifilaire selon la revendication 3, comprenant l'étape consistant à déterminer le nombre de nœuds de bus correctement adressables par le bus maître (BM) et à comparer ce nombre de nœuds de bus correctement adressables avec un nombre théorique, puis déclenchement d'au moins un signal ou d'une mesure dépendant du nombre déterminé par le bus maître (BM) ou un système raccordé.

5. Procédé de transmission des données suite à l'initialisation d'un bus de données différentiel bifilaire selon l'une des revendications 1 à 4, comprenant les étapes consistant à :
- transmettre simultanément une adresse d'envoi à tous les nœuds de bus joignables grâce à la description des registres d'envoi (SR) de tous les nœuds de bus par le bus maître (BM) avec cette adresse d'envoi, sachant que le registre d'envoi (SR) d'un nœud de bus est un registre de données, une partie d'un registre de données ou une partie du registre d'instructions (IR) de l'interface JTAG modifiée de ce nœud de bus et sachant que le registre d'adressage des nœuds de bus (BKADR) n'est pas une partie du registre concerné ;
- comparer l'adresse d'envoi figurant dans le registre d'envoi (SR) avec l'adresse du nœud de bus présente dans le registre d'adressage des nœuds de bus (BKADR) via chaque nœud de bus au moyen de l'algorithme de comparaison prédéterminé ;
- activer la capacité d'émission du nœud de bus aux moments prévus à cet effet si l'algorithme servant à la comparaison exécutée au préalable par ce nœud de bus fait apparaître une concordance suffisante avec la combinaison attendue pour l'autorisation d'envoi à partir de l'adresse du nœud de bus consignée dans son registre d'adressage des nœuds de bus (BKADR) et de l'adresse d'envoi consignée dans son registre d'envoi (SR) ;
- désactiver la capacité d'émission du nœud de bus si l'algorithme servant à la comparaison exécutée au préalable par ce nœud de bus ne fait pas apparaître une concordance suffisante avec la combinaison attendue pour l'autorisation d'envoi à partir de l'adresse du nœud de bus consignée dans son registre d'adressage des nœuds de bus (BKADR) et de l'adresse d'envoi consignée dans son registre d'envoi (SR).

6. Procédé de transmission des données suite à l'initialisation d'un bus de données différentiel bifilaire selon l'une des revendications 1 à 4, comprenant les étapes consistant à :
- transmettre simultanément une adresse d'envoi à tous les nœuds de bus joignables grâce à la description des registres d'envoi (SR) de tous les nœuds de bus par le bus maître (BM) avec cette adresse d'envoi, sachant que le registre d'envoi (SR) d'un nœud de bus est un registre de données, une partie d'un registre de données ou une partie du registre d'instructions (IR) de l'interface JTAG modifiée de ce nœud de bus et sachant que le registre d'adressage des nœuds de bus (BKADR) n'est pas une partie du registre concerné ;
- comparer l'adresse d'envoi figurant dans le registre d'envoi (SR) avec l'adresse du nœud de bus présente dans le registre d'adressage des nœuds de bus (BKADR) via chaque nœud de bus au moyen de l'algorithme de comparaison prédéterminé ;
- activer la capacité de réception du nœud de bus pour le contenu du registre des données prédéterminé de ce nœud de bus si l'algorithme servant à la comparaison exécutée au préalable par ce nœud de bus fait apparaître une concordance suffisante avec la combinaison attendue pour l'autorisation d'envoi à partir de l'adresse du nœud de bus consignée dans son registre d'adressage des nœuds de bus (BKADR) et de l'adresse d'envoi consignée dans son registre d'envoi (SR) ;
- désactiver la capacité de réception du nœud de bus pour le contenu du registre des données prédéterminé de ce nœud de bus si l'algorithme servant à la comparaison exécutée au préalable par ce nœud de bus ne fait pas apparaître une concordance suffisante avec la combinaison attendue pour l'autorisation d'envoi à partir de l'adresse du nœud de bus consignée dans son registre d'adressage des nœuds de bus (BKADR) et de l'adresse d'envoi consignée dans son registre d'envoi (SR).

7. Procédé de transmission des données suite à l'initialisation d'un bus de données différentiel bifilaire selon l'une des revendications 1 à 6, comprenant les étapes consistant à :
- transmettre simultanément une adresse d'envoi à tous les nœuds de bus joignables grâce à la description des registres d'envoi (SR) de tous les nœuds de bus par le bus maître (BM) avec cette adresse d'envoi, sachant que le registre d'envoi (SR) d'un nœud de bus est un registre de données, une partie d'un registre de données ou une partie du registre d'instructions (IR) de l'interface JTAG modifiée de ce nœud de bus et sachant que le registre d'adressage des nœuds de bus (BKADR) n'est pas une partie du registre concerné ;
- comparer l'adresse d'envoi figurant dans le registre d'envoi (SR) avec l'adresse du nœud de bus présente dans le registre d'adressage des nœuds de bus (BKADR) via chaque nœud de bus au moyen de l'algorithme de comparaison prédéterminé ;
- activer la capacité de réception du nœud de bus pour le contenu des contenus prédéterminés du registre d'instructions (IR) de ce nœud de bus afin d'autoriser les commandes prédéterminées d'un décodeur d'instructions (IRDC) de l'interface JTAG modifiée du nœud de bus concerné, si l'algorithme servant à la comparaison exécutée au préalable par ce nœud de bus fait apparaître une concordance suffisante avec la combinaison attendue pour l'autorisation d'envoi à partir de l'adresse du nœud de bus consignée dans son registre d'adressage des nœuds de bus (BKADR) et de l'adresse d'envoi consignée dans son registre d'envoi (SR) ;
- désactiver la capacité de réception du nœud de bus pour le contenu des contenus prédéterminés du registre d'instructions (IR) de ce nœud de bus afin de bloquer les commandes prédéterminées d'un décodeur d'instructions (IRDC) de l'interface JTAG modifiée du nœud de bus concerné, si l'algorithme servant à la comparaison exécutée au préalable par ce nœud de bus ne fait pas apparaître une concordance suffisante avec la combinaison attendue pour l'autorisation d'envoi à partir de l'adresse du nœud de bus consignée dans son registre d'adressage des nœuds de bus (BKADR) et de l'adresse d'envoi consignée dans son registre d'envoi (SR).
